# EUROPEAN PATENT APPLICATION

(11) **EP 4 691 775 A1**
(43) Date of publication of application: **11.02.2026**
(21) Application number: 24785354.2
(22) Date of filing: 05.04.2024
(51) Int. Cl.: B32B 37/12, B32B 37/15, B32B 7/12, B32B 15/08, B32B 15/085, B32B 15/088, B32B 15/09, B32B 15/18, H01M 50/105, H01M 50/126

(54) **CELL POUCH MANUFACTURING METHOD, APPARATUS THEREFOR, AND CELL POUCH MANUFACTURED THEREBY**

(30) Priority: 06.04.2023 KR 20230045375
(71) Applicant: Youlchon Chemical Co., Ltd., Seoul 07057 (KR)
(72) Inventor: SONG, Nok Jung, Seoul 07057 (KR); HAN, Hee Sik, Ansan-si, Gyeonggi-do 15430 (KR); LEE, Ji Min, Ansan-si, Gyeonggi-do 15430 (KR); PARK, Han Chul, Ansan-si, Gyeonggi-do 15430 (KR); KIM, Geon Ryong, Ansan-si, Gyeonggi-do 15430 (KR); YEON, Jin Hee, Ansan-si, Gyeonggi-do 15430 (KR); SHIN, Sung Chul, Ansan-si, Gyeonggi-do 15430 (KR)
(74) Representative: V.O.
(86) International application number: PCT/KR2024/004579
(87) International publication number: WO 2024/210657

(57) **Abstract**

Disclosed are a cell pouch manufacturing method, an apparatus therefor, and a cell pouch manufactured thereby, in which an aging procedure, which affects productivity in cell pouch manufacturing and the thermal deformation and physical properties of cell pouches, is optimized to improve cell pouch productivity and to improve physical properties while minimizing the thermal deformation of cell pouches, and which are suitable to reduce the manufacturing cost of outer bodies while maintaining the initial characteristics of materials constant.

## Description

### [Technical Field]

### [Cross-Reference to Related Application]

The present application claims priority to Korean Patent Application No. 10-2023-0045375, filed on April 6, 2023, the entire contents of which are hereby incorporated by this reference.

The present specification relates to a cell pouch manufacturing method, an apparatus therefor, and a cell pouch manufactured thereby, and relates to a cell pouch manufacturing method, an apparatus therefor, and a cell pouch manufactured thereby, which are capable of greatly improving process simplification, productivity and spatial efficiency accordingly, and capable of improving physical properties of a final cell pouch product.

### [NATIONAL RESEARCH AND DEVELOPMENT PROJECT THAT SUPPORTED THE INVENTION]

[Project Unique Number] 1415185612
[Project Number] 20022450
[Department Name] Ministry of Trade, Industry and Energy
[Project Management (Specialized) Institution] Korea Evaluation Institute of Industrial Technology
[Research Project Name] Materials, Components, and Package-Type (Outstanding Company)
[Research Subject Name] Development of a Next-Generation Secondary Battery Pouch Capable of Achieving Twice or more High Adhesion Strength (60°C)
[Contribution Rate] 1/1
[Project execution Institution] Youlchon Chemical Co., Ltd.
[Research Period] 2023-01-01 to 2023-12-31

### [Background Art]

A secondary battery such as a lithium secondary battery (LiB), on the basis of various advantages such as having high energy density, excellent output, and the like, is being applied to many applications.

A secondary battery pouch film or a cell pouch film, as a multilayer-structured packaging laminated film that surrounds an electrode assembly and an electrolyte solution of a cell, forms an external structure of the cell, and is a core component material that determines stability of the battery, lifetime characteristics, and operation continuity. Accordingly, mechanical flexibility and strength, high oxygen/water vapor barrier property, high thermal sealing strength, chemical resistance to an electrolyte solution, electrical insulation, high-temperature stability, and the like are required.

A cell pouch film is generally configured largely with an outer layer, a barrier layer, and an inner sealant layer.

The outer layer or outermost layer is composed of nylon, a blend material of nylon and polyethylene terephthalate (PET), oriented polypropylene (OPP), polyethylene, and the like. The required properties of the outer layer or outermost layer include heat resistance, pinhole resistance, chemical resistance, formability, and insulation.

The barrier layer is required to have barrier properties against water vapor and other gases, as well as formability. From this perspective, formable metals, such as aluminum (Al), iron (Fe), copper (Cu), and nickel (Ni), are used for the barrier layer, and aluminum is currently the most widely used.

The sealant layer of the inner layer, in addition to heat sealability and formability, is required to have properties such as resistance to an electrolyte solution, insulation resistance, and the like, since it is a layer that comes into contact with an electrolyte solution.

### [Documents of Related Art]

### [Patent Documents]

(Patent Document 1) Korean Patent Application Laid-Open No. 10-2019-0112531
(Patent Document 2) Korean Patent Application Laid-Open No. 10-2019-0112520
(Patent Document 3) Korean Patent No. 10-0995884

### [Disclosure]

### [Technical Problem]

In exemplary embodiments of the present invention, in one aspect, there is provided a cell pouch manufacturing method, an apparatus therefor, and a cell pouch manufactured thereby, suitable for improving cell pouch productivity and minimizing thermal deformation of the cell pouch and improving physical properties by optimizing an aging procedure that affects productivity, thermal deformation, and physical properties of the cell pouch during cell pouch manufacturing, and for lowering manufacturing cost of an outer body while maintaining initial characteristics of a material constant.

In exemplary embodiments of the present invention, in another aspect, there is provided a cell pouch manufacturing method, an apparatus therefor, and a cell pouch manufactured thereby capable of minimizing material loss of a resin film and a reference substrate, reducing working time through simplification of a work flow, decreasing the probability of foreign substances being seated on the resin film and the reference substrate, and minimizing and optimizing an aging process applied to the resin film and the reference substrate.

In exemplary embodiments of the present invention, in yet another aspect, there is provided a cell pouch manufacturing method, an apparatus therefor, and a cell pouch manufactured thereby, capable of greatly improving process simplification, and thereby productivity and space efficiency, by integrating into a single process a step of preprocessing a metal fabric during a manufacturing process of a cell pouch.

### [Technical Solution]

In exemplary embodiments of the present invention, there is provided a method of manufacturing a cell pouch film, the method comprising: either in a single in-line process, winding once a final structure of a cell pouch film and then allowing the final structure of the cell pouch to undergo only one aging process - for example, aging for 1 day to 7 days under a temperature condition of 30°C to 100°C -; or in a first in-line process, winding once an intermediate structure of a cell pouch film on a first winding roll - the intermediate structure comprises an outer layer, an outer surface adhesive layer, an outer surface treatment layer, a barrier layer, and an inner surface treatment layer - and then allowing the intermediate structure to undergo one aging process - for example, aging for 1 day to 7 days under a temperature condition of 30°C to 100°C -, and in a second in-line process, winding once a final structure of the cell pouch film formed from the intermediate structure that has undergone the one aging process on a second winding roll, and then performing one aging process on the final structure - for example, aging for 1 day to 7 days under a temperature condition of 30°C to 100°C -, so that a total of two agings are undergone.

In an exemplary embodiment, the aging procedure may undergo, as described above, for example, aging for 1 day to 7 days under a temperature condition of 30°C to 100°C.

In a non-limiting example, the aging process may be carried out, for example, at 30°C to 100°C, 40°C to 90°C, 50°C to 80°C, or 60°C to 70°C, but is not limited thereto. In addition, in a non-limiting example, the aging process may be carried out, for example, for 1 day to 7 days, 2 days to 6 days, or 3 days to 5 days, but is not limited thereto.

As described above, the aging process is necessary for stabilization and uniformity of physical properties, but since the process increases a production line and manufacturing cost, it is necessary to be optimized. Meanwhile, in such an aging process, in order to prevent a phenomenon that a wound cell pouch film sags in the direction of gravity, it is preferable to perform aging while rotating a winding roll at predetermined time intervals (about 3 to 4 hours). This is because, when such fabric sagging phenomenon occurs, it may cause transverse wrinkle defects in a slitter process.

In an exemplary embodiment, the manufacturing method undergoing the one aging may comprise the following process steps.
(a) preparing the barrier layer;
(b) surface coating the barrier layer to form a surface treatment layer;
(c) drying the surface treatment layer;
(d) forming an adhesion layer - when the adhesion layer is an inner surface adhesion layer, the adhesion layer is an adhesive coating layer, an extrusion coating layer, or both - on the surface treatment layer;
(e) drying the adhesion layer;
(f) laminating an outer layer on the adhesion layer;
(g) laminating a sealant layer on an innermost surface side of the barrier layer; and
(h) allowing the manufactured final structure of the cell pouch film to undergo the aging process, and wherein steps (a) to (g) are carried out in a single in-line process such that the final structure of the cell pouch film is wound once.

Alternatively, in an exemplary embodiment, the manufacturing method undergoing the total of two agings may comprise the following process steps.
(a) preparing the barrier layer;
(b) surface coating the barrier layer to form a surface treatment layer;
(c) drying the surface treatment layer;
(d-1) forming an adhesion layer on an outer surface treatment layer,
(e) drying the adhesion layer;
(f) laminating an outer layer on the adhesion layer;
(i) allowing the manufactured intermediate structure of the cell pouch film to undergo the first aging process;
(d-2) after the one aging, forming an adhesion layer - the adhesion layer is an adhesive coating layer, an extrusion coating layer, or both - on an inner surface treatment layer;
(g) laminating a sealant layer on an innermost surface side of the barrier layer on which the adhesion layer is formed; and
(h') allowing the manufactured final structure of the cell pouch film to undergo a second aging process.

In an exemplary embodiment, step (b) may include the following process steps of:
(b-1) surface coating an outer surface of the barrier layer to form an outer surface treatment layer; and/or
(b-2) surface coating an inner surface of the barrier layer to form an inner surface treatment layer.

In an exemplary embodiment, step (d) may further undergo the following process steps of:
(d-1) forming an adhesion layer on the outer surface treatment layer; and/or
(d-2) forming an adhesion layer on the inner surface treatment layer.

In an exemplary embodiment, step (g) may include forming a sealant layer by bonding a pre-prepared sealant film through extrusion coating.

In an exemplary embodiment, step (g) may include forming an extrusion coating layer and a sealant layer by co-extrusion using a T-die.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and step (d-2) of forming an adhesion layer on the inner surface treatment layer,
step (g) may be laminating a pre-prepared sealant film to the adhesion layer formed on the inner surface treatment layer.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and
step (g) may be forming a sealant layer by bonding a pre-prepared sealant film through extrusion coating.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and
step (g) may be forming an extrusion coating layer and a sealant layer by co-extrusion using a T-die.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and
step (g) may be sequentially forming an extrusion coating layer and a sealant layer using an extrusion manner.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and step (d-2) of forming an adhesion layer on the inner surface treatment layer,
step (g) may be forming a sealant layer by bonding a pre-prepared sealant film through extrusion coating.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and step (d-2) of forming an adhesion layer on the inner surface treatment layer,
step (g) may be forming an extrusion coating layer and a sealant layer by co-extrusion using a T-die.

In an exemplary embodiment, the manufacturing method may be as follows:
step (b) includes step (b-1) of forming an outer surface treatment layer by surface coating an outer surface of a barrier layer, and step (b-2) of forming an inner surface treatment layer by surface coating an inner surface of the barrier layer,
step (d) includes step (d-1) of forming an adhesion layer on the outer surface treatment layer, and step (d-2) of forming an adhesion layer on the inner surface treatment layer,
step (g) may be sequentially forming an extrusion coating layer and a sealant layer using an extrusion manner.

In an exemplary embodiment, in the manufacturing method, step (a) of preparing the barrier layer and step (b) of surface coating the barrier layer to form the surface treatment layer may comprise:
a fabric supply procedure of unwinding and supplying a wound barrier layer fabric;
a foreign substance removal procedure of removing a foreign substance present on a surface of the supplied barrier layer fabric;
a tension adjustment procedure of adjusting tension of the barrier layer fabric from which the surface foreign substance is removed; and
a double-sided dual coating procedure of forming outer and inner surface treatment layers on the barrier layer fabric in which constant tension is maintained.

In an exemplary embodiment, the foreign substance removal procedure may further comprise: a first foreign substance removal procedure of performing discharge treatment on both surfaces of the barrier layer fabric to remove oil.

In an exemplary embodiment, the foreign substance removal procedure may further comprise: a pinhole inspection procedure of identifying whether pinholes occur on both surfaces of the barrier layer fabric from which oil has been removed.

In an exemplary embodiment, the foreign substance removal procedure may further comprise: a second foreign substance removal procedure of removing a foreign substance occurring on both surfaces of a metal fabric that has undergone the pinhole inspection by a roll manner.

In an exemplary embodiment, step (b) of surface coating the barrier layer to form the surface treatment layer may comprises:
performing a first coating of applying aqueous-based and solvent-based coating solutions by a combined manner of direct coating and RKC (Reverse Kiss Coating) on one side surface of the barrier layer fabric; and
performing a second coating of applying a coating solution by RKC and film up/down coating manners on the other side surface of the barrier layer fabric.

In an exemplary embodiment, step (c) of drying the surface treatment layer may further comprises:
a physical property stabilization drying step of drying the barrier layer having surface treatment layers formed on both surfaces by a floating manner to stabilize physical properties;
a cooling step of cooling the dried barrier layer; and
a surface inspection step of inspecting a surface of the cooled barrier layer.

In an exemplary embodiment, step (e) of drying the adhesion layer may further comprise: an adhesive drying step of drying the barrier layer to which an adhesive is applied to form the adhesion layer; an adhesion layer thickness measuring step of measuring a thickness of the dried adhesion layer; and an adhesion layer surface treatment step of strengthening an adhesive force by corona treatment of a surface of the adhesion layer.

In an exemplary embodiment, the method may further comprise: a surface inspection step of inspecting a surface of the sealant layer and/or the outer layer after laminating the outer layer and/or laminating the sealant layer.

In an exemplary embodiment, step (b) of forming the surface treatment layer to step (g) of forming the sealant layer may be performed on the barrier layer on the basis of one run (pass) of the barrier layer from an unwind roll toward a rewind roll in a roll-to-roll device, and an outer layer laminating device for laminating the outer layer and a sealant layer laminating device for laminating the sealant layer may be partially overlapped or spaced apart from each other in the roll-to-roll device.

In an exemplary embodiment, the device for forming the surface treatment layer may be individually formed of a roll structure including direct gravure, reverse gravure, offset gravure, five rolls, reverse-kiss gravure, mayer rod, micro gravure, comma & slot die, or lip die.

In an exemplary embodiment, in step of drying, by using a drying device, first air between 100°C and 300°C is blown onto both surfaces of the barrier layer on which the surface treatment layer is formed in an air floating manner, and after blowing of the first air, the barrier layer dried after formation of the surface treatment layer may be transferred to a subsequent coating device via at least one guide roll together with a cooling zone, and the cooling zone may have at least one cooling roll.

In an exemplary embodiment, when forming the adhesion layer, the coating device used for coating an adhesive may be individually formed of a roll structure including direct gravure, reverse gravure, offset gravure, five rolls, reverse-kiss gravure, mayer rod, micro gravure, comma & slot die, or lip die.

In an exemplary embodiment, the drying step after forming the adhesion layer may also comprises: blowing second air between 50°C and 200°C onto both surfaces of a combination substrate coated with an adhesive in an air floating manner by using a drying device; and after blowing the second air, transferring the adhesive-coated and dried combination substrate to a laminating device via a cooling zone, and the cooling zone may have at least one cooling roll.

In an exemplary embodiment, convey of the film for a cell pouch may be performed by a driving roll, and all or some of the driving rolls may be suction rolls.

In an exemplary embodiment, the tension applied to the film for a cell pouch by the suction roll may be 0.02 kgf/cm² to 2.5 kgf/cm².

In addition, in exemplary embodiments of the present invention, there is provided a cell pouch film manufactured by the aforementioned manufacturing method and a secondary battery, particularly a medium- or large-sized secondary battery, that is housed with the same.

In an exemplary embodiment, the cell pouch film may comprise a surface treatment layer uniformly coated on both surfaces of the barrier layer, and the uniformly coated surface treatment layer comprises less than an average of 0.05 uncoated portions per unit area (m²) of an image photographed of an external appearance of the barrier layer.

In an exemplary embodiment, the cell pouch film may have a difference between longitudinal direction (machine direction, MD) breaking strength and width direction (transverse direction, TD) breaking strength of 40 N/15 mm or less.

In an exemplary embodiment, in the cell pouch film, a heat seal strength at 50°C to 80°C may be 100 N/15 mm to 110 N/15 mm, a peel strength between the outer layer and the barrier layer at 100°C to 140°C may be 7 N/15 mm to 9 N/15 mm, and a peel strength between a sealant layer and the barrier layer at 70°C to 90°C may be 11 N/15 mm to 13 N/15 mm.

In an exemplary embodiment, a metal of the barrier layer of the cell pouch film may be stainless steel, and a tensile strength of the cell pouch film may be 25 kgf/cm² to 34 kgf/cm².

In an exemplary embodiment, a metal of the barrier layer of the cell pouch film may be stainless steel, and a wave height of the cell pouch film may be 3 mm or less.

In an exemplary embodiment, a standard deviation of peel strength of a center portion and both side portions in a width direction of the cell pouch film may be 0.5 or less, the width direction may be a vertical direction of a film supplying direction during manufacturing of the film, the center portion may be a portion occupying 2/6 of an entire length based on a center of the entire length in the width direction of the film, and the both side portions may be left and right portions excluding the center portion in the entire length of the width direction of the film.

In an exemplary embodiment, a standard deviation of peel strength of both end portions excluding a center portion 2/6 based on a center portion of an entire length in a longitudinal direction of the cell pouch film may be 0.5 or less, in which the longitudinal direction may be a direction in which the film is wound and supplied during manufacturing of the film.

In an exemplary embodiment, the cell pouch film may have a curl deviation of the cell pouch film, measured by the following method, of 3 mm or less.

### [ Curl evaluation before forming of cell pouch film ]

A cell pouch film specimen is prepared in a square shape of 15 cm × 15 cm, and the specimen is placed on a flat fixing table and flatly fixed with tape.

An X-cut of 15 cm is made passing through a central point of the fixed specimen, and (curled) heights raised at two points on a MD (longitudinal direction) side and two points on a TD (transverse direction) side with the central point interposed therebetween are measured. A deviation is obtained by differences of each MD measured value and TD measured value.

In an exemplary embodiment, the cell pouch film may have a curl deviation after forming, measured by the following method, of 5 mm or less.

### [ Curl evaluation after forming ]

### ① MD directional forming (MD forming curl evaluation)

A forming specimen is prepared as 26.6 (MD) × 24.0 (TD) cm. Forming evaluation is performed at 0.3 MPa in a chrome-coated one-cup forming machine (forming depth is 8 mm for a product using AL40 µm and 12 mm for a product using AL60 µm). An R value (corner curvature radius value) of the forming machine is 4R (4 mm), and a forming size is 90 mm × 160 mm when forming, and forming is performed as a single forming.

### ② TD directional forming (TD forming curl evaluation)

A forming specimen is produced as 26.6 (TD) × 24.0 (MD) cm. Forming evaluation is performed at 0.3 MPa in a chrome-coated one-cup forming machine (forming depth is 8 mm for a product using AL40 µm and 12 mm for a product using AL60 µm). An R value (corner curvature radius value) of the forming machine is 4R (4 mm), and a forming size is 90 mm × 160 mm when forming, and forming is performed as a single forming.

In order to evaluate curl generated after forming, double-sided tape is installed on a flat place, and a formed pouch is then fixed thereon, and a height of curl generated is measured. Two points of measurement positions are measured, and a higher value is recorded. After measuring each corner of the forming specimen, a height of a corner where curl is generated larger is defined as a curl value.

In addition, in exemplary embodiments of the present invention, there is provided a cell pouch manufacturing apparatus, comprising: a double-sided dual coating means including a first coater and a second coater performing double-sided dual coating through surface treatment by coating both surfaces of a barrier layer fabric forming a barrier layer;
a coater configured to apply an adhesive to both surfaces of the surface-treated barrier layer fabric; and
a lamination section configured to laminate a functional fabric on both surfaces of the barrier layer fabric to which the adhesive is applied.

In an exemplary embodiment, the double-sided dual coating means may comprise: a fabric supplying unit configured to unwind and supply a wound barrier layer fabric; a foreign substance removal means configured to remove a foreign substance present on a surface of the supplied barrier layer fabric; a tension adjusting unit configured to adjust tension of the barrier layer fabric from which the surface foreign substance is removed; and a first coater and a second coater configured to perform coating on both surfaces of the barrier layer fabric in which constant tension is maintained.

In an exemplary embodiment, the barrier layer fabric may comprise an aluminum material, and the foreign substance removal means may comprise: a first foreign substance removing unit configured to perform discharge treatment on both surfaces of the barrier layer fabric to remove oil.

In an exemplary embodiment, the foreign substance removal means may further comprise: a pinhole inspecting unit configured to identify whether pinholes occur on both surfaces of the barrier layer fabric from which the oil is removed.

In an exemplary embodiment, the foreign substance removal means may further comprise: a second foreign substance removing unit configured to remove a foreign substance occurring on both surfaces of the barrier layer fabric that has undergone the pinhole inspection by a roll manner.

In an exemplary embodiment, the first coater may apply aqueous-based and solvent-based coating solutions on one side surface of the barrier layer fabric by a combined manner of direct coating and RKC (Reverse Kiss Coating), and the second coater may apply a coating solution on the other side surface of the barrier layer fabric by RKC and film up/down coating manners.

In an exemplary embodiment, the cell pouch manufacturing apparatus may further comprise: between the double-sided dual coating means and the adhesive coater, a physical property stabilization drying unit configured to dry the barrier layer fabric coated on both surfaces by a floating manner to stabilize physical properties; a cooling unit configured to cool the dried barrier layer fabric; and a surface inspecting unit configured to inspect a surface of the cooled barrier layer fabric.

In an exemplary embodiment, the cell pouch manufacturing apparatus may further comprise: between the adhesive coater and the lamination section, an adhesive drying unit configured to dry the barrier layer fabric to which an adhesive is applied to form an adhesion layer; an adhesion layer thickness measuring unit configured to measure a thickness of the dried adhesion layer; and an adhesion layer surface treating unit configured to corona-treat a surface of the adhesion layer to strengthen an adhesive force.

In an exemplary embodiment, the functional fabric may comprise a sealant layer fabric and an outer layer synthetic resin fabric, and in the lamination section, the sealant layer fabric may be laminated on the inner side of the barrier layer fabric to form a sealant layer, and the outer layer synthetic resin fabric may be laminated on the outer side of the metal layer fabric to form an outer layer.

In an exemplary embodiment, the apparatus may further comprise: continuously to the lamination section, a surface inspecting unit configured to inspect surfaces of the sealant layer and the outer layer.

In an exemplary embodiment, all or some of driving rolls conveying a cell pouch of the apparatus may be suction rolls.

In an exemplary embodiment, a tension applied to a film for a cell pouch by the suction rolls may be 0.02 kgf/cm² to 2.5 kgf/cm².

### [Advantageous Effects]

According to exemplary embodiments of the present invention, in one aspect, by optimizing an aging process, it is possible to prevent occurrence of a fabric blocking phenomenon in which a second adhesive layer (inner surface adhesion layer) sticks to an outer cover substrate during winding for aging after formation of an intermediate structure, to prevent a problem in which a process becomes complicated or productivity is reduced, and to prevent deterioration of physical properties such as deterioration of peel strength, deterioration of resistance to an electrolyte solution, or the like.

According to exemplary embodiments of the present invention, in another aspect, by connecting one unwind roll and one rewind roll within one roll-to-roll device with a reference substrate, while continuously performing a surface treatment task, a coating task, first and second drying tasks, and first and second lamination tasks between the unwind roll and the rewind roll, and after performing one aging process using one aging device around the roll-to-roll device, performing a slitting process using one slitting device around the roll-to-roll device and the aging device, it is possible to simplify work flow and reduce working time through simplification of work flow while minimizing material loss of a resin film and the reference substrate. In addition, it is possible to reduce probability of foreign substance settling on the resin film and the reference substrate. In addition, by reducing a number of the aging process (performed at between 30°C and 100°C) applied to the resin film and the reference substrate, it is possible to lower the manufacturing cost of outer bodies of cell pouches while maintaining initial characteristics of the material constant without thermal deformation of the material.

According to exemplary embodiments of the present invention, in another aspect, by integrating and performing a procedure of preprocessing a metal fabric during a manufacturing process of a cell pouch into a single process, there is an advantage of greatly improving process simplification, productivity, and space efficiency, accordingly. In particular, through double-sided surface treatment, double-sided drying, and run control, it is possible to optimize conveyance of the fabric while minimizing mechanical contact, and thereby there is an advantage of greatly improving reliability of a product by minimizing deformation of the fabric during conveyance.

According to exemplary embodiments of the present invention, in another aspect, by drying both surfaces of the fabric coated in an air floating manner, it is possible to minimize contact with mechanical components such as rollers or the like for fabric conveyance. Through this, there is an advantage of minimizing deformation, damage, or the like of a coated surface occurred during conveyance of the fabric.

According to exemplary embodiments of the present invention, in another aspect, by providing a method optimized for a 1Pass 3Coating manner in which three coating procedures can be performed in a single process and one facility, there is an advantage of minimizing run loss occurred during fabric conveyance.

According to exemplary embodiments of the present invention, in another aspect, through improvement of a manufacturing process, it is possible to minimize exposure time before surface treatment of a metal layer included in a barrier layer, thereby preventing oxidation of the metal, and to include a barrier layer including surface treatment layers uniformly coated on both surfaces of the metal layer. In addition, through process optimization, it is possible to prevent in advance occurrence of denting and/or pressing on the fabric during manufacturing of a cell pouch film. Accordingly, it is possible to improve a problem of external appearance defects possessed by a conventional cell pouch film, and to provide a film for a cell pouch having improved long-term reliability by minimizing peeling phenomenon in uncoated portions or adhesive force weakened portions, and a cell pouch or a secondary battery including the same.

According to exemplary embodiments of the present invention, in another aspect, through improvement of a manufacturing process, a plate shape of a manufactured cell pouch film can be maintained, adhesive performance and mechanical strength are excellent, stress applied to the film is small, so that deviation of mechanical strength is small and formability is excellent.

According to exemplary embodiments of the present invention, in another aspect, by improvement on a manufacturing process, since a manufacturing process is performed with a minimized aging step of a predetermined time or more, detachment of a surface treatment layer of a metal surface during manufacturing is prevented, and a barrier layer including surface treatment layers of uniform thickness respectively on both surfaces of the metal layer can be included. Accordingly, it is possible to solve a problem in which both side portions in a width direction of a cell pouch film are exposed to air and a surface treating agent is detached, thereby deteriorating physical properties of the film itself, and to improve quality of a cell pouch film by minimizing peeling phenomenon between laminated structures inside the film.

According to exemplary embodiments of the present invention, in another aspect, by improvement on a manufacturing process, it is possible to solve a problem in which a surface treating agent is transferred to the other surface of a metal layer on which the surface treating agent is not yet coated in a procedure of coating, drying, and winding the surface treating agent on one surface of the metal layer in a conventional manufacturing process. Thus, it is possible to prevent occurrence of a non-uniform coated surface due to transfer of the surface treating agent at a core portion of winding, to prevent occurrence of a difference between the core portion of winding and an outer portion of winding of the film itself, and to improve quality of a cell pouch film by minimizing peeling phenomenon between laminated structures inside the film.

According to exemplary embodiments of the present invention, in another aspect, through improvement of a manufacturing process, it is possible to minimize mechanical deformation of a metal layer by shortening number of winding and minimizing winding tension, and thereby to minimize deformation of a laminate of a cell pouch film. In addition, since winding is performed by laminating a resin film having a lower elastic modulus than the metal layer without individually winding the metal layer, tension adjustment is facilitated to be adjusted to low tension. In addition, according to improvement of a manufacturing process, tensile strength and formability are improved, and curl characteristics before and after forming can be improved.

### [Description of Drawings]

FIG. 1 is a schematic diagram illustrating an A-type cell pouch manufacturing process performing one aging on a final structure of a cell pouch film in an SDL (Solvent Dry Lamination)-based 1P4C process according to an embodiment of the present invention.
FIG. 2 is a schematic diagram illustrating an A-type cell pouch manufacturing process performing one aging on a final structure of a cell pouch film in an SDL (Solvent Dry Lamination)-based 1P4C process according to another embodiment of the present invention.
FIG. 3 is a schematic diagram illustrating an A-type cell pouch manufacturing process performing a total of two agings including one aging on a second intermediate structure after a first in-line process and one aging on a final structure after a second in-line process in an SDL (Solvent Dry Lamination)-based 1P3C process according to another embodiment of the present invention.
FIG. 4 is a schematic diagram illustrating a B-type cell pouch manufacturing process performing one aging on a final structure of a cell pouch film in an EC (Extrusion Coating)-based 1P4C process according to another embodiment of the present invention.
FIG. 5 is a schematic diagram illustrating a B-type cell pouch manufacturing process performing a total of two agings including one aging on a second intermediate structure after a first in-line process and one aging on a final structure after a second in-line process in an EC (Extrusion Coating)-based 1P3C process according to another embodiment of the present invention.
FIG. 6 is a schematic diagram illustrating a C-type cell pouch manufacturing process performing one aging on a final structure of a cell pouch film in an EC (Extrusion Coating)-based 1P4C process according to another embodiment of the present invention.
FIG. 7 is a schematic diagram illustrating a C-type cell pouch manufacturing process performing one aging on a final structure of a cell pouch film in an EC (Extrusion Coating)-based 1P4C process according to another embodiment of the present invention.
FIG. 8 is a schematic diagram illustrating a C-type cell pouch manufacturing process performing a total of two agings including one aging on a second intermediate structure after a first in-line process and one aging on a final structure after a second in-line process in an EC (Extrusion Coating)-based 1P3C process according to another embodiment of the present invention.
FIG. 9 is a schematic diagram illustrating a B-type cell pouch manufacturing process performing one aging on a final structure of a cell pouch film in a CPPless EC (Extrusion Coating)-based 1P4C process performing co-extrusion according to another embodiment of the present invention.
FIG. 10 is a schematic diagram illustrating a B-type cell pouch manufacturing process performing a total of two agings including one aging on a second intermediate structure after a first in-line process and one aging on a final structure after a second in-line process in a CPPless EC (Extrusion Coating)-based 1P3C process performing co-extrusion according to another embodiment of the present invention.
FIG. 11 is a schematic diagram illustrating a B-type cell pouch manufacturing process performing one aging on a final structure of a cell pouch film in a CPPless EC (Extrusion Coating)-based 1P4C process performing two-time extrusion according to another embodiment of the present invention.
FIG. 12 is a schematic diagram illustrating a B-type cell pouch manufacturing process performing a total of two agings including one aging on a second intermediate structure after a first in-line process and one aging on a final structure after a second in-line process in a CPPless EC (Extrusion Coating)-based 1P3C process performing two-time extrusion according to another embodiment of the present invention.
FIG. 13 is a schematic diagram illustrating a C-type cell pouch manufacturing process performing one aging on a final structure of a cell pouch film in a CPPless EC (Extrusion Coating)-based 1P4C process performing co-extrusion according to another embodiment of the present invention.
FIG. 14 is a schematic diagram illustrating a C-type cell pouch manufacturing process performing one aging on a final structure of a cell pouch film in a CPPless EC (Extrusion Coating)-based 1P4C process performing co-extrusion according to another embodiment of the present invention.
FIG. 15 is a schematic diagram illustrating a C-type cell pouch manufacturing process performing a total of two agings including one aging on a second intermediate structure after a first in-line process and one aging on a final structure after a second in-line process in a CPPless EC (Extrusion Coating)-based 1P3C process performing co-extrusion according to another embodiment of the present invention.
FIG. 16 is a schematic diagram illustrating a C-type cell pouch manufacturing process performing one aging on a final structure of a cell pouch film in a CPPless EC (Extrusion Coating)-based 1P4C process performing two-time extrusion according to another embodiment of the present invention.
FIG. 17 is a schematic diagram illustrating a C-type cell pouch manufacturing process performing one aging on a final structure of a cell pouch film in a CPPless EC (Extrusion Coating)-based 1P4C process performing two-time extrusion according to another embodiment of the present invention.
FIG. 18 is a schematic diagram illustrating a C-type cell pouch manufacturing process performing a total of two agings including one aging on a second intermediate structure after a first in-line process and one aging on a final structure after a second in-line process in a CPPless EC (Extrusion Coating)-based 1P3C process performing two-time extrusion according to another embodiment of the present invention.
FIG. 19 is a diagram illustrating a final structure of an A-type cell pouch film according to an embodiment of the present invention, which shows the structure configured with an outer layer (or outer cover substrate), an outer surface adhesive layer (or first adhesive layer), an outer surface treatment layer, a barrier layer (or reference substrate), an inner surface treatment layer, an inner surface adhesive layer (or second adhesive layer), and a sealant layer (or inner cover substrate).
FIG. 20 is a diagram illustrating a final structure of a B-type cell pouch film according to an embodiment of the present invention, which shows the structure configured with an outer layer (or outer cover substrate), an outer surface adhesive layer (or first adhesive layer), an outer surface treatment layer, a barrier layer (or reference substrate), an inner surface treatment layer, an extrusion coating layer, and a sealant layer (or inner cover substrate).
FIG. 21 is a diagram illustrating a final structure of a C-type cell pouch film according to an embodiment of the present invention, which shows the structure configured with an outer layer (or outer cover substrate), an outer surface adhesive layer (or first adhesive layer), an outer surface treatment layer, a barrier layer (or reference substrate), an inner surface treatment layer, an inner surface adhesive layer (or second adhesive layer), an extrusion coating layer, and a sealant layer (or inner cover substrate).
FIG. 22 explains a double-sided dual coating step (S100), an adhesive coating step (S200), and a lamination step (S300) in a cell pouch manufacturing method performing multi-type coating in an embodiment of the present invention.
FIG. 23 is a flowchart illustrating a specific example of 'S100' in FIG. 22.
FIG. 24 is a flowchart illustrating a specific example of 'S120' in FIG. 22.
FIG. 25 is a flowchart illustrating another alternative embodiment of FIG. 22.
FIG. 26 is a flowchart illustrating another alternative embodiment of FIG. 22.
FIG. 27 is a flowchart explaining a manufacturing method of a cell pouch film according to an alternative embodiment of the present invention.
FIG. 28 is a schematic diagram illustrating a roll-to-roll device performing the manufacturing method of a cell pouch film of FIG. 27.
FIG. 29 is a flowchart explaining a manufacturing method of a cell pouch according to an alternative embodiment.
FIG. 30 is a schematic diagram illustrating a roll-to-roll device performing the manufacturing method of a cell pouch of FIG. 29.
FIG. 31 to FIG. 39 are schematic diagrams illustrating roll structures selectively adopted in a surface treatment device or a coating device in the roll-to-roll device of FIG. 28 or FIG. 29.
FIG. 40A is a schematic diagram illustrating a cell pouch manufacturing process according to Example of [Experiment 1] of the present invention.
FIG. 40B is a schematic diagram illustrating a process of a Comparative Example contrasted with FIG. 40A.
FIG. 41A and FIG. 41B are tables comparing Example and Comparative Example in [Experiment 1] of the present invention.
FIG. 42 is a table illustrating evaluation results of physical properties of an outer cover substrate, a reference substrate, and an inner cover substrate in a cell pouch manufacturing method of Example (FIG. 27 or FIG. 29) of [Experiment 2] of the present invention.
FIG. 43A to FIG. 43C are photographs illustrating examples of uncoated portions measured from photographed images of the external appearance of a barrier layer included in a cell pouch film manufactured in [Experiment 3] of the present invention.
FIG. 44A to FIG. 44C are photographs illustrating examples of uneven portions formed due to denting or pressing in photographed images of the external appearance of a barrier layer included in a cell pouch film manufactured in [Experiment 3] of the present invention.
FIG. 45 is a stress-strain curve of a film for a cell pouch according to Example of [Experiment 4].
FIG. 46A and FIG. 46B are photographs illustrating shapes of a film for a cell pouch according to Example of [Experiment 6] (Example 1 and Example 2, respectively).
FIG. 47A and FIG. 47B are photographs illustrating shapes of a film for a cell pouch according to Comparative Example of [Experiment 6] (Comparative Example 1 and Comparative Example 2, respectively).
FIG. 48 is a photograph illustrating a curl evaluation method before forming of a cell pouch film in [Experiment 9] of the present invention.
FIG. 49A and FIG. 49B are photographs illustrating a curl evaluation method after forming in [Experiment 9] of the present invention.

### [Mode for Disclosure]

### Definition of Terms

In the present specification, singular expressions may include plural expressions unless clearly described as different meanings in the context. In the present application, the terms "comprises," "comprising," "includes," "including," "containing," "has," "having" or other variations thereof are inclusive and therefore specify the presence of stated features, integers, steps, operations, elements, components, and/or combinations thereof, but do not exclude the presence or addition of one or more other features, integers, steps, operations, elements, components, and/or combinations thereof.

In the present specification, expressions such as first and second are, unless otherwise mentioned, used not to designate a particular order but to distinguish components from each other.

In the present specification, the term "cell" means a battery and includes, in the broadest sense, all kinds of batteries such as secondary batteries including lithium ion batteries, lithium polymer batteries, and the like, and portable storage batteries, and the like.

In the present specification, the term "cell pouch" or "cell pouch film" means that cell components such as a positive electrode, a negative electrode, a separator, and the like are impregnated with an electrolyte solution and accommodated, and includes, in the broadest sense, all films of laminated structures that are processed into a pouch shape, a box shape, or the like in consideration of gas barrier property, flexibility, resistance to an electrolyte solution, heat sealability, and the like to accommodate the cell components.

In the present specification, SDL (Solvent Dry Lamination) or SDL process is a process in a manner of coating a solution containing an adhesive and drying a solvent.

In the present specification, EC (Extrusion Coating) or EC process means a process of adhering a sealant film by melt extrusion or directly extruding a sealant layer.

In the present specification, CPPless or CPPless process means one type of EC (Extrusion Coating) process, and means a process of forming a sealant layer by melt extrusion without using CPP (cast polypropylene film).

In the present specification, the term, final structure, means a final layer structure possessed by a cell pouch film. Such a final structure may vary slightly according to various types of manufacturing processes.

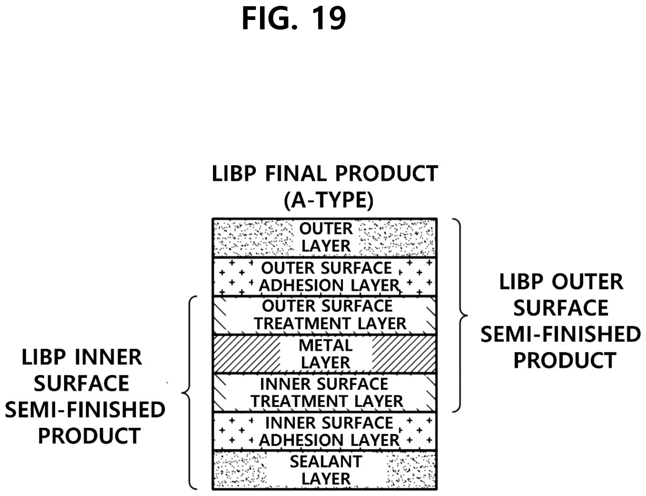

For example, as illustrated in FIG. 19, a final structure of an A-type may be configured with an outer cover substrate (or outer layer), a first adhesive layer, an outer surface treatment layer, a reference substrate (or barrier layer), an inner surface treatment layer, a second adhesive layer, and an inner cover substrate (or sealant layer). Such a structure may be manufactured, for example, by an SDL (Solvent Dry Lamination) process.

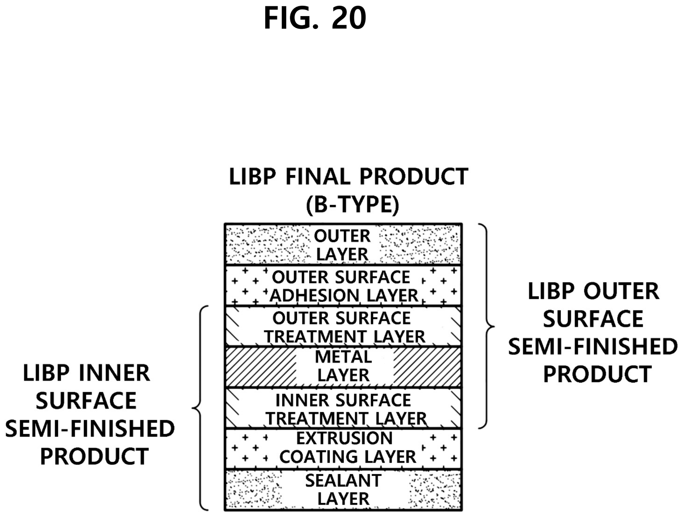

In addition, as illustrated in FIG. 20, a final structure of a B-type may be configured with an outer cover substrate (or outer layer), a first adhesive layer, an outer surface treatment layer, a reference substrate (or barrier layer), an inner surface treatment layer, an extrusion coating layer, and an inner cover substrate (or sealant layer). Such a structure may be formed, for example, by an EC (Extrusion Coating) process or a CPPless process.

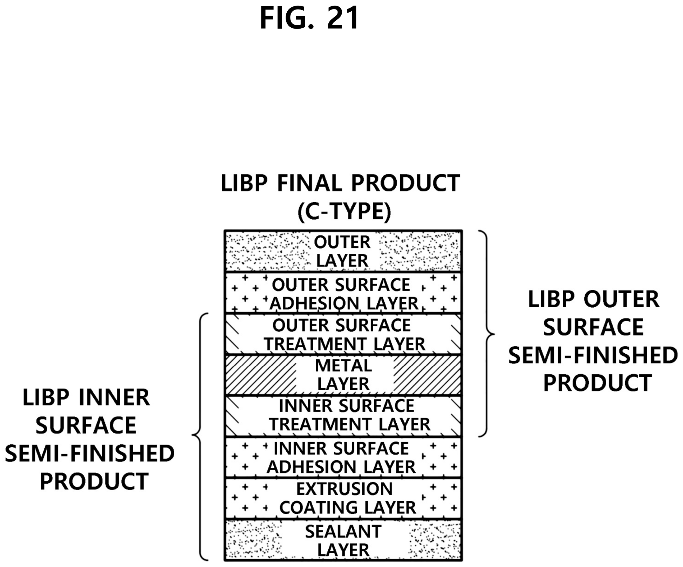

In addition, as illustrated in FIG. 21, a final structure of a C-type may be configured with an outer cover substrate (or outer layer), a first adhesive layer, an outer surface treatment layer, a reference substrate (or barrier layer), an inner surface treatment layer, a second adhesive layer, an extrusion coating layer, and an inner cover substrate (or sealant layer). Such a structure may be formed by using the above-mentioned SDL (Solvent Dry Lamination) process together with the above-mentioned EC (Extrusion Coating) process or the CPPless process.

In the present specification, the term, intermediate structure, means a structure formed in the middle of a manufacturing process of a cell pouch film, and various cell pouch intermediate structures may occur according to the manufacturing process.

For example, there may be a first intermediate structure configured with an outer cover substrate (or outer layer), a first adhesive layer (or outer surface adhesion layer), an outer surface treatment layer, a reference substrate (or barrier layer), an inner surface treatment layer, and a second adhesive layer (or inner surface adhesion layer). Alternatively, there may be a second intermediate structure configured with an outer cover substrate (or outer layer), a first adhesive layer (or outer surface adhesion layer), an outer surface treatment layer, a reference substrate (or barrier layer), and an inner surface treatment layer.

In the present specification, a single in-line process means a roll-to-roll process in which a fabric performs one run between an unwinder and a rewinder (winding roll).

In the present specification, a 1P4C process is a process in which a final structure of a cell pouch film is produced in a single in-line process. Since four coatings of a first surface treatment coating, a second surface treatment coating, an outer surface adhesive coating, and an inner surface adhesive coating are performed in one run (pass) in a single in-line process, it may be briefly referred to as 1P4C (1 pass 4 coating).

As described later, in such a 1P4C process, the final structure of a cell pouch film may be wound by one winding roll in a single in-line process. Thus, after winding the final structure of a cell pouch film in a single in-line process, the film undergoes one aging procedure.

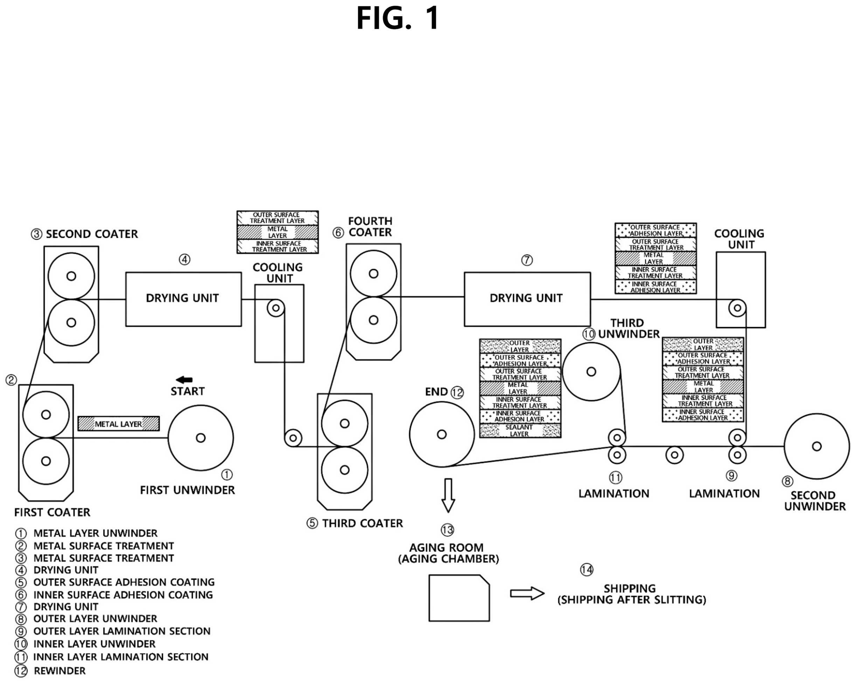

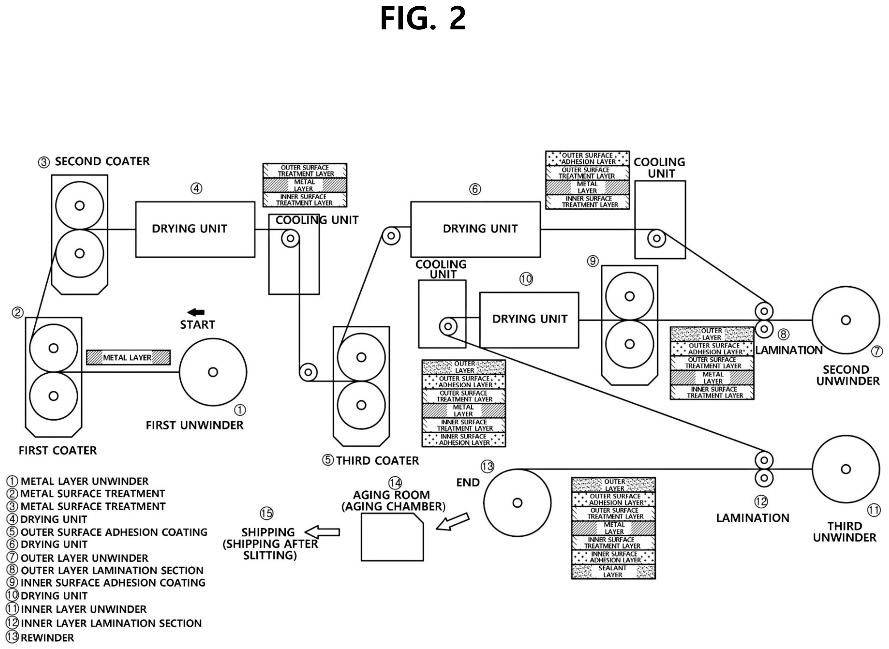

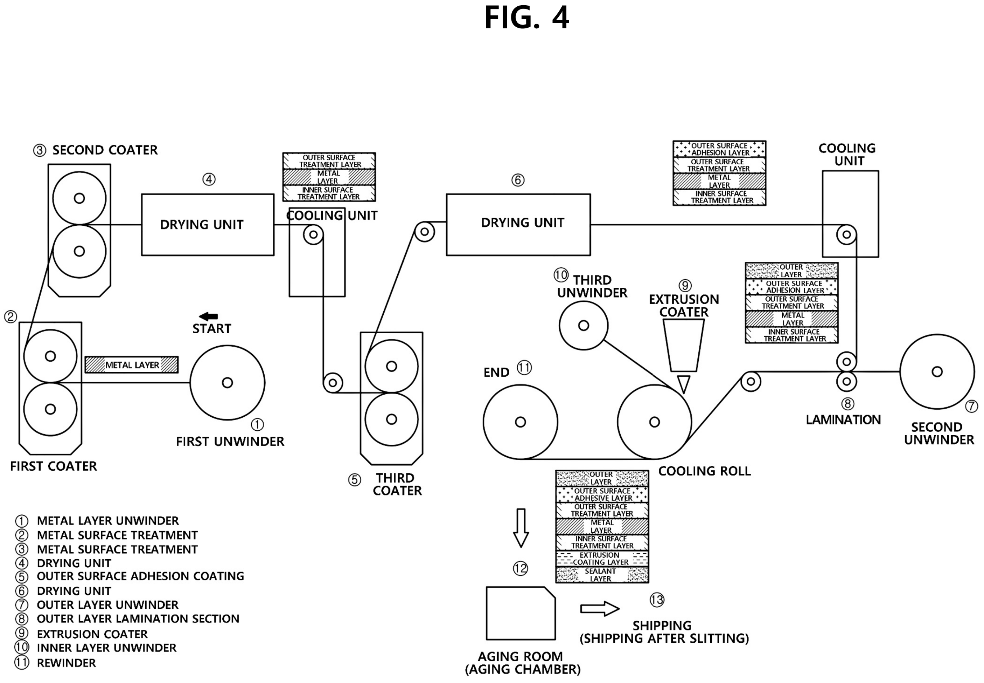

As an example of the 1P4C process, when the number of drying is two times, the number of coatings may be distinguished into three times (FIG. 4, FIG. 9, FIG. 11) or four times (FIG. 1, FIG. 6, FIG. 13, FIG. 16) depending on whether an inner surface adhesive layer exists. Meanwhile, when the number of drying is three times, the number of coatings may be four times (FIG. 2, FIG. 7, FIG. 14, FIG. 17).

In the present specification, a 1P3C process has two in-line processes, and after undergoing a first in-line process, a first aging is undergone, and after undergoing the first aging, a second in-line process is performed, and a second aging is undergone with respect to a final structure obtained after the second in-line process. Since three coatings of a first surface treatment coating, a second surface treatment coating, and an outer surface adhesive coating are performed in one run (pass) in a first in-line process, it may be briefly referred to as 1P3C (1 pass 3 coating).

As described later, in such a 1P3C process, a second intermediate structure obtained in a first in-line process is first wound by a first winding roll and a first aging is performed. With respect to the first aged intermediate structure product, a final structure is manufactured in a second in-line process, and a second winding is performed by a second winding roll and a second aging is performed, so that a total of two agings are undergone.

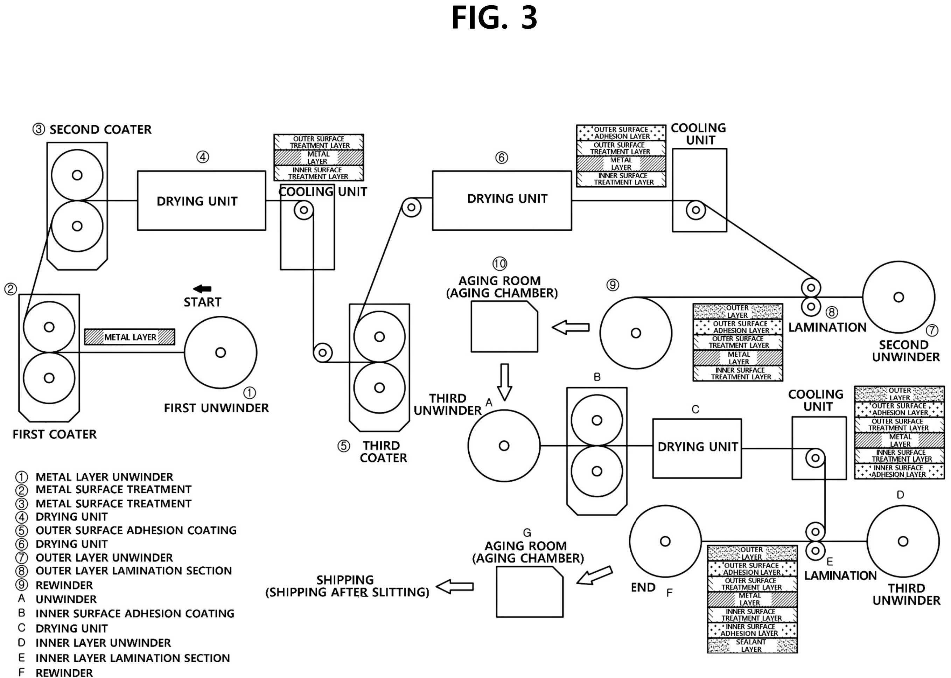

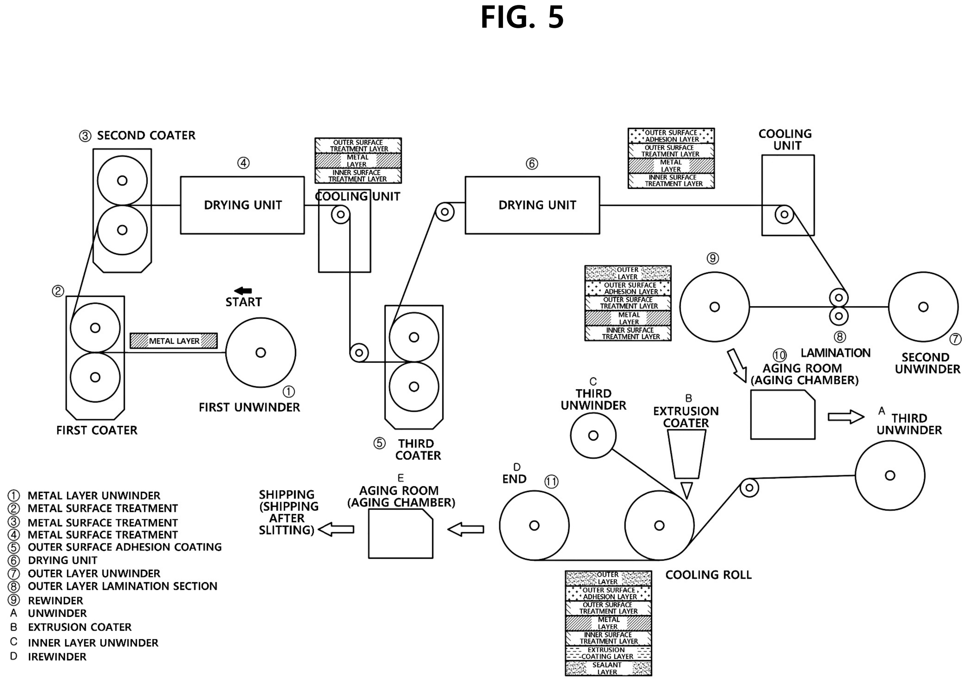

As an example of the 1P3C process, when the number of drying is two times, the number of coatings is three times (FIG. 5, FIG. 10, FIG. 12), and when the number of drying is three times, the number of coatings may be four times (FIG. 3, FIG. 8, FIG. 15, FIG. 18).

In the present specification, one (one-time or single) winding (rewinding) does not mean that a winding roll rotates once (the winding roll may of course rotate several times), but means that a film is wound on a winding roll and completes a first run. Therefore, two (two-time) windings (rewindings) mean that during a manufacturing process a first run is completed, then a run is started again and a second run is completed.

In the present specification, a fabric may mean a material of a barrier layer or a metal layer provided to a manufacturing process.

In the present specification, a functional fabric may mean a resin fabric forming a sealant layer and/or an outer layer.

In the present specification, "wave" means a phenomenon of a wave shape appearing in a specimen when the specimen is spread on a flat place.

In the present specification, "wrinkle" means a phenomenon of a stripe shape appearing on both surfaces in a longitudinal direction (machine direction, MD) of a specimen.

In the present specification, an adhesion layer may include, unless otherwise specifically referred to, an adhesive coating layer or an extrusion coating layer. In the present specification, an adhesive layer is referred to as an adhesive coating layer. Therefore, an inner surface adhesion layer may mean an inner surface adhesive layer by adhesive coating or may mean including an extrusion coating layer formed on an inner surface.

### Description of Exemplary Embodiments

Hereinafter, exemplary embodiments of the present invention will be described in detail.

The exemplary embodiments of the present invention are merely exemplified for descriptive purposes, and the embodiments of the present invention may be implemented in various forms, and should not be construed as being limited to the embodiments described in this specification. The present disclosure may be modified in various ways and may take various forms, and the embodiments are not intended to limit the present disclosure to specific forms of disclosure, and should be understood to include all modifications, equivalents, and substitutions included in the technical teachings and scope of the present disclosure.

An aging process is an essential process for improving reliability such as adhesive force, resistance to an electrolyte solution, peel strength, and the like in manufacturing a cell pouch film, but since it requires a long time and applies heating, it causes thermal deformation of the cell pouch film and greatly affects physical properties, process, and manufacturing cost of a cell pouch, so an optimal aging process is important.

However, since a cell pouch has a multilayer structure and various materials are used to satisfy various required physical properties, and strict process conditions are required, comprehensive process factors such as unwinding, rewinding, drying, and the like are included. Optimization of an order, manner, or the like of an aging process during such a cell pouch manufacturing procedure is not easy.

Meanwhile, when performing windings, which are repeated several times in procedures such as surface treatment, coating, drying, and the like, there is concern that probability of occurrence of run loss and process defects during conveyance of fabric increases, and additionally, there is a problem that stress applied to the cell pouch film increases. Further, the tension of a driving roll conveying the cell pouch film is high, causing change in a tensile curve of the cell pouch film, and there occurs a problem that mechanical strength in a longitudinal direction (MD) and a width direction (TD) of the cell pouch film changes. In addition, external appearance defects such as generation of an oxide film of a metal layer, denting due to foreign substances, pressing due to transfer, or the like are also easily occurred.

As a result of repeated studies by the inventors, it was confirmed that manufacturing a cell pouch film product by undergoing only one aging for a final structure of a cell pouch film after undergoing a single in-line process is desirable in all aspects such as productivity, physical properties, manufacturing cost, and the like.

Alternatively, when it is inevitable to perform aging two times, it was confirmed that it is required to perform a total of two agings by manufacturing a second intermediate structure not including a second adhesion layer in a first in-line process, then performing a first aging, and subsequently performing a second aging with a final structure obtained based on the second intermediate structure in a second in-line process.

That is, if a first aging is performed with a first intermediate structure or a second aging is performed with a final structure, problems such as deterioration of physical properties, problems in a manufacturing process, decrease in productivity, increase in manufacturing cost, and the like may occur.

Specifically, when performing a first aging task after forming a first intermediate structure rather than a final structure, during winding for a first aging after forming the first intermediate structure, a reaction of a second adhesive layer (inner surface adhesive layer) may partially progress, so that a blocking phenomenon in which the second adhesive layer (inner surface adhesive layer) sticks to an outer cover substrate (outer layer) may occur. On the other hand, in case of performing only one aging process for a final structure, since a sealant layer, which is an inner substrate covers the second adhesive layer (inner surface adhesive layer), a blocking phenomenon between an outer substrate (outer layer) and the second adhesive layer (inner surface adhesive layer) may be prevented.

In addition, when forming a sealant layer after performing the first aging task for the first intermediate structure, since a curing reaction of the inner surface adhesive layer progresses to some extent without being adhered to the sealant layer in the first aging procedure, in a subsequent process of again adhering to the sealant layer, an additional process for strengthening an adhesive force to the inner surface adhesive layer is required, thereby causing decrease in productivity.

Meanwhile, when an aging step is included in a double-sided surface treatment step, since a surface treating agent is exposed to air for a certain time or more, detachment of an unlaminated surface treating agent may occur.

Accordingly, in exemplary embodiments of the present invention, in a manufacturing method of a cell pouch film, a final structure of a cell pouch film is wound once in a single in-line process and undergoes an aging process only once - for example, aging for 1 day to 7 days under temperature conditions of 30°C to 100°C.

Alternatively, in other exemplary embodiments of the present invention, in a first in-line process, an intermediate structure of a cell pouch film - the intermediate structure consists of an outer layer, an outer surface adhesive layer, an outer surface treatment layer, a barrier layer, and an inner surface treatment layer - is wound once by a first winding roll and undergoes an aging process once - for example, aging for 1 day to 7 days under temperature conditions of 30°C to 100°C - and in a second in-line process, a final structure of a cell pouch film formed from the intermediate structure that has undergone the one aging is wound once by a second winding roll and undergoes an aging process once - for example, aging for 1 day to 7 days under temperature conditions of 30°C to 100°C - so as to undergo a total of two agings.

In an exemplary embodiment, the manufacturing method may include the following process steps of:
(a) preparing a metal layer;
(b) surface coating the metal layer to form a surface treatment layer;
(c) drying the surface treatment layer;
(d) forming an adhesion layer on the surface treatment layer;
(e) drying the adhesion layer;
(f) forming an outer layer on the adhesion layer;
(g) forming a sealant layer on an innermost surface side of the metal layer; and
(h) allowing the manufactured final structure of the cell pouch film to undergo the aging process, and steps (a) to (g) are carried out in a single in-line process such that the final structure of the cell pouch film may be wound by a winding roll.

In an exemplary embodiment, step (b) may include the following process steps of:
(b-1) surface coating an outer surface of the metal layer to form an outer surface treatment layer; and/or
(b-2) surface coating an inner surface of the metal layer to form an inner surface treatment layer.

In an exemplary embodiment, step (d) may further undergo the following process steps of:
(d-1) forming an outer surface adhesion layer (or first adhesion layer) on the outer surface treatment layer; and/or
(d-2) forming an inner surface adhesion layer (or second adhesion layer) on the inner surface treatment layer.

In an exemplary embodiment, step (g) may include forming a sealant layer by bonding a pre-prepared sealant layer fabric (film) through extrusion coating (EC).

Alternatively, in an exemplary embodiment, step (g) may include forming an extrusion coating layer and a sealant layer by co-extrusion using a T-die.

Alternatively, in an exemplary embodiment, step (g) may include forming an extrusion coating layer and a sealant layer through two-time extrusion.

### Description of Exemplary Embodiments with reference to FIG. 1 to FIG. 3

In an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an outer surface adhesion layer (or first adhesion layer) on the outer surface treatment layer, and/or step (d-2) of forming an inner surface adhesive layer (or second adhesive layer) on the inner surface treatment layer, and
step (g) may be laminating a pre-prepared sealant layer fabric (film) to the inner surface adhesive layer (or second adhesive layer) formed on the inner surface treatment layer (SDL type, final product A-type).

The process may be configured as an SDL (Solvent Dry Lamination)-based 1P4C process or a 1P3C process.

Preferred embodiments of the above exemplary embodiments may be explained by the following drawings (FIG. 1 to FIG. 3).

FIG. 1 is a schematic diagram illustrating an A-type cell pouch manufacturing process performing one aging on a final structure of a cell pouch film in an SDL (Solvent Dry Lamination)-based 1P4C process according to an embodiment of the present invention.

With reference to FIG. 1, the SDL (Solvent Dry Lamination)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, after passing through a third coater (performing outer surface adhesion coating) ⑤ and a fourth coater (performing inner surface adhesive coating) ⑥, and being then dried in a drying unit ⑦, and if necessary, then cooled in a cooling zone, a structure of outer surface adhesion layer / outer surface treatment layer / metal layer / inner surface treatment layer / inner surface adhesive layer is formed.

Subsequently, an outer layer fabric is provided from a second unwinder, that is, an outer layer unwinder ⑧, and an outer layer is laminated in an outer layer lamination section ⑨.

Subsequently, an inner layer fabric is provided from a third unwinder, that is, an inner layer unwinder ⑩, and laminated in an inner layer lamination section ⑪, and finally wound in a rewinder (winding roll) ⑫. Accordingly, a final structure obtained is outer layer / outer surface adhesion layer / outer surface treatment layer / metal layer / inner surface treatment layer / inner surface adhesive layer / sealant layer (LIBP final product A-type). This final structure is provided to an aging room (aging chamber), undergoes one aging, and subsequently undergoes a procedure of slitting and shipping.

FIG. 2 is a schematic diagram illustrating an A-type cell pouch manufacturing process performing one aging on a final structure of a cell pouch film in an SDL (Solvent Dry Lamination)-based 1P4C process according to another embodiment of the present invention.

As illustrated in FIG. 2, the SDL (Solvent Dry Lamination)-based 1P4C process according to an embodiment of the present invention is also configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Up to this point, it is the same as FIG. 1.

Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and after passing through a fourth coater (performing inner surface adhesive coating) ⑨, it is dried in a drying unit ⑩, and if necessary, cooled in a cooling zone, thereby forming a structure of outer layer / outer surface adhesion layer / outer surface treatment layer / metal layer / inner surface treatment layer / inner surface adhesive layer.

Subsequently, an inner layer fabric is provided from a third unwinder, that is, an inner layer unwinder ⑪, and laminated in an inner layer lamination section ⑫, and finally wound in a rewinder (winding roll) ⑬. Accordingly, a final structure obtained is outer layer / outer surface adhesion layer / outer surface treatment layer / metal layer / inner surface treatment layer / inner surface adhesive layer / sealant layer (LIBP final product A-type). This final structure is provided to an aging room (aging chamber), undergoes single aging, and subsequently undergoes a procedure of slitting and shipping.

FIG. 3 is a schematic diagram illustrating an A-type cell pouch manufacturing process performing a total of two agings including one aging on a second intermediate structure after a first in-line process and one aging on a final structure after a second in-line process in an SDL (Solvent Dry Lamination)-based 1P3C process according to another embodiment of the present invention.

With reference to FIG. 3, the SDL (Solvent Dry Lamination)-based 1P3C process according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed. Up to this point, it is the same as FIG. 2.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨. Accordingly, a structure obtained is a second intermediate structure, having outer layer / outer surface adhesion layer / outer surface treatment layer / metal layer / inner surface treatment layer. The second intermediate structure is provided to an aging room (aging chamber) ⑩ and aged. As described above, the second intermediate structure is not to have an inner surface adhesion layer.

Subsequently, from a third unwinder (A), the second intermediate structure [outer layer / outer surface adhesion layer / outer surface treatment layer / metal layer / inner surface treatment layer] having undergone a first aging is unwound, and inner surface adhesive coating is performed by an inner adhesive coater (B), and after being dried in a drying unit (C), if necessary, cooled in a cooling zone. Accordingly, a structure obtained has outer layer / outer surface adhesion layer / outer surface treatment layer / metal layer / inner surface treatment layer / inner surface adhesive layer.

Subsequently, an inner layer fabric is provided from a fourth unwinder, that is, an inner layer unwinder (D), and laminated in an inner layer lamination section (E), and finally wound in a rewinder (winding roll) (F). Accordingly, a final structure obtained is outer layer / outer surface adhesion layer / outer surface treatment layer / metal layer / inner surface treatment layer / inner surface adhesive layer / sealant layer (LIBP final product A-type). This final structure is provided to an aging room (aging chamber), undergoes a second aging (a total of two agings), and subsequently undergoes a procedure of slitting and shipping.

### Description of Exemplary Embodiments with reference to FIG. 4 and FIG. 5

Meanwhile, in an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and
step (g) may be forming a sealant layer by bonding a pre-prepared sealant film through extrusion coating (EC type, final product B-type).

Preferred embodiments of the above exemplary embodiment may be explained with reference to FIG. 4 and FIG. 5.

FIG. 4 is a schematic diagram illustrating a B-type cell pouch manufacturing process performing one aging on a final structure of a cell pouch film in an EC (Extrusion Coating)-based 1P4C process according to another embodiment of the present invention.

As illustrated in FIG. 4, the EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed. Subsequently, an outer layer fabric is provided from a second unwinder, that is, an outer layer unwinder ⑦, and laminated in an outer layer lamination section ⑧. Up to this point, it is the same as FIG. 2.

Subsequently, an inner layer is provided from a third unwinder, that is, an inner layer unwinder ⑩, to a roll such as a cooling roll, and simultaneously extruded by an extrusion coater ⑨ to form an extrusion coating layer, and laminated with the inner layer, and finally wound in a rewinder (winding roll) ⑪. Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber) ⑫, undergoes one aging, and subsequently undergoes a procedure of slitting and shipping ⑬.

FIG. 5 is a schematic diagram illustrating a B-type cell pouch manufacturing process performing a total of two agings including one aging on a second intermediate structure after a first in-line process and one aging on a final structure after a second in-line process in an EC (Extrusion Coating)-based 1P3C process according to another embodiment of the present invention.

With reference to FIG. 5, the EC (Extrusion Coating)-based 1P3C process according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨. Accordingly, a structure obtained is a second intermediate structure, having outer layer / outer surface adhesion layer / outer surface treatment layer / metal layer / inner surface treatment layer. The second intermediate structure is provided to an aging room (aging chamber) ⑩ and aged. As described above, the second intermediate structure is not to have an inner surface adhesion layer. Up to this point, it is the same as FIG. 3.

Subsequently, from a third unwinder (A), the second intermediate structure [outer layer / outer surface adhesion layer / outer surface treatment layer / metal layer / inner surface treatment layer] having undergone a first aging is unwound and provided to a roll (for example, a cooling roll), while an inner layer is provided from an inner layer unwinder (C) to the roll (for example, the cooling roll) to which the second intermediate structure is provided, and simultaneously extruded by an extrusion coater (B) to form an extrusion coating layer, and laminated with the inner layer, and finally wound in a rewinder (winding roll) ⑪ to terminate the in-line procedure (D). Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber), undergoes a second aging (a total of two agings), and subsequently undergoes a procedure of slitting and shipping.

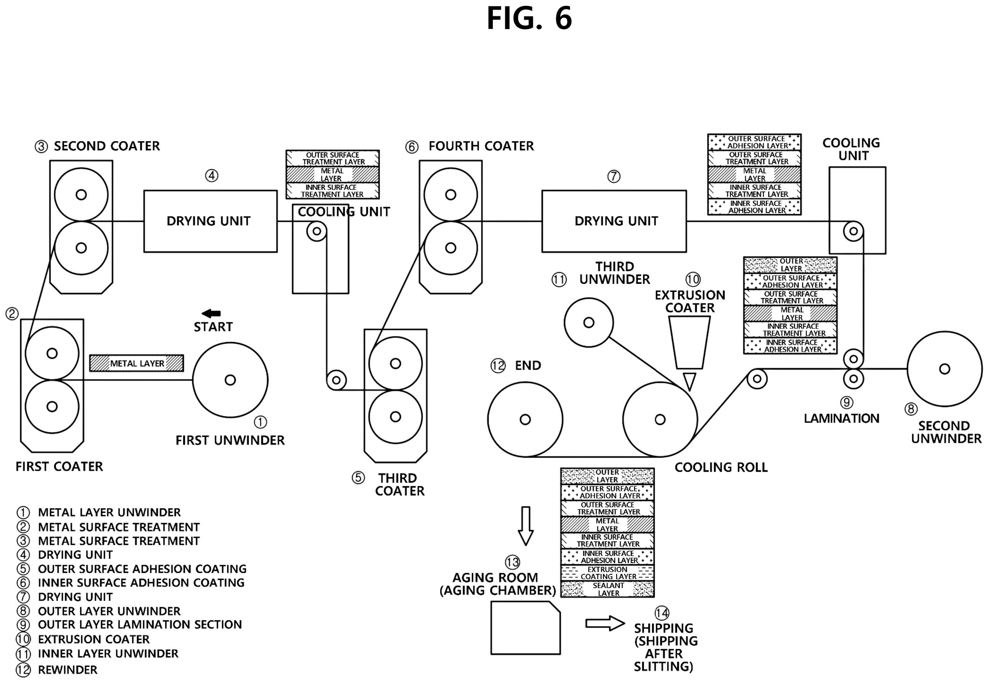

### Description of Exemplary Embodiments with reference to FIG. 6 to FIG. 8

In an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and step (d-2) of forming an adhesive layer on the inner surface treatment layer,
step (g) may be forming a sealant layer by bonding a pre-prepared sealant film through extrusion coating (EC type, final product C-type).

Preferred embodiments of the above exemplary embodiment may be explained with reference to FIG. 6 to FIG. 8.

FIG. 6 is a schematic diagram illustrating a C-type cell pouch manufacturing process performing one aging on a final structure of a cell pouch film in an EC (Extrusion Coating)-based 1P4C process according to another embodiment of the present invention.

As illustrated in FIG. 6, the EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, after passing through a third coater (performing outer surface adhesive coating) ⑤ and a fourth coater (performing inner surface adhesive coating) ⑥, and being then dried in a drying unit ⑦, and if necessary, then cooled in a cooling zone, a structure of outer surface adhesion layer / outer surface treatment layer / metal layer / inner surface treatment layer / inner surface adhesive layer is formed.

Subsequently, an outer layer fabric is provided from a second unwinder, that is, an outer layer unwinder ⑧, and the outer layer is laminated in an outer layer lamination section ⑨ to form a structure of outer layer / outer surface adhesion layer / outer surface treatment layer / metal layer / inner surface treatment layer / inner surface adhesive layer. Up to this point, it is the same as FIG. 1.

Subsequently, in a third unwinder, that is, an inner layer unwinder ⑪, an inner layer is provided to a roll (for example, a cooling roll) while simultaneously extruding with an extrusion coater ⑩ to form an extrusion coating layer and laminating the inner layer, and in a rewinder (winding roll) ⑫, a final winding is performed, thereby obtaining a final structure of outer layer / outer surface adhesion layer / outer surface treatment layer / metal layer / inner surface treatment layer / inner surface adhesive layer / extrusion coating layer / sealant layer (LIBP final product C-type). The final structure is provided to an aging room (aging chamber) ⑬ and undergoes one aging, and subsequently undergoes a procedure of slitting and shipping ⑭.

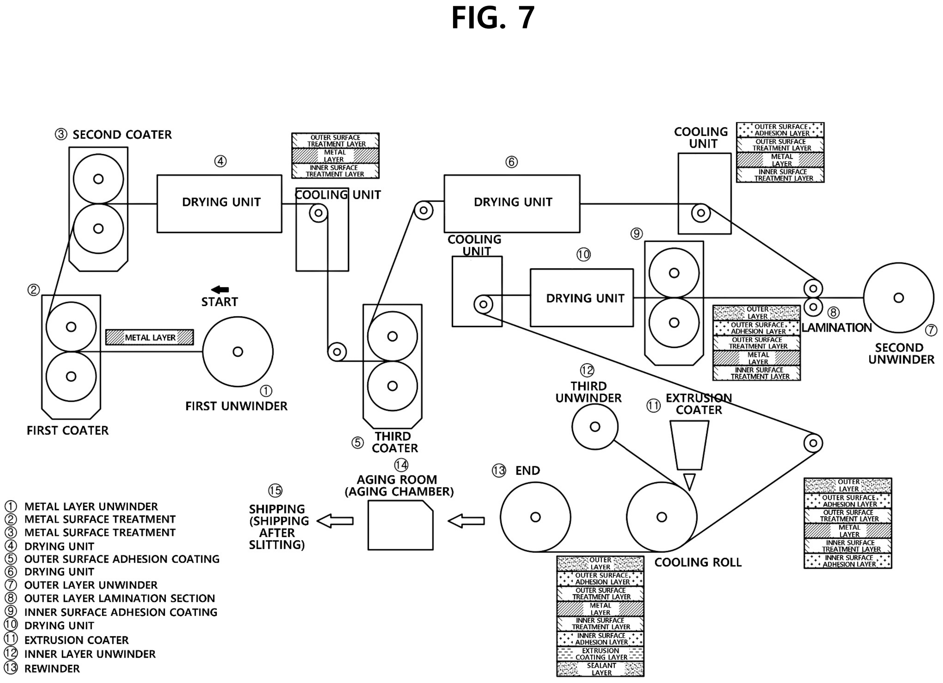

FIG. 7 is a schematic diagram illustrating a C-type cell pouch manufacturing process performing one aging on a final structure of a cell pouch film in an EC (Extrusion Coating)-based 1P4C process according to another embodiment of the present invention.

As illustrated in FIG. 7, the EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, it passes through a third coater (performing outer surface adhesive coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and after passing through a fourth coater (performing inner surface adhesive coating) ⑨, it is dried in a drying unit ⑩, and if necessary, cooled in a cooling zone, thereby forming a structure of outer layer / outer surface adhesion layer / outer surface treatment layer / metal layer / inner surface treatment layer / inner surface adhesive layer. Up to this point, it is the same as FIG. 2.

Subsequently, an inner layer is provided from a third unwinder, that is, an inner layer unwinder ⑫, to a roll such as a cooling roll, and simultaneously extruded by an extrusion coater ⑪ to form an extrusion coating layer, and laminated with the inner layer, and finally wound in a rewinder (winding roll) ⑬. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber) ⑭, undergoes one aging, and subsequently undergoes a procedure of slitting and shipping ⑮.

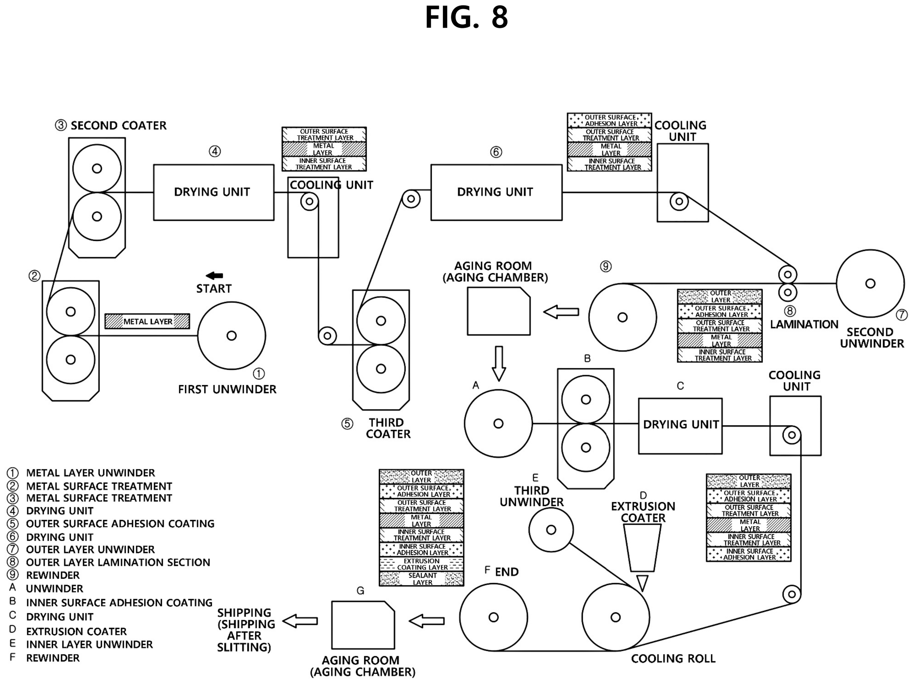

FIG. 8 is a schematic diagram illustrating a C-type cell pouch manufacturing process performing a total of two agings including one aging on a second intermediate structure after a first in-line process and one aging on a final structure after a second in-line process in an EC (Extrusion Coating)-based 1P3C process according to another embodiment of the present invention.

With reference to FIG. 8, the EC (Extrusion Coating)-based 1P3C process according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨ Accordingly, a structure obtained is a second intermediate structure, having outer layer / outer surface adhesion layer / outer surface treatment layer / metal layer / inner surface treatment layer. The second intermediate structure is provided to an aging room (aging chamber) and aged. As described above, the second intermediate structure is not to have an inner surface adhesion layer.

Subsequently, from a third unwinder (A), the second intermediate structure [outer layer / outer surface adhesion layer / outer surface treatment layer / metal layer / inner surface treatment layer] having undergone a first aging is unwound, and inner surface adhesive coating is performed by an inner adhesive coater (B), and after being dried in a drying unit (C), if necessary, cooled in a cooling zone. Accordingly, a structure obtained has outer layer / outer surface adhesion layer / outer surface treatment layer / metal layer / inner surface treatment layer / inner surface adhesive layer. Up to this point, it is the same as FIG. 3.

Subsequently, from a fourth unwinder, that is, an inner layer unwinder (E), an inner layer fabric is provided to a roll (for example, a cooling roll) while simultaneously extruding with an extrusion coater (D) to form an extrusion coating layer and laminating with the inner layer, and in a rewinder (winding roll) (F), a final winding is performed to terminate the in-line procedure. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber), undergoes a second aging (a total of two agings), and subsequently undergoes a procedure of slitting and shipping.

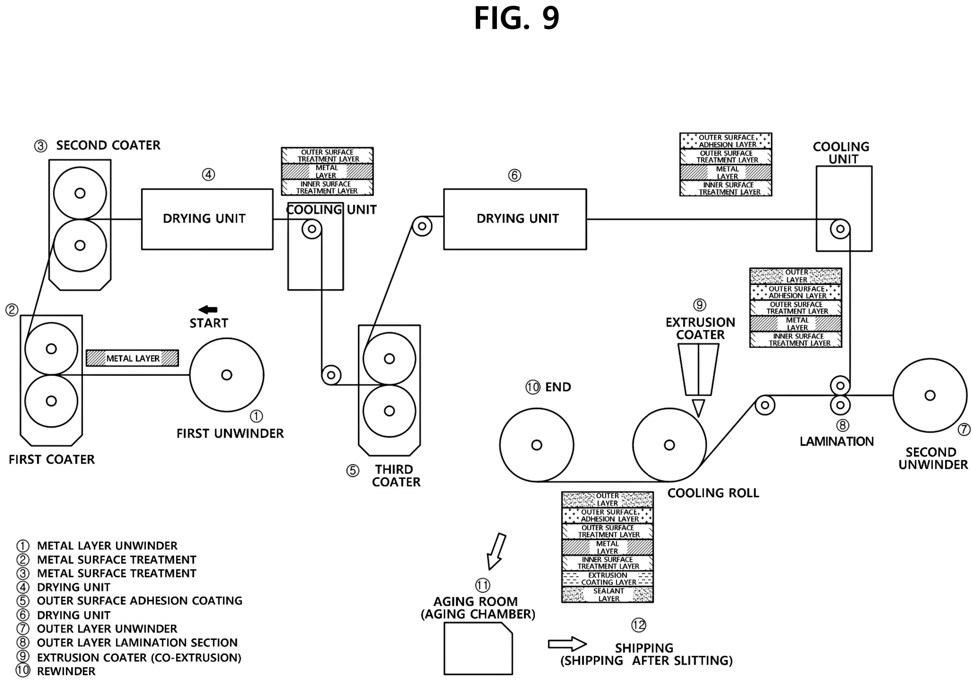

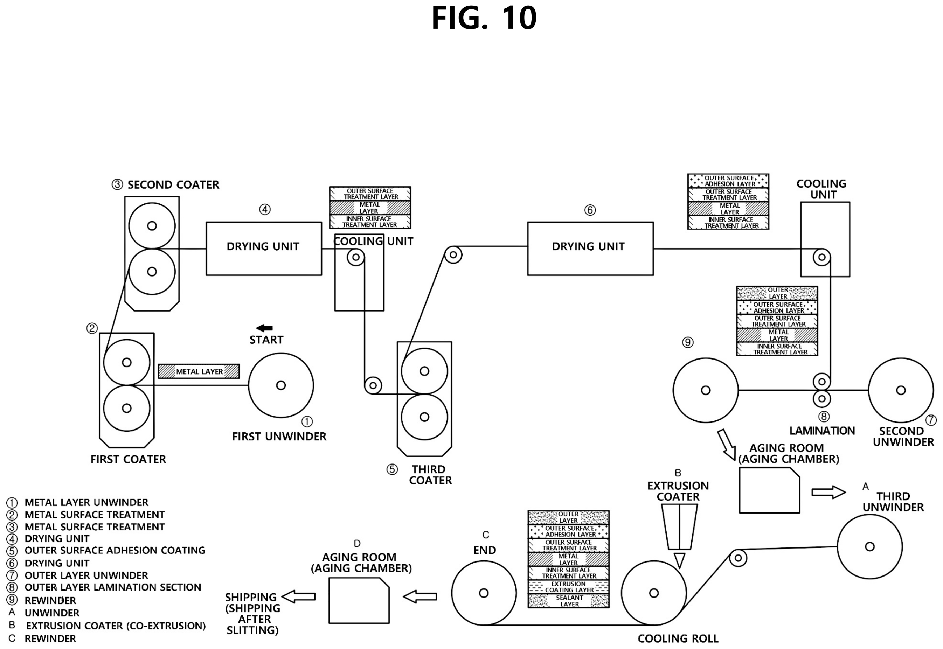

### Description of Exemplary Embodiments with reference to FIG. 9 and FIG. 10

Meanwhile, in an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and
step (g) may be forming an extrusion coating layer and a sealant layer by co-extrusion using a T-die (CPPless type, LIBP final product B-type).

Preferred embodiments of the above exemplary embodiment may be explained with reference to FIG. 9 and FIG. 10.

FIG. 9 is a schematic diagram illustrating a B-type cell pouch manufacturing process performing one aging on a final structure of a cell pouch film in a CPPless EC (Extrusion Coating)-based 1P4C process performing co-extrusion according to another embodiment of the present invention.

As illustrated in FIG. 9, the CPPless EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed. Subsequently, an outer layer fabric is provided from a second unwinder, that is, an outer layer unwinder ⑦, and laminated in an outer layer lamination section ⑧. Up to this point, it is the same as FIG. 4.

Subsequently, in a T-die extrusion coater ⑨, an extrusion coating layer resin and a sealant layer resin are co-extruded and provided to a roll (for example, a cooling roll) to form an extrusion coating layer and a sealant layer, and in a rewinder (winding roll) ⑩, a final winding is then performed. Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber) ⑪, undergoes one aging, and subsequently undergoes a procedure of slitting and shipping ⑫.

FIG. 10 is a schematic diagram illustrating a B-type cell pouch manufacturing process performing a total of two agings including one aging on a second intermediate structure after a first in-line process and one aging on a final structure after a second in-line process in a CPPless EC (Extrusion Coating)-based 1P3C process performing co-extrusion according to another embodiment of the present invention.

With reference to FIG. 10, the CPPless EC (Extrusion Coating)-based 1P3C process according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨. Accordingly, a structure obtained is a second intermediate structure, having outer layer / outer surface adhesion layer / outer surface treatment layer / metal layer / inner surface treatment layer. The second intermediate structure is provided to an aging room (aging chamber) and aged. As described above, the second intermediate structure is not to have an inner surface adhesion layer. Up to this point, it is the same as FIG. 5.

Subsequently, in a third unwinder (A), a second intermediate structure [outer layer / outer surface adhesion layer / outer surface treatment layer / metal layer / inner surface treatment layer] having undergone a first aging is unwound and provided to a roll (for example, a cooling roll), while in a T-die extrusion coater (B), an extrusion coating layer resin and a sealant layer resin are co-extruded and provided to the roll (for example, a cooling roll) to form an extrusion coating layer and a sealant layer on the second intermediate structure having undergone the first aging, and in a rewinder (winding roll) (C), a final winding is then performed. Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber) (D), undergoes one aging, and subsequently undergoes a procedure of slitting and shipping.

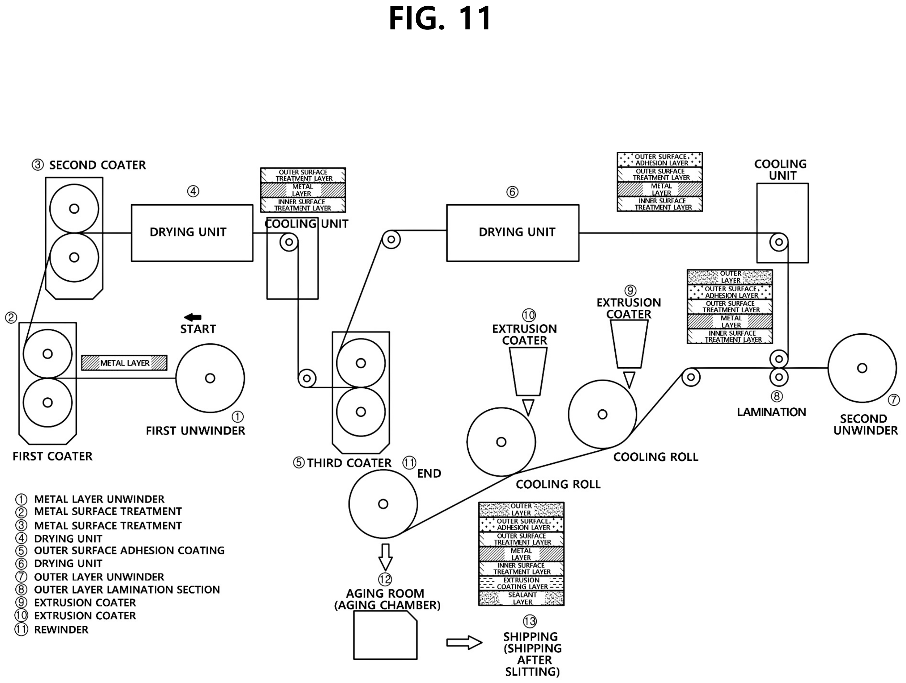

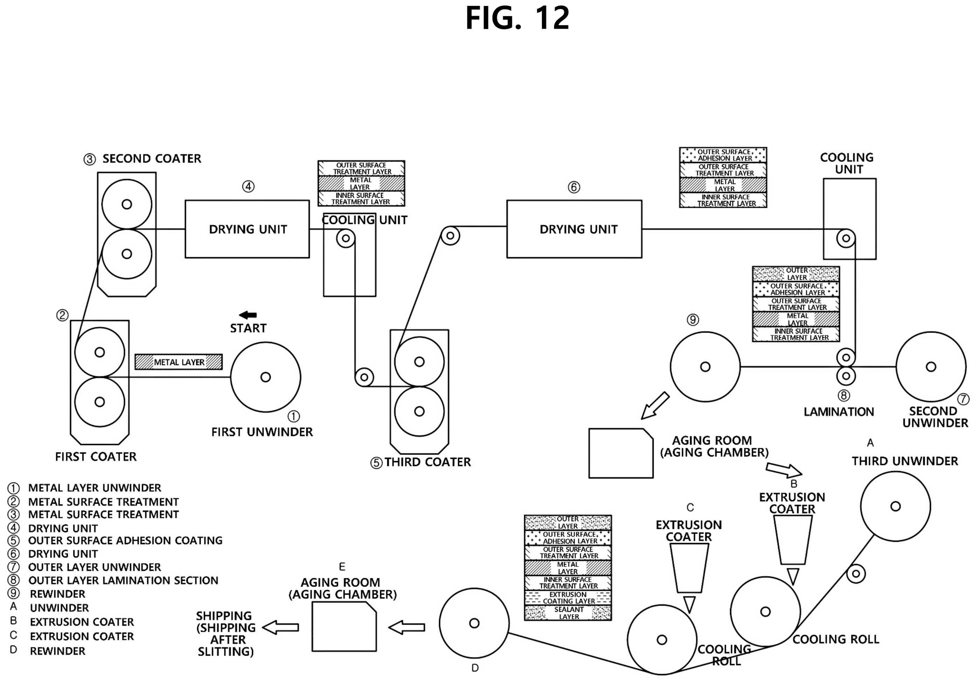

### Description of Exemplary Embodiments with reference to FIG. 11 and FIG. 12

Meanwhile, in an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and
step (g) may be sequentially forming an extrusion coating layer and a sealant layer by using an extrusion manner (CPPless type, final product B-type, two-time extrusion manner).

Preferred embodiments of the above exemplary embodiment may be explained with reference to FIG. 11 and FIG. 12.

FIG. 11 is a schematic diagram illustrating a B-type cell pouch manufacturing process performing one aging on a final structure of a cell pouch film in a CPPless EC (Extrusion Coating)-based 1P4C process performing two-time extrusion according to another embodiment of the present invention.

As illustrated in FIG. 11, the CPPless EC (Extrusion Coating)-based 1P4C process performing two-time extrusion according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed. Subsequently, an outer layer fabric is provided from a second unwinder, that is, an outer layer unwinder ⑦, and laminated in an outer layer lamination section ⑧. Up to this point, it is the same as FIG. 9.

Subsequently, in a first extrusion coater ⑨, an extrusion coating layer resin is extruded and provided to a first roll (for example, a cooling roll) to form an extrusion coating layer, and in a second extrusion coater ⑩, a sealant layer resin is extruded and provided to a second roll (for example, a cooling roll) to form a sealant layer, and in a rewinder (winding roll) ⑪, a final winding is then performed. Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber) ⑫, undergoes one aging, and subsequently undergoes a procedure of slitting and shipping ⑬.

FIG. 12 is a schematic diagram illustrating a B-type cell pouch manufacturing process performing a total of two agings including one aging on a second intermediate structure after a first in-line process and one aging on a final structure after a second in-line process in a CPPless EC (Extrusion Coating)-based 1P3C process performing two-time extrusion according to another embodiment of the present invention.

With reference to FIG. 12, the CPPless EC (Extrusion Coating)-based 1P3C process performing two-time extrusion according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨ Accordingly, a structure obtained is a second intermediate structure, having outer layer / outer surface adhesion layer / outer surface treatment layer / metal layer / inner surface treatment layer. The second intermediate structure is provided to an aging room (aging chamber) and aged. As described above, the second intermediate structure is not to have an inner surface adhesion layer. Up to this point, it is the same as FIG. 6.

Subsequently, in a third unwinder (A), a second intermediate structure [outer layer / outer surface adhesion layer / outer surface treatment layer / metal layer / inner surface treatment layer] having undergone a first aging is unwound and provided to a first roll (for example, a cooling roll), while in a first extrusion coater (B), an extrusion coating layer resin is extruded and provided to the first roll (for example, a cooling roll) to form an extrusion coating layer, and thereafter, after being conveyed to a second roll (for example, a cooling roll), in a second extrusion coater (C), a sealant layer resin is extruded and provided to the second roll (for example, a cooling roll) to form a sealant layer, and in a rewinder (winding roll) (D), a final winding is then performed. Accordingly, a final structure obtained is outer layer / outer surface adhesion layer / outer surface treatment layer / metal layer / inner surface treatment layer / extrusion coating layer / sealant layer (LIBP final product B-type). This final structure is provided to an aging room (aging chamber) (E), undergoes one aging, and subsequently undergoes a procedure of slitting and shipping.

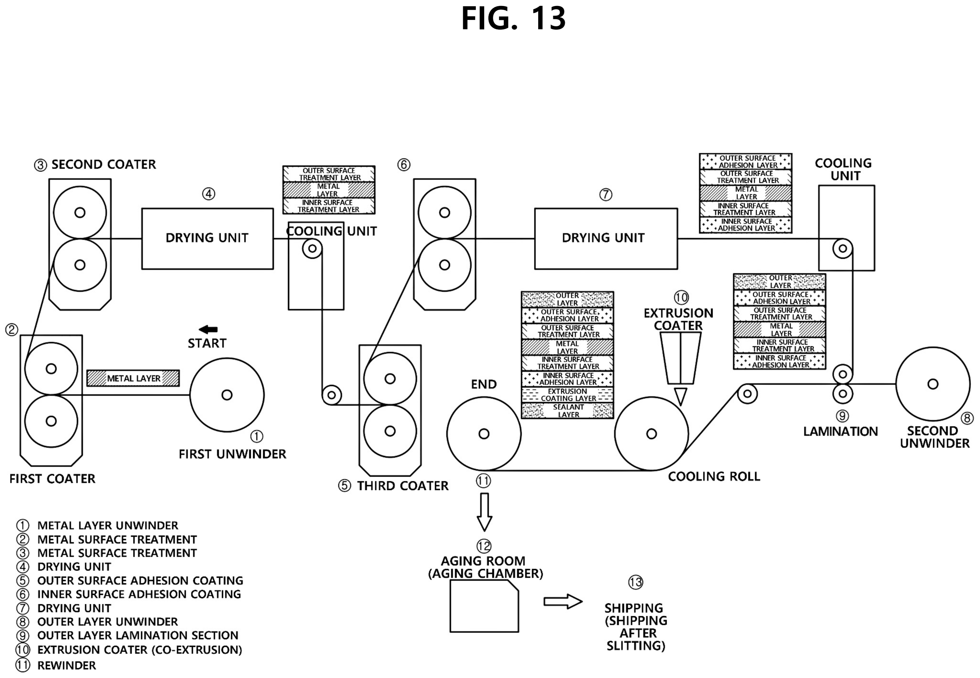

### Description of Exemplary Embodiments with reference to FIG. 13 to FIG. 15

Meanwhile, in an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and step (d-2) of forming an adhesive layer on the inner surface treatment layer,
step (g) may be forming an extrusion coating layer and a sealant layer by co-extrusion using a T-die (CPPless type, final product C-type).

Preferred embodiments of the above exemplary embodiment may be explained with reference to FIG. 13 to FIG. 15.

FIG. 13 is a schematic diagram illustrating a C-type cell pouch manufacturing process performing one aging on a final structure of a cell pouch film in a CPPless EC (Extrusion Coating)-based 1P4C process performing co-extrusion according to another embodiment of the present invention.

As illustrated in FIG. 13, the CPPless EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, after passing through a third coater (performing outer surface adhesive coating) ⑤ and a fourth coater (performing inner surface adhesive coating) ⑥, and being then dried in a drying unit ⑦, and if necessary, then cooled in a cooling zone, a structure of outer surface adhesion layer / outer surface treatment layer / metal layer / inner surface treatment layer / inner surface adhesive layer is formed.

Subsequently, an outer layer fabric is provided from a second unwinder, that is, an outer layer unwinder ⑧, and the outer layer is laminated in an outer layer lamination section ⑨ to form a structure of outer layer / outer surface adhesion layer / outer surface treatment layer / metal layer / inner surface treatment layer / inner surface adhesive layer. Up to this point, it is the same as FIG. 6.

Subsequently, in a T-die extrusion coater ⑩, an extrusion coating layer resin and a sealant layer resin are co-extruded and provided to a roll (for example, a cooling roll) to form an extrusion coating layer and a sealant layer, and in a rewinder (winding roll) ⑪, a final winding is then performed. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber) ⑫, undergoes one aging, and subsequently undergoes a procedure of slitting and shipping ⑬.

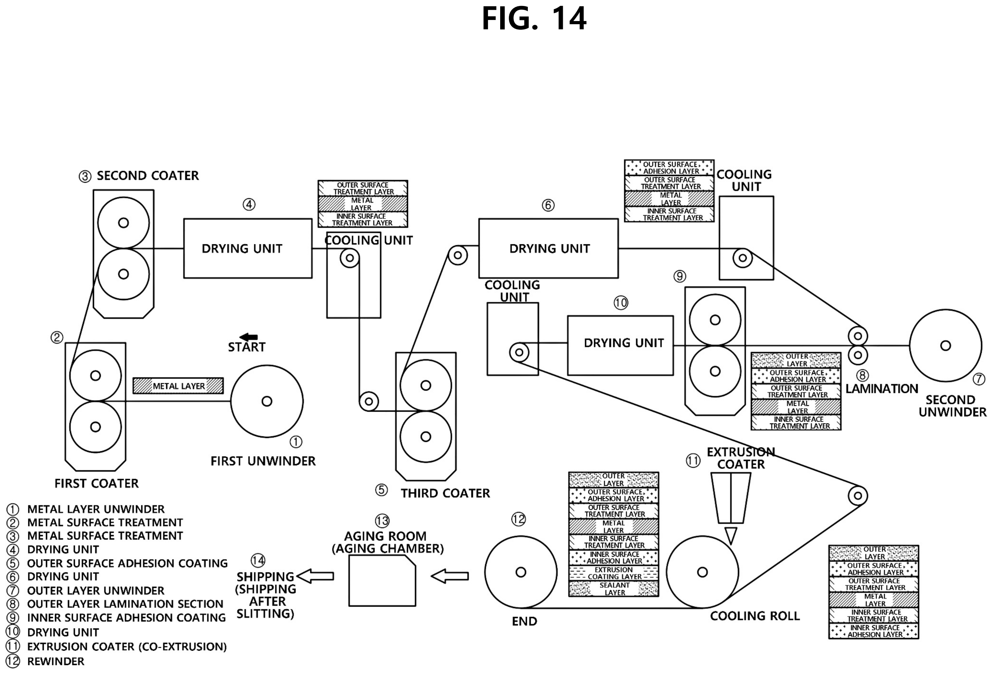

FIG. 14 is a schematic diagram illustrating a C-type cell pouch manufacturing process performing one aging on a final structure of a cell pouch film in a CPPless EC (Extrusion Coating)-based 1P4C process performing co-extrusion according to another embodiment of the present invention.

As illustrated in FIG. 14, the CPPless EC (Extrusion Coating)-based 1P4C process according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and after passing through a fourth coater (performing inner surface adhesive coating) ⑨, it is dried in a drying unit ⑩, and if necessary, cooled in a cooling zone, thereby forming a structure of outer layer / outer surface adhesion layer / outer surface treatment layer / metal layer / inner surface treatment layer / inner surface adhesive layer. Up to this point, it is the same as FIG. 7.

Subsequently, in a T-die extrusion coater ⑪, an extrusion coating layer resin and a sealant layer resin are co-extruded and provided to a roll (for example, a cooling roll) to form an extrusion coating layer and a sealant layer, and in a rewinder (winding roll) ⑫, a final winding is then performed. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). The final structure is provided to an aging room (aging chamber) ⑬ and undergoes one aging, and subsequently undergoes a procedure of slitting and shipping ⑭.

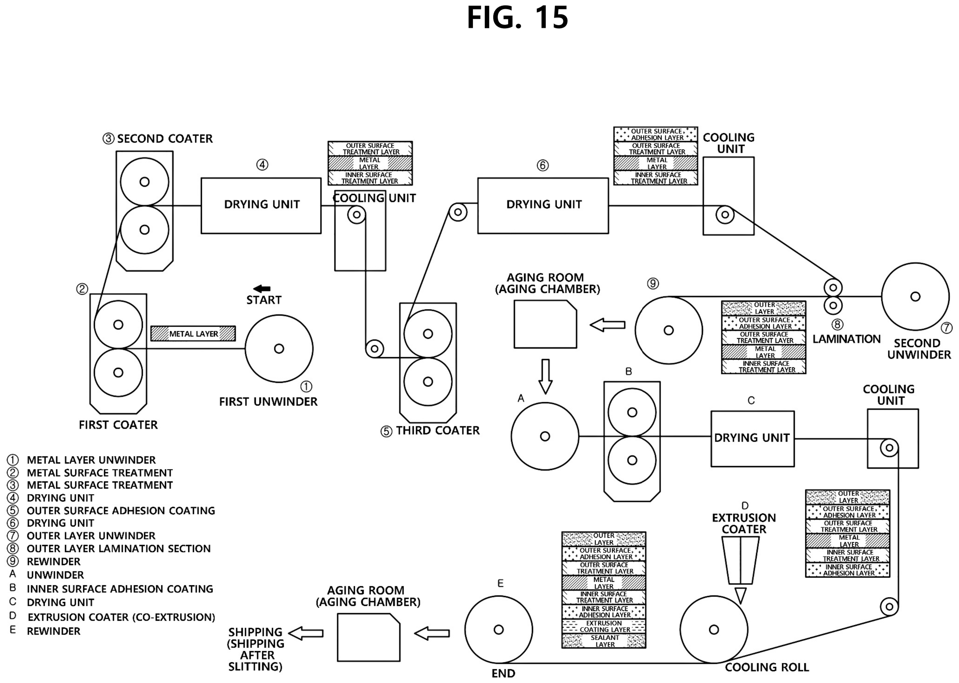

FIG. 15 is a schematic diagram illustrating a C-type cell pouch manufacturing process performing a total of two agings including one aging on a second intermediate structure after a first in-line process and one aging on a final structure after a second in-line process in a CPPless EC (Extrusion Coating)-based 1P3C process performing co-extrusion according to another embodiment of the present invention.

With reference to FIG. 15, the CPPless EC (Extrusion Coating)-based 1P3C process according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesion coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll)) ⑨ Accordingly, a structure obtained is a second intermediate structure, having outer layer / outer surface adhesion layer / outer surface treatment layer / metal layer / inner surface treatment layer. The second intermediate structure is provided to an aging room (aging chamber) and aged. As described above, the second intermediate structure is not to have an inner surface adhesion layer.

Subsequently, from a third unwinder (A), the second intermediate structure [outer layer / outer surface adhesion layer / outer surface treatment layer / metal layer / inner surface treatment layer] having undergone a first aging is unwound, and inner surface adhesive coating is performed by an inner adhesive coater (B), and after being dried in a drying unit (C), if necessary, cooled in a cooling zone. Accordingly, a structure obtained has outer layer / outer surface adhesion layer / outer surface treatment layer / metal layer / inner surface treatment layer / inner surface adhesive layer. Up to this point, it is the same as FIG. 8.

Subsequently, in a T-die extrusion coater (D), an extrusion coating layer resin and a sealant layer resin are co-extruded and provided to a roll (for example, a cooling roll) to form an extrusion coating layer and a sealant layer, and in a rewinder (winding roll) (E), a final winding is then performed. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber), undergoes a second aging (a total of two agings), and subsequently undergoes a procedure of slitting and shipping.

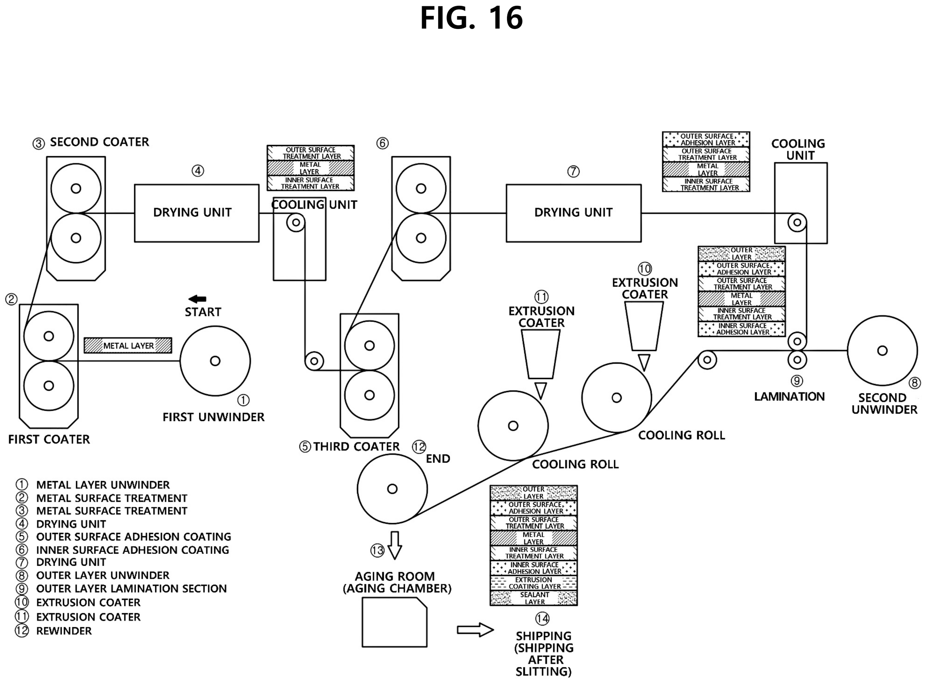

### Description of Exemplary Embodiments with reference to FIG. 16 to FIG. 18

Meanwhile, in an exemplary embodiment, the manufacturing method may be as follows:
step (b) includes step (b-1) of forming an outer surface treatment layer by surface coating an outer surface of a metal layer, and step (b-2) of forming an inner surface treatment layer by surface coating an inner surface of the metal layer,
step (d) includes step (d-1) of forming an adhesion layer on the outer surface treatment layer, and step (d-2) of forming an adhesive layer on the inner surface treatment layer,
step (g) may be sequentially forming an extrusion coating layer and a sealant layer by using an extrusion manner (CPPless type, final product C-type, two-time extrusion manner).

Preferred embodiments of the above exemplary embodiment may be explained with reference to FIG. 16 to FIG. 18.

FIG. 16 is a schematic diagram illustrating a C-type cell pouch manufacturing process performing one aging on a final structure of a cell pouch film in a CPPless EC (Extrusion Coating)-based 1P4C process performing two-time extrusion according to another embodiment of the present invention.

As illustrated in FIG. 16, the CPPless EC (Extrusion Coating)-based 1P4C process performing two-time extrusion according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, after passing through a third coater (performing outer surface adhesive coating) ⑤ and a fourth coater (performing inner surface adhesive coating) ⑥, and being then dried in a drying unit ⑦, and if necessary, then cooled in a cooling zone, a structure of outer surface adhesive layer / outer surface treatment layer / metal layer / inner surface treatment layer / inner surface adhesive layer is formed.

Subsequently, an outer layer fabric is provided from a second unwinder, that is, an outer layer unwinder ⑧, and the outer layer is laminated in an outer layer lamination section ⑨ to form a structure of outer layer / outer surface adhesive layer / outer surface treatment layer / metal layer / inner surface treatment layer / inner surface adhesive layer. Up to this point, it is the same as FIG. 13.

Subsequently, in a first extrusion coater ⑩, an extrusion coating layer resin is extruded and provided to a first roll (for example, a cooling roll) to form an extrusion coating layer, and in a second extrusion coater ⑪, a sealant layer resin is extruded and provided to a second roll (for example, a cooling roll) to form a sealant layer, and in a rewinder (winding roll) ⑫, a final winding is then performed. Accordingly, a final structure obtained is outer layer / outer surface adhesive layer / outer surface treatment layer / metal layer / inner surface treatment layer / inner surface adhesive layer / extrusion coating layer / sealant layer (LIBP final product C-type). The final structure is provided to an aging room (aging chamber) ⑬ and undergoes one aging, and subsequently undergoes a procedure of slitting and shipping ⑭.

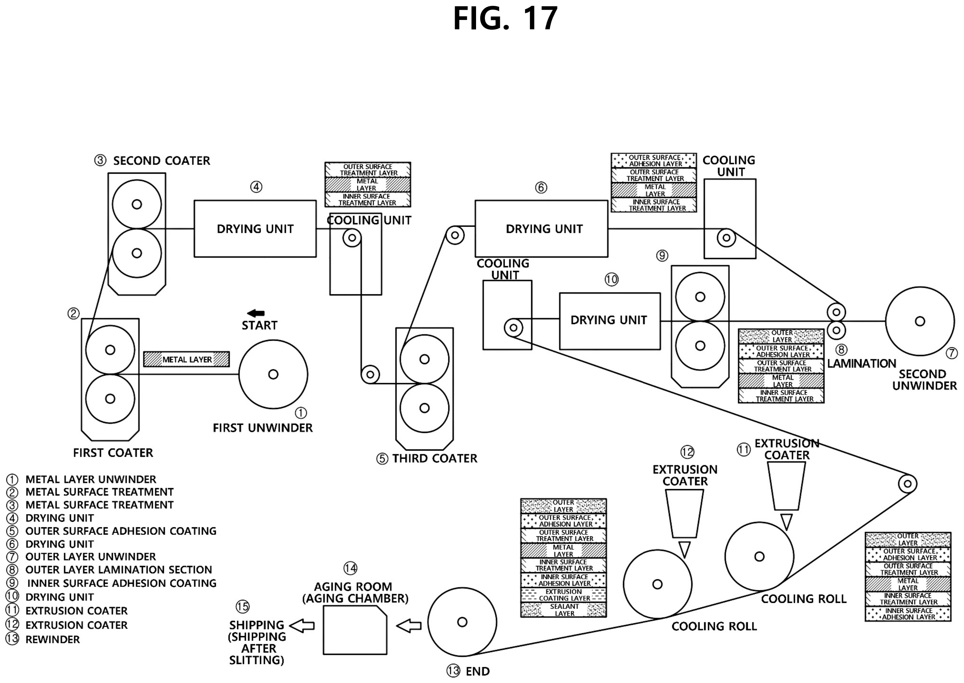

FIG. 17 is a schematic diagram illustrating a C-type cell pouch manufacturing process performing one aging on a final structure of a cell pouch film in a CPPless EC (Extrusion Coating)-based 1P4C process performing two-time extrusion according to another embodiment of the present invention.

As illustrated in FIG. 17, the CPPless EC (Extrusion Coating)-based 1P4C process performing two-time extrusion according to an embodiment of the present invention is configured as a single in-line process.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer.

Subsequently, it passes through a third coater (performing outer surface adhesive coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and after passing through a fourth coater (performing inner surface adhesive coating) ⑨, it is dried in a drying unit ⑩, and if necessary, cooled in a cooling zone, thereby forming a structure of outer layer / outer surface adhesion layer / outer surface treatment layer / metal layer / inner surface treatment layer / inner surface adhesive layer. Up to this point, it is the same as FIG. 14.

Subsequently, in a first extrusion coater ⑪, an extrusion coating layer resin is extruded and provided to a first roll (for example, a cooling roll) to form an extrusion coating layer, and in a second extrusion coater ⑫, a sealant layer resin is extruded and provided to a second roll (for example, a cooling roll) to form a sealant layer, and in a rewinder (winding roll) ⑬, a final winding is then performed. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber) ⑭, undergoes one aging, and subsequently undergoes a procedure of slitting and shipping ⑮.

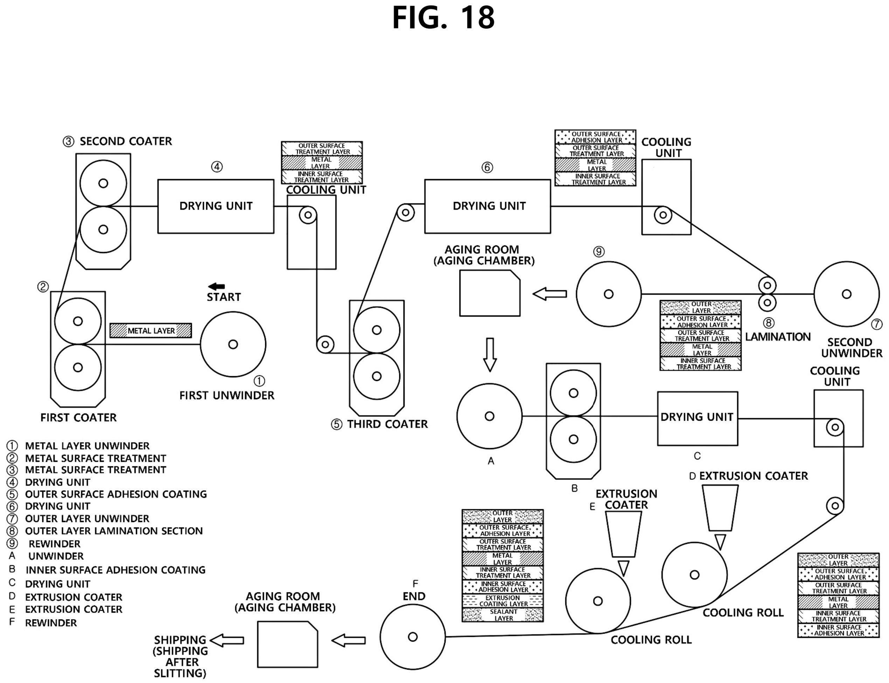

FIG. 18 is a schematic diagram illustrating a C-type cell pouch manufacturing process performing a total of two agings including one aging on a second intermediate structure after a first in-line process and one aging on a final structure after a second in-line process in a CPPless EC (Extrusion Coating)-based 1P3C process performing two-time extrusion according to another embodiment of the present invention.

With reference to FIG. 18, the CPPless EC (Extrusion Coating)-based 1P3C process performing two-time extrusion according to another embodiment of the present invention performs two in-line processes and only a total of two aging processes as follows: first in-line process → first aging → second in-line process → second aging.

First, from a metal layer unwinder ① of a roll-to-roll device, a metal layer fabric is unwound, and after passing through a first coater (performing surface treatment on one side of the metal layer) ② and a second coater (performing surface treatment on the other side of the metal layer) ③, it is dried in a drying unit ④, and if necessary, then cooled in a cooling zone, thereby forming a structure of outer surface treatment layer / metal layer / inner surface treatment layer. Subsequently, it passes through a third coater (performing outer surface adhesive coating) ⑤ and then directly undergoes a drying unit ⑥, and if necessary, cooled in a cooling zone. Accordingly, a structure of outer surface adhesion layer / outer surface treatment layer / metal layer / inner surface treatment layer is formed.

Subsequently, an outer layer fabric is provided from a second unwinder, that is, an outer layer unwinder ⑦, and an outer layer is laminated in an outer layer lamination section ⑧, and immediately wound in a rewinder (winding roll) ⑨ Accordingly, a structure obtained is a second intermediate structure, having outer layer / outer surface adhesion layer / outer surface treatment layer / metal layer / inner surface treatment layer. The second intermediate structure is provided to an aging room (aging chamber) and aged. As described above, the second intermediate structure is not to have an inner surface adhesion layer.

Subsequently, from a third unwinder (A), the second intermediate structure [outer layer / outer surface adhesion layer / outer surface treatment layer / metal layer / inner surface treatment layer] having undergone a first aging is unwound, and inner surface adhesive coating is performed by an inner adhesive coater (B), and after being dried in a drying unit (C), if necessary, cooled in a cooling zone. Accordingly, a structure obtained has outer layer / outer surface adhesion layer / outer surface treatment layer / metal layer / inner surface treatment layer / inner surface adhesive layer. Up to this point, it is the same as FIG. 15.

Subsequently, in a first extrusion coater (D), an extrusion coating layer resin is extruded and provided to a first roll (for example, a cooling roll) to form an extrusion coating layer, and in a second extrusion coater (E), a sealant layer resin is extruded and provided to a second roll (for example, a cooling roll) to form a sealant layer, and in a rewinder (winding roll) (F), a final winding is then performed. Accordingly, a final structure obtained is outer layer / outer surface adhesion layer / outer surface treatment layer / metal layer / inner surface treatment layer / inner surface adhesive layer / extrusion coating layer / sealant layer (LIBP final product C-type). This final structure is provided to an aging room (aging chamber), undergoes a second aging (a total of two agings), and subsequently undergoes a procedure of slitting and shipping.

### Common Application Matters of 1P3C or 1P4C

Meanwhile, in the procedure as described above, with reference to a 1P3C process or a 1P4C process, the following technical matters may be commonly applied.

That is, a cell pouch manufacturing method of a multi-coating manner such as a 1P3C process or a 1P4C process undergoes a double-sided dual coating step by a first coater and a second coater, a coating step by a third coater or by a third coater and a fourth coater, and a lamination step.

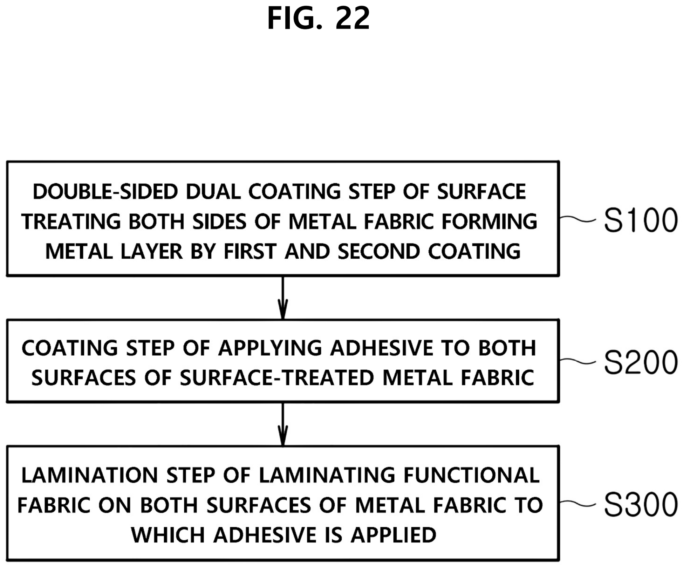

FIG. 22 explains a double-sided dual coating step (S100), an adhesive coating step (S200), and a lamination step (S300) in a cell pouch manufacturing method performing multi-type coating in an embodiment of the present invention.

The double-sided dual coating step (S100) is a procedure of surface treating by performing first and second coating on both surfaces of a metal fabric forming a metal layer. In such double-sided dual coating, a coating process is designed as a combined manner of 'Reverse-kiss' and 'Direct Gravure' coating, thereby allowing to consider even physical properties and changes of the coating solution. In addition, by configuring so as to adjust the positions of a 'Coating Roll' and a 'Doctor' with respect to a substrate contact surface, uniformity of coating and improvement of work speed may be enabled. In particular, in order to precisely control the coating agent, a chamber manner (sealed piping) is configured, thereby adjusting viscosity of the coating agent and fundamentally blocking inflow of foreign substance.

The adhesive coating step (S200) is a coating procedure by a third coater or by a third coater and a fourth coater, and is a procedure of applying an adhesive to one side surface or both surfaces of the surface-treated metal fabric by coating, and preparing for lamination while undergoing procedures such as drying and the like.

The lamination step (S300) is a procedure of laminating a functional fabric to one side surface or both surfaces of the metal fabric to which the adhesive has been applied. That is, a sealant layer fabric for stabilizing heat resistance, cold resistance, and the like of a cell is laminated to an inner side, and an outer layer fabric for heat resistance, pinhole resistance, abrasion resistance, and the like is laminated to an outer side.

Meanwhile, in a procedure of conveying each fabric, in order to minimize occurrence of foreign substance and scratch, both a tendency structure in which a substrate contact roll and a shaft are separated and driven, and an integral-type 'Shaft' structure may be applied in case of a guide roll.

In a general driving manner of a guide roll, rotation delivered from a motor is delivered to a shaft-integrated guide roll and driven at a 1:1 speed matched to the motor, whereas in a tendency driving manner, a shaft of the guide roll is separated so that a structure of mutually compensating fine rotational speed of rolls is provided, and the tendency driving manner may be applied to a necessary section.

In addition, in order to minimize occurrence of foreign substance and scratch during convey of a fabric, it is preferable to apply a suction roll to a tension adjustment section. In addition, in order to prevent foreign substance occurring during a run from attaching to a roll and causing external appearance defects (denting, scratching, etc.), a contact-type clean roll for removing foreign substances may be applied.

In an embodiment, convey of a fabric is performed by a driving roll, and all or some of the driving rolls may be suction rolls. The suction roll is provided with a plurality of holes to suck air from a peripheral surface. By sucking the air through the holes, a film is drawn into contact with the peripheral surface of the suction roll.

In an embodiment, tension applied to a fabric under a run by the suction roll may be 0.02 kgf/cm² to 2.5 kgf/cm².

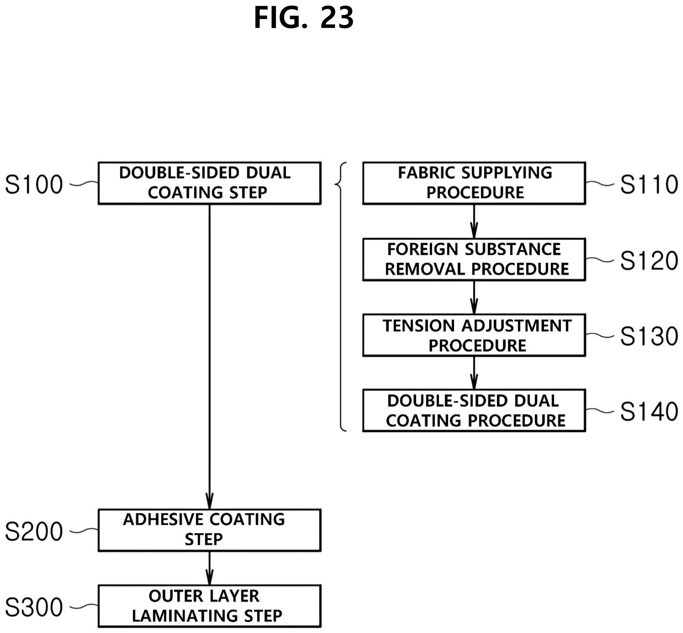

FIG. 23 is a flowchart illustrating a specific example of 'S100' in FIG. 22.

Specifically, in the double-sided dual coating step (S100), in a procedure (S110) of unwinding a wound metal fabric and supplying the unwound metal fabric, after controlling a foreign substance existing on a surface of the supplied metal fabric (S120), tension of the metal fabric having the foreign substance removed on the surface is adjusted (S130), and coating may be performed on both surfaces of the metal fabric in which constant tension is maintained (S140).

For example, in the double-sided dual coating procedure (S140), a first coating may be performed on one side surface of the metal fabric by applying aqueous-based and solvent-based coating solutions in a combined manner of direct coating and RKC (Reverse Kiss Coating), and a second coating may be performed on the other side surface of the metal fabric by applying a coating solution in a manner of RKC and film up/down coating.

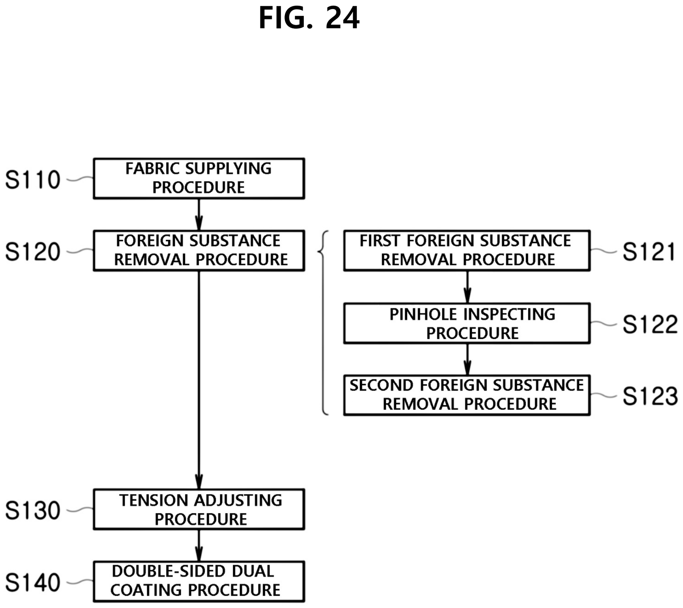

FIG. 24 is a flowchart illustrating a specific example of 'S120' in FIG. 22.

Specifically, the metal fabric may be prepared from, for example, aluminum, SUS, or the like. Therefore, in the foreign substance removal procedure (S120), a first foreign substance removal procedure (S1212) of performing discharge treatment on both surfaces of the metal fabric to remove oil may be undergone, and thereafter, whether pinholes occur on both surfaces of the metal fabric having oil removed may be identified (S122).

As a result of the identification, when no abnormalities are found, a second foreign substance removal procedure (S123) of removing a foreign substance occurring on both surfaces of the metal fabric by a roll manner may be performed.

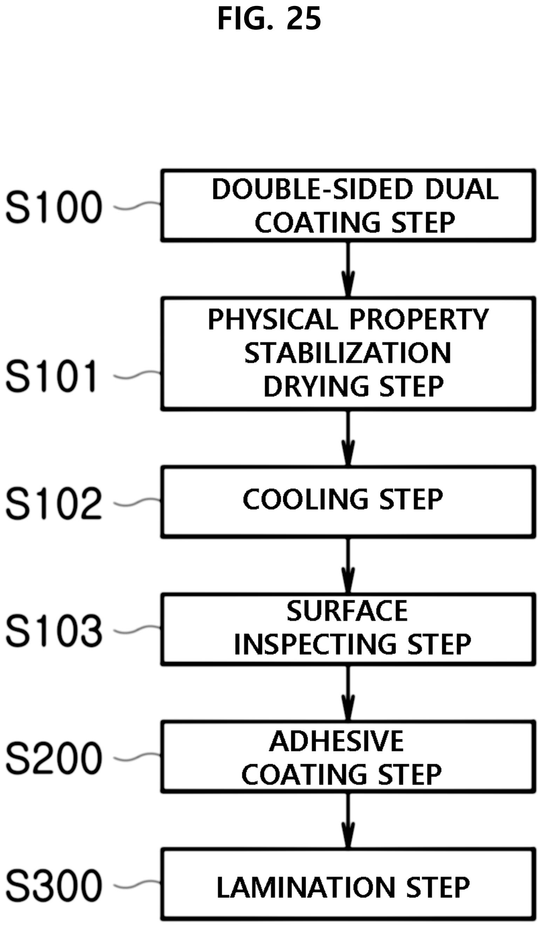

FIG. 25 is a flowchart illustrating another alternative embodiment of FIG. 22.

Specifically, when the double-sided dual coating step (S100) is completed, the metal fabric having both surfaces coated may be dried in a floating manner to stabilize physical properties (S101). In this case, a drying manner may apply an 'Air Floating" manner such that the coated substrate may be dried in a non-contact type in a state of being floated. Through this, the metal fabric coated on both surfaces may be dried while minimizing contact with components such as a convey roll or the like. Thereafter, the dried metal fabric is cooled (S102), and a surface of the cooled metal fabric may be inspected (S103).

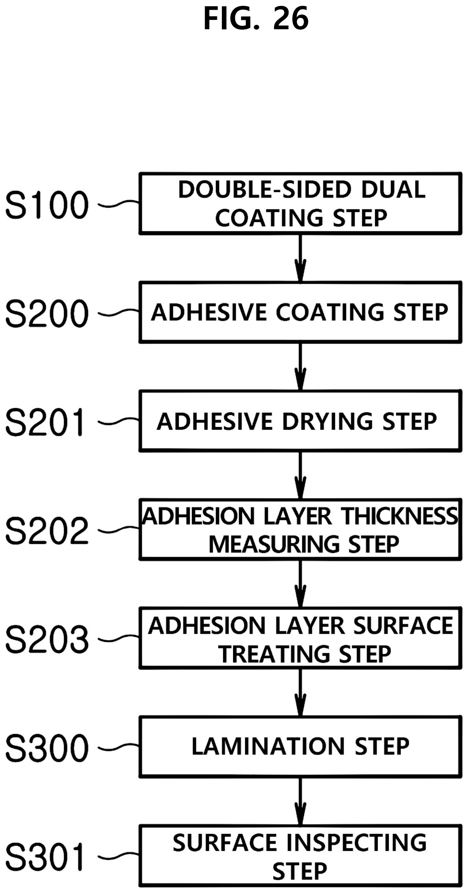

FIG. 26 is a flowchart illustrating another alternative embodiment of FIG. 22.

Specifically, after the adhesive coating step (S200), the metal fabric coated with an adhesive is dried to form an adhesion layer (S201), a thickness of the dried adhesion layer is measured (S202), and a surface of the adhesion layer may be corona-treated to strengthen an adhesive force (S203). Meanwhile, as described above, a functional fabric is a sealant fabric and/or a synthetic resin fabric, and the sealant fabric may be laminated on an inner surface of the metal fabric, and the synthetic resin fabric may be laminated on an outer surface of the metal fabric.

In other words, in the lamination step (S300), the sealant fabric may be laminated on the inner side of the metal fabric to form a sealant layer, and the synthetic resin fabric may be laminated on the outer side of the metal fabric to form an outer layer. Of course, as described above, without using a sealant film, a sealant layer may also be formed in an extrusion manner.

Finally, after the lamination step (S300), a surface inspection step (S301) of inspecting surfaces of the sealant layer and the outer layer may be performed.

### Additional description of 1P4C process

Meanwhile, a manufacturing method of a 1P4C process according to an embodiment of the present invention may include: performing a surface treatment task using a surface treatment device of a roll-to-roll device to manufacture a cell pouch film which is an external structure of a cell; performing a first drying task using a first drying device of the roll-to-roll device; performing a coating task using a coating device of the roll-to-roll device; performing a second drying task using a second drying device of the roll-to-roll device; performing a first laminating task using a first laminating device of the roll-to-roll device; performing a second laminating task using a second laminating device of the roll-to-roll device; performing an aging task using an aging device; and performing a slitting task using a slitting device.

Here, the surface treatment task to the second laminating task may be performed on a reference substrate on the basis of a single run of the reference substrate from an unwind roll toward a rewind roll in the roll-to-roll device, and the first laminating device and the second laminating device may be partially overlapped with each other in the roll-to-roll device or may be spaced apart from each other.

The surface treatment device, including a first surface treatment device and a second surface treatment device, performing the surface treatment task may include, in a driving state of the surface treatment device within the roll-to-roll device, coating a first surface treatment agent on one surface of the reference substrate using the first surface treatment device while the reference substrate, unwound from the unwind roll, is moved through a plurality of rolls in the first surface treatment device and through a plurality of rolls in the second surface treatment device, coating a second surface treatment agent on the other surface of the reference substrate using the second surface treatment device, and after coating the second surface treatment agent on the reference substrate, transferring the reference substrate coated with the surface treatment agent to the first drying device. Here, the reference substrate may include aluminum (Al) and the like.

The first surface treatment device and the second surface treatment device may individually be formed of a roll structure including direct gravure, reverse gravure, offset gravure, five rolls, reverse-kiss gravure, mayer rod, micro gravure, comma & slot die, or lip die.

Performing the first drying task when the reference substrate coated with the surface treatment agent is transferred from the surface treatment device may include, in a driving state of the first drying device within the roll-to-roll device, blowing first air between 100°C and 300°C to both surfaces of the reference substrate coated with the surface treatment agent in an air floating manner using the first drying device while the reference substrate coated with the surface treatment agent is moved from one side to the other side of the first drying device, and after the blowing of the first air to the reference substrate coated with the surface treatment agent, transferring the reference substrate coated and dried with the surface treatment agent to the coating device via at least one first guide roll together with a first cooling zone, and the first cooling zone may have at least one first cooling roll.

Performing the coating task, while the coating device includes a first coating device and a second coating device, when the reference substrate coated and dried with the surface treatment agent is transferred from the first drying device may include, in a driving state of the coating device within the roll-to-roll device, coating a first adhesive on one surface of the reference substrate coated and dried with the surface treatment agent using the first coating device while the reference substrate coated and dried with the surface treatment agent is moved through a plurality of rolls in the first coating device and through a plurality of rolls in the second coating device, coating a second adhesive on the other surface of the reference substrate coated and dried with the surface treatment agent using the second coating device, and after the coating of the second adhesive on the reference substrate coated and dried with the surface treatment agent, transferring the reference substrate coated with the adhesive to the second drying device.

The first coating device and the second coating device may individually be formed of a roll structure including direct gravure, reverse gravure, offset gravure, five rolls, reverse-kiss gravure, mayer rod, micro gravure, comma & slot die, or lip die.

Performing the second drying task when the reference substrate coated with the adhesive is transferred from the coating device may include, in a driving state of the second drying device within the roll-to-roll device, blowing second air between 50°C and 200°C to both surfaces of the reference substrate coated with the adhesive in an air floating manner using the second drying device while the reference substrate coated with the adhesive is moved from one side to the other side of the second drying device, and after the blowing of the second air to the reference substrate coated with the adhesive, transferring the reference substrate coated and dried with the adhesive to the first laminating device via a second cooling zone, and the second cooling zone may have at least one second cooling roll.

Performing the first laminating task, while the first laminating device includes a first auxiliary unwind roll and a laminating roll, and the second laminating device commonly includes the laminating roll in common together with the first laminating device, when the reference substrate coated and dried with the adhesive is transferred from the second drying device may include, in a driving state of the first laminating device within the roll-to-roll device, laminating an inner cover substrate to one surface of the reference substrate coated and dried with the adhesive in a dry lamination manner using heat and pressure at the laminating roll while the reference substrate coated and dried with the adhesive is moved to the laminating roll in the first laminating device, unwinding the inner cover substrate from the first auxiliary unwind roll in the first laminating device, and after laminating the inner cover substrate to the reference substrate coated and dried with the adhesive, allowing a laminated substrate to be engaged with the second laminating device.

For example, the inner cover substrate may include polypropylene, and the laminated substrate may be composed of the reference substrate laminated with the inner cover substrate, and may have the first adhesive or the second adhesive between the reference substrate and the inner cover substrate.

Performing the second laminating task, while the laminated substrate is a reference substrate laminated with an inner cover substrate, the second laminating device includes a second auxiliary unwind roll and a laminating roll, and the first laminating device includes the laminating roll in common together with the second laminating device, when the laminated substrate is transferred from the first laminating device, may include, in a driving state of the second laminating device within the roll-to-roll device, unwinding the outer cover substrate from the second auxiliary unwind roll of the second laminating device while moving the laminated substrate to the laminating roll in the second laminating device, laminating the outer cover substrate on the opposite side of the inner cover substrate in the laminated substrate at the laminating roll by using heat and pressure in a dry lamination manner, and after laminating the outer cover substrate on the laminated substrate, winding a combination substrate on the rewind roll.

For example, the outer cover substrate may include polyethylene terephthalate (PET) or nylon, and the combination substrate may be composed of the reference substrate laminated with the outer cover substrate and the inner cover substrate, having a first or second adhesive between the reference substrate and the inner cover substrate, and having a second or first adhesive between the reference substrate and the outer cover substrate.

Performing the aging task, while the combination substrate includes the reference substrate laminated with the outer cover substrate and the inner cover substrate, when the rewind roll on which the combination substrate is wound is transferred from the roll-to-roll device, may include, in a driving state of the aging device, exposing the combination substrate to a temperature between 30°C and 100°C in a vacuum atmosphere while seating the rewind roll on which the combination substrate is wound within the aging device.

Performing the slitting task, while the aged combination substrate includes the reference substrate laminated and aged with the outer cover substrate and the inner cover substrate, when the rewind roll having the combination substrate aged in a wound state from the aging device is transferred, may include, in a driving state of the slitting device, unwinding the aged combination substrate from the rewind roll toward the slitting device, while moving the aged combination substrate within the slitting device, forming a plurality of fragmented combination substrates from the aged combination substrate through repeated cutting of the aged combination substrate according to the specifications of the cell using a slitter of the slitting device, and collecting the plurality of fragmented combination substrates using a conveyor belt of the slitting device.

An exemplary embodiment will be described in more detail through the drawings.

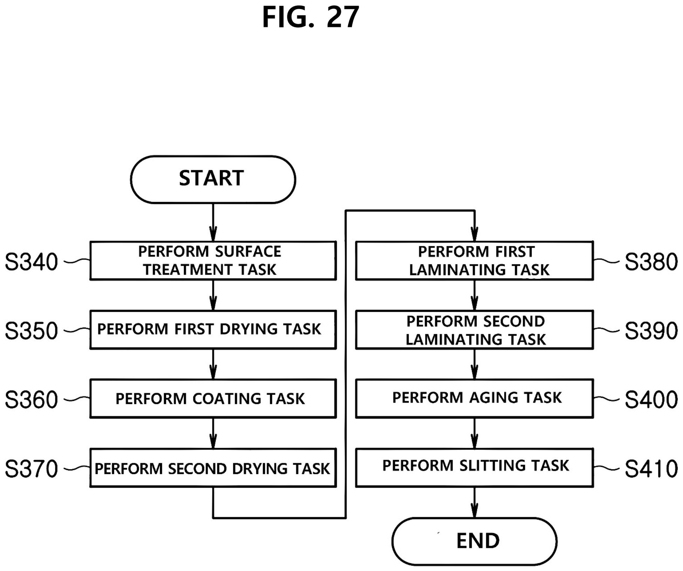

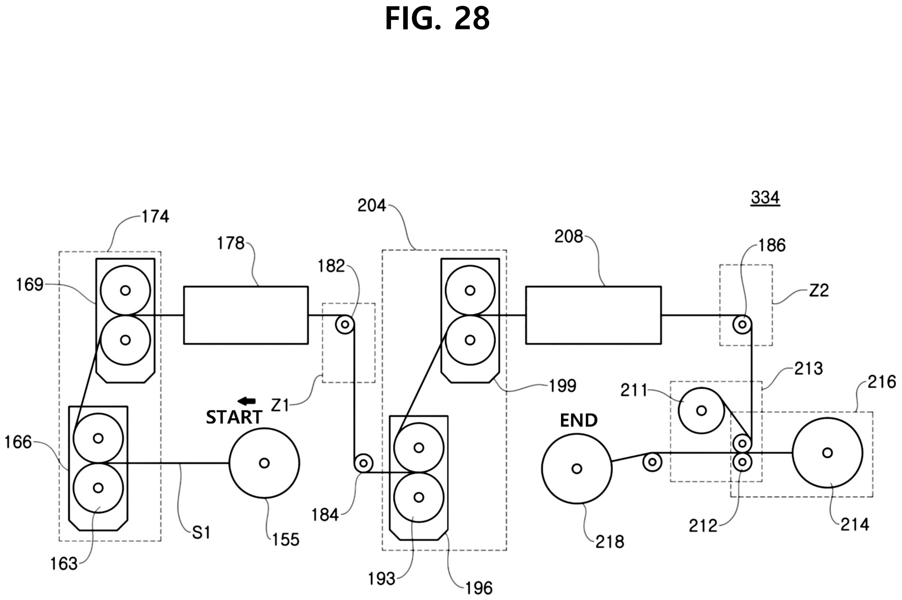

FIG. 27 is a flowchart illustrating a manufacturing method of a cell pouch film according to an alternative embodiment of the present invention, and FIG. 28 is a schematic diagram illustrating a roll-to-roll device performing the manufacturing method of the cell pouch film of FIG. 27.

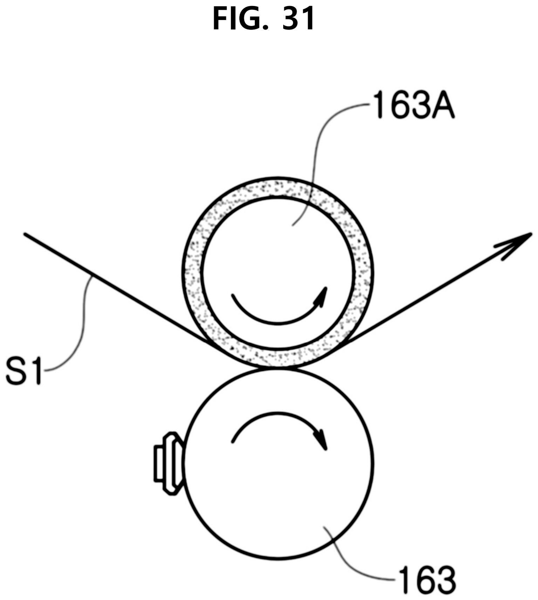

In addition, FIGS. 31 to 39 are schematic diagrams illustrating roll structures selectively adopted in a surface treatment device or a coating device in the roll-to-roll device of FIG. 28. In this case, FIGS. 27 and 28 disclose a roll-to-roll device for laminating an inner cover substrate and an outer cover substrate on a reference substrate in a dry lamination manner.

With reference to FIGS. 27 and 28 and FIGS. 31 to 39, the manufacturing method of the cell pouch of the embodiment, when viewed schematically, includes: performing a surface treatment task (S340) using a surface treatment device 174 of a roll-to-roll device 334, performing a first drying task (S350) using a first drying device 178 of the roll-to-roll device 334, performing a coating task (S360) using a coating device 204 of the roll-to-roll device 334, and performing a second drying task (S370) using a second drying device 208 of the roll-to-roll device 334.

In addition, the manufacturing method of the cell pouch, in order to make an outer structure of a cell such as a secondary battery, when viewed schematically, further includes: performing a first laminating task (S380) using a first laminating device 213 of the roll-to-roll device 334, performing a second laminating task (S390) using a second laminating device 216 of the roll-to-roll device 334, performing an aging task (S400) using an aging device (not illustrated), and performing a slitting task (S410) using a slitting device (not illustrated).

Here, the surface treatment task to the second laminating task is performed on the reference substrate S1 on the basis of one run from an unwind roll 155 toward a rewind roll 218 in the roll-to-roll device 334. The reference substrate S1 provides mechanical strength to the cell and blocks gas from entering and exiting through the inside and outside of the cell. The first laminating device 213 and the second laminating device 216 are partially overlapped in the roll-to-roll device 334.

More specifically, while the surface treatment device 174 includes a first surface treatment device 166 and a second surface treatment device 169, performing the surface treatment task (S340), may include, in a driving state of the surface treatment device 174 within the roll-to-roll device 334, coating a first surface treatment agent (not illustrated) on one surface of the reference substrate S1 using the first surface treatment device 166 while the reference substrate S1, unwound from the unwind roll 155, is moved through a plurality of rolls 163 in the first surface treatment device 166 and through a plurality of rolls 163 in the second surface treatment device 169, coating a second surface treatment agent (not illustrated) on the other surface of the reference substrate S1 using the second surface treatment device 169, and after coating the second surface treatment agent on the reference substrate S1, transferring the reference substrate coated with the surface treatment agent to the first drying device 178. The reference substrate S1 may include aluminum (Al) and the like. The first and second surface treatment agents form a chemical conversion coating on the reference substrate S1 to form an etched surface on the surface of the reference substrate S 1. The first and second surface treatment agents improve an adhesive force of the reference substrate S1 with respect to the outer cover substrate and the inner cover substrate, which will be described later.

Here, the unwind roll 155 and the surface treatment device 174 may have a clean roll between the unwind roll 155 and the surface treatment device 174 on the reference substrate S1. The clean roll functions to remove a foreign substance positioned on the reference substrate S1. The first surface treatment device 166 and the second surface treatment device 169 are individually formed of a roll structure including direct gravure, reverse gravure, offset gravure, five rolls, reverse-kiss gravure, mayer rod, micro gravure, comma & slot die, or lip die.

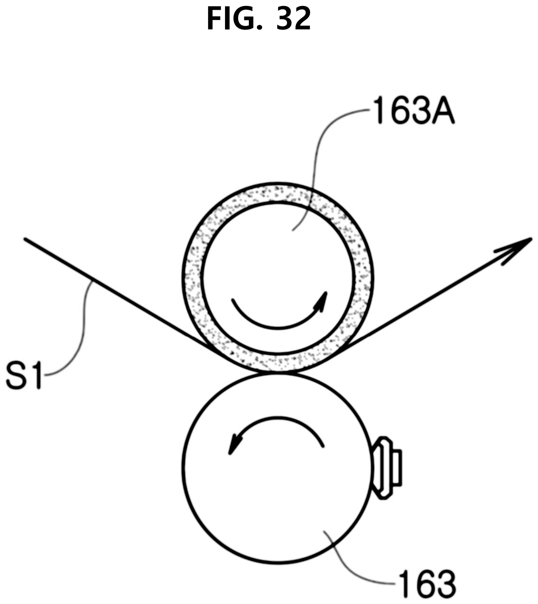

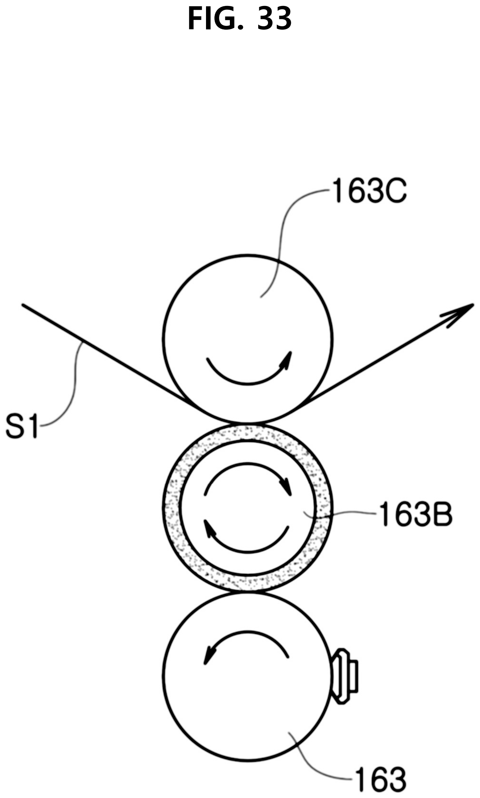

Here, the direct gravure includes, in FIG. 31, a gravure roll 163 and a pressure roll 163A, and has the same rotation direction of the gravure roll 163 and the pressure roll 163A as the run direction of the reference substrate. The reverse gravure includes, in FIG. 32, a gravure roll 163 and a pressure roll 163A, and has different rotation directions of the gravure roll 163 and the pressure roll 163A. The offset gravure includes, in FIG. 33, a gravure roll 163, an offset roll 163B, and a pressure roll 163C, and positions the offset roll 163B between the gravure roll 163 and the pressure roll 163C.

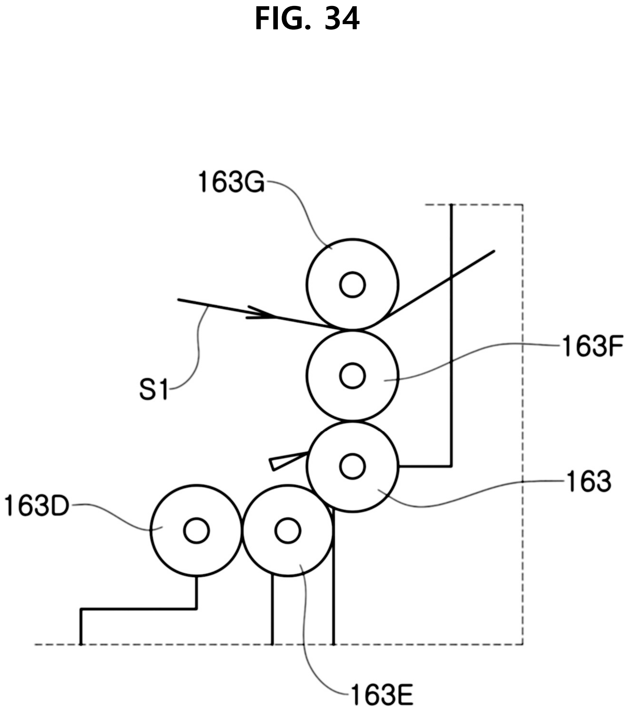

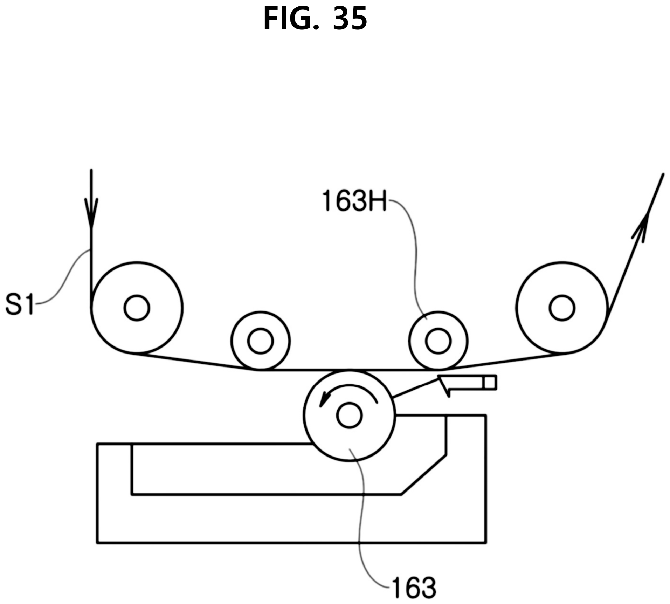

The five rolls include, in FIG. 34, two metering rolls 163D and 163E at a lower side, a pressure roll 163F and a back roll 163G at an upper side, based on a transfer roll 163, and transfers a coating solution from the lower side toward the upper side. The reverse-kiss gravure includes, in FIG. 35, a gravure roll 163 and a plurality of kiss rolls 163H, and positions the plurality of kiss rolls 163H at left and right of an upper side of the gravure roll 163.

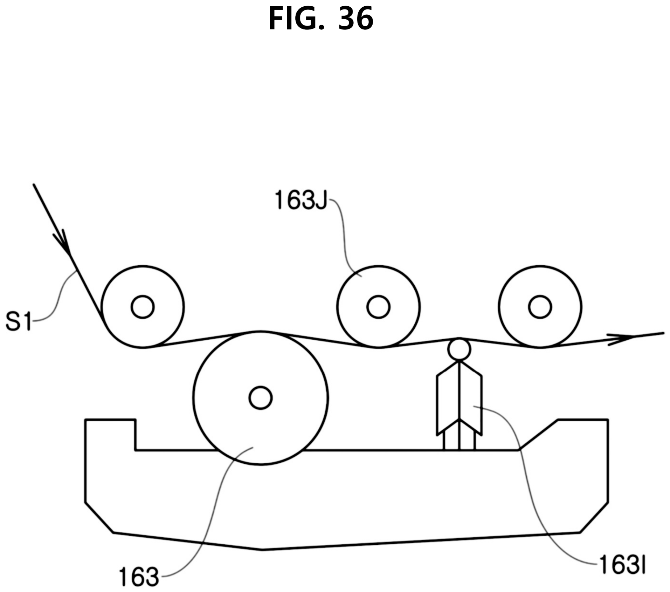

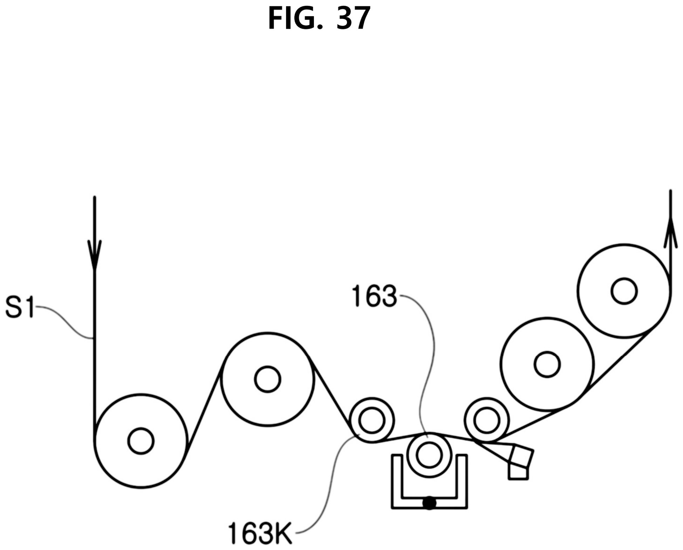

The mayer rod includes, in FIG. 36, a gravure roll 163 and a mayer rod 163I below the reference substrate S1, and a plurality of hold down rolls 163J above the reference substrate S1, and coats a coating solution on the reference substrate S1 using the gravure roll 163 while forming a contact angle with the plurality of hold down rolls 163J, and scrapes the coating solution using the mayer rod 163I. The micro gravure includes, in FIG. 37, a micro gravure roll 163 below the reference substrate and a plurality of kiss rolls 163K on the reference substrate.

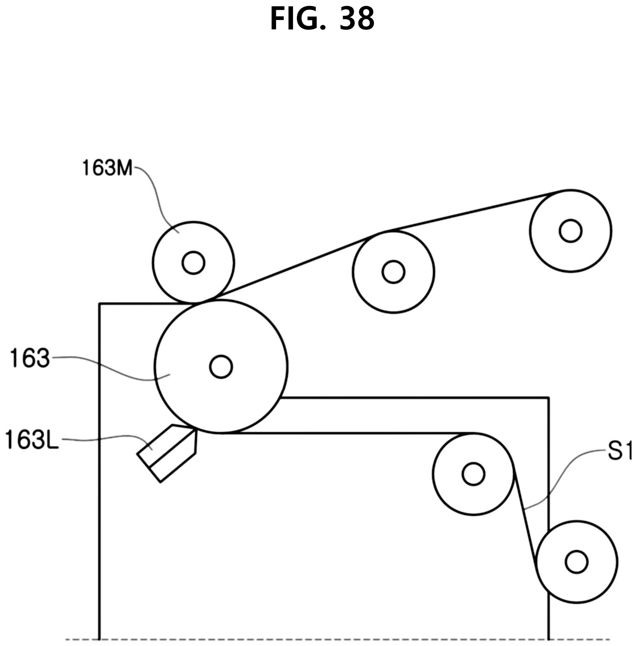

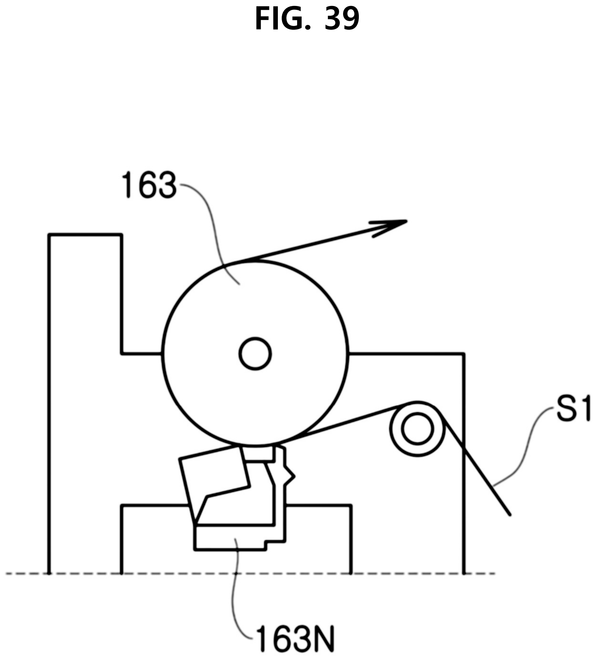

The comma & slot die includes, in FIG. 38, a backup roll 163 at one side portion of the reference substrate S1, and a slot die 163L and a comma edge roll 163M at the other side portion of the reference substrate S1, and extrudes a coating solution from the slot die 163L. The lip die includes, in FIG. 39, a backup roll 163 and a lip 163N at one side portion of the reference substrate S1, and extrudes a coating solution at the lip 163N in close contact with the backup roll 163.

Next, performing the first drying task (S350), when the first drying device 178 receives the reference substrate coated with the surface treatment agent from the surface treatment device 174, may include, in a driving state of the first drying device 178 within the roll-to-roll device 334, blowing first air between 100°C and 300°C onto both surfaces of the reference substrate coated with the surface treatment agent in an air floating manner using the first drying device 178, while moving the reference substrate coated with the surface treatment agent from one side toward the other side of the first drying device 178, and after the blowing of the first air onto the reference substrate coated with the surface treatment agent, transferring the reference substrate coated and dried with the surface treatment agent to the coating device 204 via at least one guide roll 184 together with a first cooling zone Z1.

Here, the first cooling zone Z1 has at least one first cooling roll 182. The first cooling zone Z1 lowers the temperature of the reference substrate coated and dried with the surface treatment agent, thereby eliminating thermal deformation of the adhesive on the reference substrate coated and dried with the surface treatment agent at the coating device 204.

The guide roll 184 may be a suction roll. The suction roll functions to provide a driving friction force to the reference substrate S1 by making the internal pressure smaller compared to the external pressure of the roll. Next, when the coating device 204 receives the reference substrate coated and dried with the surface treatment agent from the first drying device 178, while the coating device 204 includes a first coating device 196 and a second coating device 199, performing the coating task (S360), may include, in a driving state of the coating device 204 within the roll-to-roll device 334, coating a first adhesive (not illustrated in drawings) on one surface of the reference substrate coated and dried with the surface treatment agent using the first coating device 196 while the reference substrate coated and dried with the surface treatment agent is moved through a plurality of rolls 193 in the first coating device 196 and through a plurality of rolls 193 in the second coating device 199, coating a second adhesive (not illustrated in drawings) on the other surface of the reference substrate coated and dried with the surface treatment agent using the second coating device 199, and after coating the second adhesive on the reference substrate coated and dried with the surface treatment agent, transferring the adhesive-coated reference substrate to the second drying device 208.

The first coating device 196 and the second coating device 199 are individually formed of roll structures including direct gravure, reverse gravure, offset gravure, five-roll, reverse-kiss gravure, Mayer rod, micro gravure, comma & slot die, or lip die, as illustrated in FIG. 31 to FIG. 39. Accordingly, in FIG. 31 to FIG. 39, the reference numerals "163 or 163 (alphabet)" may be replaced with the reference numerals "193 or 193 (alphabet)."

Next, when the second drying device 208 receives the adhesive-coated reference substrate from the coating device 204, performing the second drying task (S370) may include, in a driving state of the second drying device 208 within the roll-to-roll device 334, blowing second air between 50°C and 200°C on both surfaces of the adhesive-coated reference substrate by using the second drying device 208 in an air floating manner while moving the adhesive-coated reference substrate from one side toward the other side of the second drying device 208, and after the blowing of the second air on the adhesive-coated reference substrate, transferring the adhesive-coated and dried reference substrate to the first laminating device 213 via the second cooling zone Z2. The second cooling zone Z2 may have at least one second cooling roll 186.

When the first laminating device 213 receives the adhesive-coated and dried reference substrate from the second drying device 208, while the first laminating device 213 includes a first auxiliary unwind roll 211 and a laminating roll 212, and the second laminating device 216 includes the laminating roll 212 in common together with the first laminating device 213, performing the first laminating task (S380), may include, in a driving state of the first laminating device 213 within the roll-to-roll device 334, laminating an inner cover substrate (not illustrated in drawings) unwound from the first auxiliary unwind roll 211 of the first laminating device 213 onto one surface of the adhesive-coated and dried reference substrate at the laminating roll 212 by using heat and pressure in a dry lamination manner, while moving the adhesive-coated and dried reference substrate to the laminating roll 212 within the first laminating device 213, and after laminating the inner cover substrate onto the adhesive-coated and dried reference substrate, allowing the laminated substrate to be engaged with the second laminating device 216.

The inner cover substrate contacts the contents of the cell and has heat resistance, moisture resistance, and heat sealing properties. The inner cover substrate may include polypropylene (PP). The laminated substrate may be composed of the reference substrate laminated with the inner cover substrate, and has a first adhesive or a second adhesive between the reference substrate and the inner cover substrate.

When the second laminating device 216 receives the laminated substrate from the first laminating device 213, while the laminated substrate is the reference substrate laminated with the inner cover substrate, and the second laminating device 216 includes a second auxiliary unwind roll 214 and the laminating roll 212, and the first laminating device 213 includes the laminating roll 212 in common together with the second laminating device 216, performing the second laminating task (S390), may include, in a driving state of the second laminating device 216 within the roll-to-roll device 334, laminating an outer cover substrate (not illustrated in drawings) unwound from the second auxiliary unwind roll 214 of the second laminating device 216 onto the opposite side of the inner cover substrate of the laminated substrate at the laminating roll 212 by using heat and pressure in a dry lamination manner, while moving the laminated substrate to the laminating roll 212 within the second laminating device 216, and after laminating the outer cover substrate onto the laminated substrate, winding the combination substrate around the rewind roll 218.

Here, the outer cover substrate has heat resistance, pinhole resistance, and abrasion resistance so as to protect the reference substrate S1 from the external environment of the cell. The outer cover substrate may include polyethylene terephthalate (PET) or nylon. The combination substrate is composed of the reference substrate laminated with the outer and inner cover substrates, and has a first adhesive or a second adhesive between the reference substrate S1 and the inner cover substrate, and has a second adhesive or a first adhesive between the reference substrate S1 and the outer cover substrate.

Next, when the aging device receives a rewind roll wound with the combination substrate from the roll-to-roll device 334, while the combination substrate includes the reference substrate laminated with the outer and inner cover substrates, performing the aging task (S400) may include, in a driving state of the aging device, exposing the combination substrate to a temperature between 30°C and 100°C in a vacuum atmosphere while seating the rewind roll wound with the combination substrate in the aging device.

Subsequently, when the slitting device receives a rewind roll having the combination substrate aged in a wound state from the aging device, while the aged combination substrate includes the aged reference substrate laminated with the outer and inner cover substrates, performing the slitting task (S410), may include, in a driving state of the slitting device, unwinding the aged combination substrate from the rewind roll toward the slitting device, while moving the aged combination substrate within the slitting device, forming a plurality of fragmented combination substrates from the aged combination substrate, through repeated cutting of the aged combination substrate according to the specifications of the cell by using the slitter of the slitting device, and collecting the plurality of fragmented combination substrates using the conveyor belt of the slitting device.

Meanwhile, performing the first laminating task (S380) may be performed simultaneously with the second laminating task (S390) or may be performed later than the second laminating task (S390).

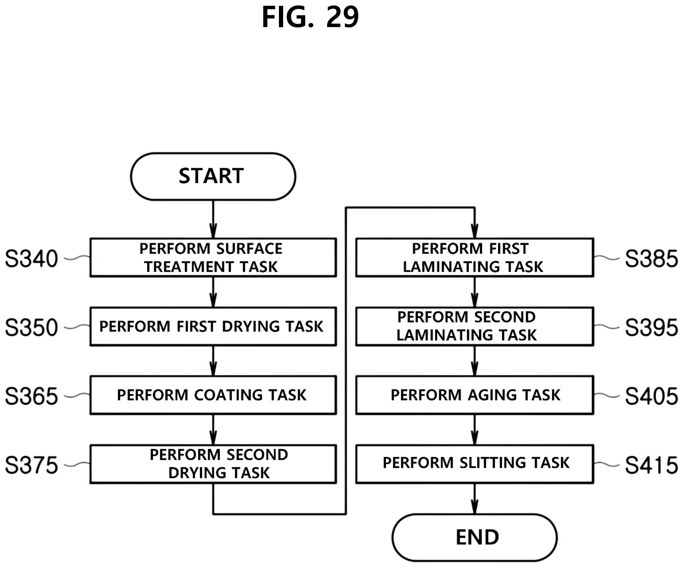

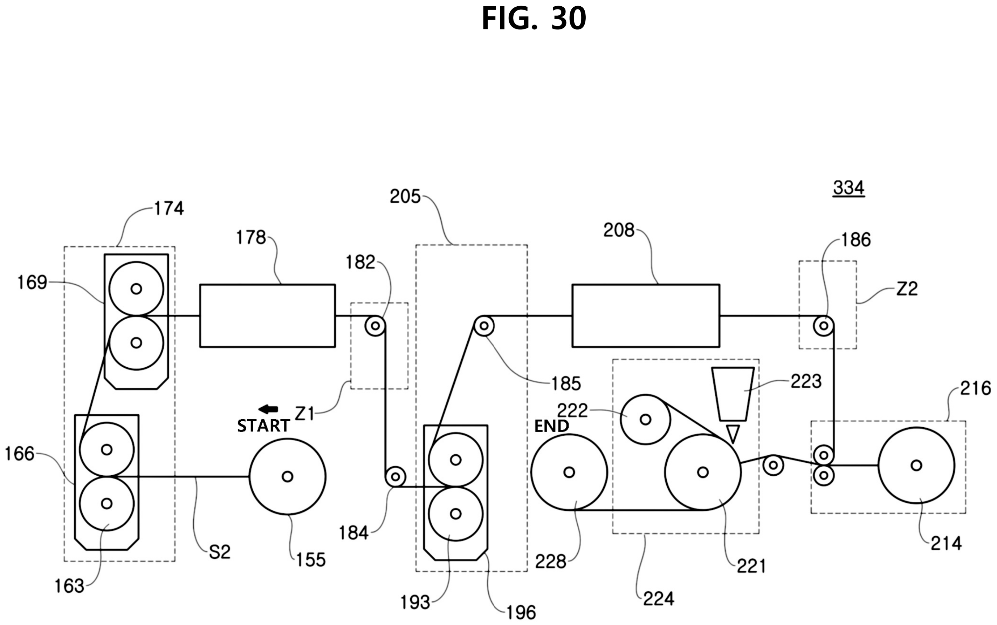

FIG. 29 is a flowchart illustrating a manufacturing method of a cell pouch according to an alternative embodiment, and FIG. 30 is a schematic diagram illustrating a roll-to-roll device performing the manufacturing method of the cell pouch of FIG. 29.

In this case, FIG. 29 and FIG. 30 disclose a roll-to-roll device for laminating an outer cover substrate onto a reference substrate in a dry lamination manner and laminating an inner cover substrate onto the reference substrate in an extrusion manner. In addition, FIG. 29 and FIG. 30 employ the same members for the same members as in FIG. 27 and FIG. 28 whenever possible.

With reference to FIG. 29 and FIG. 30, the manufacturing method of the cell pouch according to the embodiment includes, when viewed schematically, performing a surface treatment task using the surface treatment device 174 of the roll-to-roll device 338 (S340), performing a first drying task using the first drying device 178 of the roll-to-roll device 338 (S350), performing a coating task using the coating device 205 of the roll-to-roll device 338 (S365), and performing a second drying task using the second drying device 208 of the roll-to-roll device 338 (S375).

In addition, the manufacturing method of the cell pouch includes, when viewed schematically, performing a first laminating task using the first laminating device 216 of the roll-to-roll device 338 (S385), performing a second laminating task using the second laminating device 224 of the roll-to-roll device 338 (S395), performing an aging task using an aging device (not illustrated in drawings) (S405), and performing a slitting task using a slitting device (not illustrated in drawings) (S415). Here, the surface treatment task to the second laminating task is performed on the reference substrate S2 on the basis of one run from the unwind roll 155 toward the rewind roll 228 in the roll-to-roll device 338. The first laminating device 216 and the second laminating device 224 may be spaced apart from each other in the roll-to-roll device 338.

In more detail, first, while the surface treatment device 174 includes the first surface treatment device 166 and the second surface treatment device 169, performing the surface treatment task (S340) may include, in a driving state of the surface treatment device 174 within the roll-to-roll device 338, coating a first surface treatment agent on one surface of the reference substrate S2 using the first surface treatment device 166 while the reference substrate S2, unwound from the unwind roll 155, is moved through a plurality of rolls 163 in the first surface treatment device 166 and through a plurality of rolls 163 in the second surface treatment device 169, coating a second surface treatment agent on the other surface of the reference substrate S2 using the second surface treatment device 169, and after coating the second surface treatment agent on the reference substrate S2, transferring the reference substrate coated with the surface treatment agent to the first drying device 178. The reference substrate S2 may include aluminum (Al) and the like.

Here, the unwind roll 155 and the surface treatment device 174 may have a clean roll between the unwind roll 155 and the surface treatment device 174 on the reference substrate S2.

The first surface treatment device 166 and the second surface treatment device 169 may be individually, as illustrated in FIGS. 31 to 39, formed of roll structures including direct gravure, reverse gravure, offset gravure, five rolls, reverse-kiss gravure, mayer rod, micro gravure, comma & slot die, or lip die. The roll structure of the individual surface treatment device 166 or 169 has been described in detail in FIGS. 27 and 28.

Next, when the first drying device 178 receives the reference substrate coated with the surface treatment agent from the surface treatment device 174, performing the first drying task (S350) may include, in a driving state of the first drying device 178 within the roll-to-roll device 338, blowing first air between 100°C and 300°C to both surfaces of the reference substrate coated with the surface treatment agent in an air floating manner using the first drying device 178, while moving the reference substrate coated with the surface treatment agent from one side toward the other side of the first drying device 178, and after blowing the first air to the reference substrate coated with the surface treatment agent, transferring the reference substrate coated and dried with the surface treatment agent to the coating device 205 via at least one guide roll together with the first cooling zone Z1. Here, the first cooling zone Z1 has at least one first cooling roll 182. The guide roll 184 may be a suction roll.

Next, when the coating device 205 receives the reference substrate coated and dried with the surface treatment agent from the first drying device 178, performing the coating task (S365) may include, in a driving state of the coating device 205 within the roll-to-roll device 338, coating an adhesive on one surface of the reference substrate coated and dried with the surface treatment agent using a plurality of coating rolls 193 within the coating unit 196 while moving the reference substrate coated and dried with the surface treatment agent to the coating unit 196 within the coating device 205 and at least one guide roll 185, and after coating the adhesive on the reference substrate coated and dried with the surface treatment agent, transferring the reference substrate coated with the adhesive to the second drying device 208.

The coating unit 196 is formed of roll structures including direct gravure, reverse gravure, offset gravure, five rolls, reverse-kiss gravure, mayer rod, micro gravure, comma & slot die, or lip die. The roll structure has been described in detail in FIGS. 27 and 28.

Next, when the second drying device 208 receives the adhesive-coated reference substrate from the coating device 205, performing the second drying task (S375) may include, in a driving state of the second drying device 208 within the roll-to-roll device 338, blowing second air between 50°C and 200°C on both surfaces of the adhesive-coated reference substrate by using the second drying device 208 in an air floating manner while moving the adhesive-coated reference substrate from one side toward the other side of the second drying device 208, and after the blowing of the second air on the adhesive-coated reference substrate, transferring the adhesive-coated and dried reference substrate to the first laminating device 216 via the second cooling zone Z2. Here, the second cooling zone Z2 includes at least one second cooling roll 186.

Next, when the first laminating device 216 receives the reference substrate coated and dried with the adhesive from the second drying device 208, while the first laminating device 216 includes the auxiliary unwind roll 214 and the laminating roll 212, performing the first laminating task (S385) may include, in a driving state of the first laminating device 216 within the roll-to-roll device 338, laminating an outer cover substrate (not illustrated in the drawing) to one surface of the reference substrate coated and dried with the adhesive by unwinding the outer cover substrate from the auxiliary unwind roll 214 within the first laminating device 216 and using heat and pressure in a dry lamination manner at the laminating roll 212 while moving the reference substrate coated and dried with the adhesive to the laminating roll 212 within the laminating device 216, and after laminating the outer cover substrate to the reference substrate coated and dried with the adhesive, transferring the laminated substrate to the second laminating device 224.

Here, the outer cover substrate may include polyethylene terephthalate (PET) or nylon. The laminated substrate is composed of the reference substrate laminated with the outer cover substrate, and has an adhesive between the reference substrate S2 and the outer cover substrate.

Next, when the second laminating device 224 receives the laminated substrate from the first laminating device 216, while the second laminating device 224 includes a third cooling roll 221, a second auxiliary unwind roll 222, and an extrusion coater 223 and the laminated substrate includes the reference substrate laminated with the outer cover substrate, performing the second laminating task (S395) may include, in a driving state of the second laminating device 224 within the roll-to-roll device 338, laminating an inner cover substrate to the laminated substrate by unwinding a film-form inner cover substrate from the second auxiliary unwind roll 222 within the second laminating device 224 and extruding a heat-melted state of inner cover substrate from the extrusion coater 223 while moving the laminated substrate to the third cooling roll 221 within the second laminating device 224, and cooling the film-type inner cover substrate and the heat-melted state of inner cover substrate on the third cooling roll 221, and after laminating the inner cover substrate to the laminated substrate, winding the combination substrate on the rewind roll 228.

Here, the inner cover substrate is positioned, in the laminated substrate, on the opposite side of the outer cover substrate with reference to the reference substrate S2, and may include polypropylene. The combination substrate is composed of the reference substrate laminated with the outer and inner cover substrates, and has an adhesive between the reference substrate S2 and the outer cover substrate.

Next, when the aging device receives a rewind roll wound with the combination substrate from the roll-to-roll device 338, while the combination substrate includes the reference substrate laminated with the outer and inner cover substrates, performing the aging task (S405) may include, in a driving state of the aging device, exposing the combination substrate to a temperature between 30°C and 100°C in a vacuum atmosphere while seating the rewind roll wound with the combination substrate in the aging device.

Thereafter, when the slitting device receives a rewind roll having the combination substrate aged in a wound state from the aging device, while the aged combination substrate includes the reference substrate laminated with the outer and inner cover substrates, performing the slitting task (S415), may include, in a driving state of the slitting device, forming a plurality of fragmented combination substrates from the aged combination substrate through repeated cutting of the aged combination substrate according to the specifications of the cell by using a slitter of the slitting device, while unwinding the aged combination substrate from the rewind roll 228 toward the slitting device and moving the aged combination substrate in the slitting device, and collecting the plurality of fragmented combination substrates using a conveyor belt of the slitting device.

### Manufactured cell pouch film

The final structure of a cell pouch film obtained by the exemplary embodiments of the present invention may have outer cover substrate (or outer layer) / outer surface adhesion layer (or first adhesive layer) / outer surface treatment layer / reference substrate (or barrier layer) / inner surface treatment layer / inner surface adhesive layer (or second adhesive layer) and/or extrusion coating layer / inner cover substrate (or sealant layer), and, for example, may have three types as illustrated in FIGS. 19 to 22.

That is, the final structure of type A may be configured with outer cover substrate (or outer layer) / outer surface adhesion layer (or first adhesive layer) / outer surface treatment layer / reference substrate (or barrier layer) / inner surface treatment layer / inner surface adhesive layer (or second adhesive layer) / inner cover substrate (or sealant layer) (see FIG. 19).

In addition, the final structure of type B may be configured with outer cover substrate (or outer layer) / outer surface adhesion layer (or first adhesive layer) / outer surface treatment layer / reference substrate (or barrier layer) / inner surface treatment layer / extrusion coating layer / inner cover substrate (or sealant layer) (see FIG. 20).

In addition, the final structure of type C may be configured with outer cover substrate (or outer layer) / outer surface adhesion layer (or first adhesive layer) / outer surface treatment layer / reference substrate (or barrier layer) / inner surface treatment layer / inner surface adhesive layer (or second adhesive layer) / extrusion coating layer / inner cover substrate (or sealant layer) (see FIG. 21).

The material and thickness of each layer of the above-described cell pouch film are not limited as long as they can be manufactured as a film for a cell pouch, but, for example, may include the following configuration.

That is, the barrier layer is a layer having a function of blocking water vapor or air from the outside of the battery, gas generated inside the battery, and/or moisture. To this end, in an embodiment, the barrier layer may include a metal layer and surface treatment layers uniformly coated on both surfaces of the metal layer, and the metal layer may be a metal thin film or a metal deposition layer. The metal thin film may be, for example, a metal foil. The metal deposition layer may be formed by vacuum-depositing metal on a separate plastic film, for example, a film such as polyethylene terephthalate (PET), polyethylene (PE), polypropylene (PP), or the like.

In an embodiment, the metal of the metal layer is not limited as long as it has the blocking performance as described above, but may include, for example, one or more (single metal or a mixture of a single metal) selected from the group consisting of aluminum (Al), iron (Fe), copper (Cu), nickel (Ni), tin (Sn), zinc (Zn), indium (In), tungsten (W), and the like, alloys of two or more selected therefrom, or the like. Specifically, the metal may include one or more selected from the group consisting of aluminum or alloys thereof, titanium or alloys thereof, tungsten or alloys thereof, molybdenum or alloys thereof, copper or alloys thereof, and stainless steel. More specifically, it may include aluminum. In an embodiment, the surface treatment layer may be a surface treatment layer by phosphoric acid, chromium, zirconium, cerium, lanthanum, scandium, yttrium, or the like in order to provide corrosion resistance of metal.

In an embodiment, the barrier layer may have a thickness of 20 µm to 80 µm. When the thickness of the barrier layer is less than 20 µm, pinholes, microcracks, or the like may occur during processes such as forming or the like, making it difficult to secure safety, and when the thickness of the barrier layer exceeds 80 µm, the energy density may be reduced during manufacture of battery.

The outer layer is a layer having heat resistance, abrasion resistance, chemical resistance, and the like in order to protect the barrier layer. To this end, in an embodiment, the outer layer may include one or more resins selected from the group consisting of one or more resins selected from nylon resins, polyethylene terephthalate (PET), polybutylene terephthalate (PBT), and the like. More specifically, it may include stretched nylon. In an embodiment, the outer layer may have a thickness of 5 µm to 40 µm. The outer layer may be composed of a plurality of layers.

The sealant layer is an inner layer that, after the cell is embedded, is adhered by heat to provide sealing properties. In an embodiment, the sealant layer may include a heat seal resin, that is, a sealing resin for heat sealing. Specifically, the sealant layer may include one or more selected from the group consisting of polyolefins such as polypropylene (PP), polyethylene (PE), etc., copolymers thereof, terpolymers or derivatives thereof, and ethylene vinyl acetate (EVA). The copolymer or terpolymer may include an ethylene/propylene copolymer or ethylene/propylene/butadiene terpolymer, or the like. In an embodiment, the sealant layer may have a thickness of 20 µm to 100 µm. The sealant layer may be composed of a plurality of layers.

The outer surface adhesion layer (or first adhesion layer) is an adhesive layer for bonding the barrier layer and the outer layer. In an embodiment, the outer surface adhesion layer may include at least one of epoxy-based adhesive, polyurethane-based adhesive, phenolic resin-based adhesive, polyolefin-based adhesive, or polyester-based adhesive. In an embodiment, the outer surface adhesion layer may have a thickness of 0.5 µm to 10 µm.

In an embodiment, the inner surface adhesion layer (or second adhesion layer) is an adhesive layer for bonding the barrier layer and the sealant layer, or alternatively, an extrusion coating layer may be formed. Alternatively, as another alternative, as described above, an extrusion resin layer may be further formed between the inner surface adhesive layer and the sealant layer. In an embodiment, the inner surface adhesive layer (or second adhesion layer) may include at least one of epoxy-based adhesive, polyurethane-based adhesive, phenolic resin-based adhesive, polyolefin-based adhesive, or polyester-based adhesive. In an embodiment, the inner surface adhesive layer (or second adhesion layer) may have a thickness of 0.5 µm to 10 µm. In an embodiment, the extrusion coating layer may improve flexibility, adhesiveness, insulation, and the like of the cell pouch film. In an embodiment, the extrusion coating layer may be formed using an olefin-based resin such as polypropylene-based resin and the like. In an embodiment, the extrusion coating layer may have a thickness of about 5 µm to 80 µm.

The film for a cell pouch according to an embodiment is excellent not only in gas barrier property, flexibility, resistance to an electrolyte solution, heat sealability, and the like, but also in improving external appearance defects and long-term reliability, making it suitable for use in a cell pouch.

Meanwhile, the exemplary embodiments of the present invention may provide a cell pouch including the above-described film for a cell pouch, and a secondary battery, particularly a medium- or large-sized secondary battery, housed with the cell pouch.

### Surface treatment layer characteristics

The above-described outer surface and/or inner surface treatment layer may be uniformly coated on a barrier layer that is generally a metal layer, and may include uncoated portions 600 per unit area (m²) of a photographed image of an external appearance of the barrier layer as less than an average of 0.05, 0.04 or less, 0.03 or less, 0.02 or less, or 0.01 or less.

Here, the uncoated portions are portions that are partially irregularly swollen in shape in a cell pouch film, that is, swollen portions. This is because the metal layer is not adhered to the outer layer, and therefore air fills the inside and bulges convexly. Specifically, the uncoated portions may be portions in which a fine oxide film is generated on a part of the surface of the metal layer.

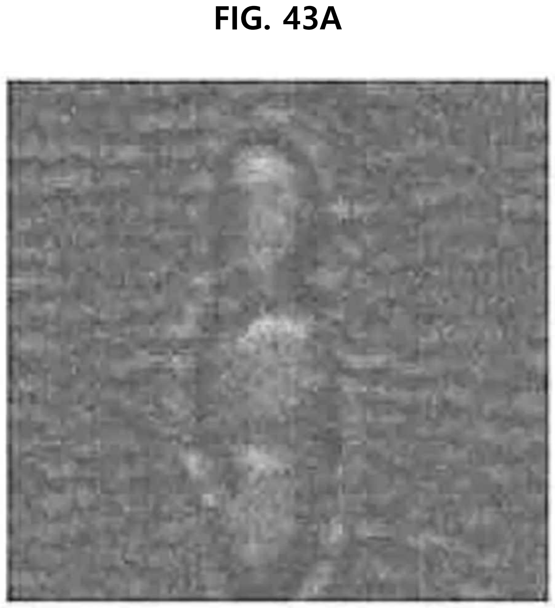

As illustrated in FIG. 43A to 43C, the uncoated swollen portions have bright inside and dark surrounding portions with contrast, and may be visually distinguished in the external appearance of the cell pouch film. The size of the uncoated portions is not limited, but, for example, may have an area of 1.42 mm² or more per one.

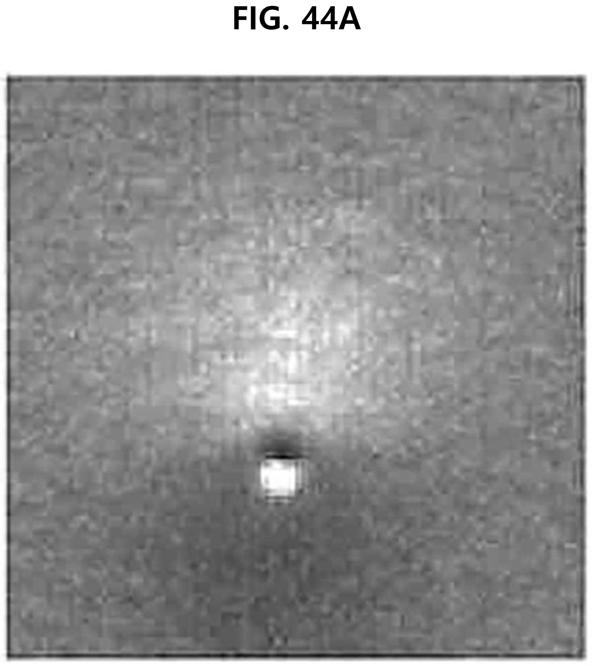

In addition, in an embodiment, the barrier layer may have a flat surface in which generation of irregularities (unevenness) is minimized. In an embodiment, the irregularities may be formed during manufacturing of the cell pouch film, for example, by denting or pressing generated in a winding step and the like. In an embodiment, the irregularities formed by denting or pressing may have a shape in which the center of the convex middle portion is recessed, as illustrated in FIG. 44A to 44C. In addition, the irregularities may have contrast in which the inside is bright and the periphery is dark according to the bend of the portion in which denting or pressing is generated by external light.

In this case, the flat surface may satisfy one or more of: irregularities per unit area (m²) of a photographed image of the external appearance of the surface of the barrier layer in contact with an outer surface adhesion layer among both surfaces of the barrier layer being an average of 1 or less, 0.9 or less, 0.8 or less, or 0.75 or less; or irregularities per unit area (m²) of a photographed image of the external appearance of the surface of the barrier layer in contact with an inner surface adhesion layer among both surfaces of the barrier layer being an average of 0.3 or less, 0.29 or less, 0.28 or less, 0.27 or less, or 0.26 or less.

Specifically, the area of one irregularity to be counted on the surface of the barrier layer may satisfy one range of 0.08 mm² or more and less than 0.63 mm²; 0.63 mm² or more and less than 1.42 mm²; or 1.42 mm² or more. More specifically, in an embodiment, the barrier layer may satisfy one or more of: irregularities of 0.08 mm² or more and less than 0.63 mm² per unit area (m²) of a photographed image of the external appearance of the surface of the barrier layer in contact with the outer surface adhesion layer among both surfaces of the barrier layer being an average of 1 or less, 0.8 or less, 0.6 or less, or 0.55 or less; irregularities of 0.63 mm² or more and less than 1.42 mm² being an average of 0.21 or less, 0.19 or less, or 0.17 or less; or irregularities of 1.42 mm² or more being an average of less than 0.1, 0.08 or less, or 0.06 or less. More specifically, the maximum area of the irregularities of 1.42 mm² or more may be 10 mm².

More specifically, in an embodiment, the barrier layer may satisfy one or more of: irregularities of 0.08 mm² or more and less than 0.63 mm² per unit area (m²) of a photographed image of the external appearance of the surface of the barrier layer in contact with the inner surface adhesion layer among both surfaces of the barrier layer being an average of 0.3 or less or 0.25 or less; irregularities of 0.63 mm² or more and less than 1.42 mm² being an average of less than 0.03 or 0.02 or less; or irregularities of 1.42 mm² or more being an average of 0.02 or less. More specifically, the maximum area of the irregularities of 1.42 mm² or more may be 10 mm².

Meanwhile, in an embodiment, the cell pouch film may have improved long-term reliability compared to a cell pouch film manufactured according to the related art, and when stored under harsh conditions of 85°C temperature and 85 RH% humidity for 2 weeks, the delamination occurrence rate between the outer layer and the barrier layer may be 50% or less, 40% or less, 30% or less, or 20% or less.

### Characteristics of MD and TD breaking strength difference

In exemplary embodiments of the present invention, a difference between a longitudinal direction (Machine direction, MD) breaking strength and a width direction (Transverse direction, TD) breaking strength of a cell pouch film may be 40 N/15 mm or less.

More specifically, the difference between the longitudinal direction (MD) breaking strength and the width direction (TD) breaking strength of the cell pouch film may be 5 N/15 mm or more, 10 N/15 mm or more, 15 N/15 mm or more, 20 N/15 mm or more, 23 N/15 mm or more; 40 N/15 mm or less, 35 N/15 mm or less, 30 N/15 mm or less, 25 N/15 mm or less, or 22 N/15 mm or less, but is not limited thereto.

When an in-line manner such as 1P3C (1 Pass 3 Coating, 1P3C) or 1P4C, in which three or more coating procedures may be performed in one in-line facility according to the manufacturing method of exemplary embodiments of the present invention, rather than proceeding by repeating the sequence of coating, drying, winding, and the like for each process, is used, a probability of occurrence of run loss and process defect generated during fabric conveyance may be reduced. In addition, the process speed is high, the number of windings is reduced, stress applied to the film is reduced, a tension of a driving roll conveying the film is low, which does not cause changes in the tensile curve of the film, and mechanical strength of the longitudinal direction (MD) and the width direction (TD) of the film is not changed.

In an embodiment, the width direction (TD) breaking strength of the cell pouch film may be 250 N/15 mm or less. More specifically, the width direction (TD) breaking strength of the cell pouch film may be 150 N/15 mm or more, 160 N/15 mm or more, 170 N/15 mm or more, 180 N/15 mm or more, 190 N/15 mm or more, 200 N/15 mm or more, 210 N/15 mm or more, 220 N/15 mm or more, 221 N/15 mm or more; 250 N/15 mm or less, 240 N/15 mm or less, 230 N/15 mm or less, or 221 N/15 mm or less, but is not limited thereto.

In an embodiment, a difference between a longitudinal direction (MD) elongation and a width direction (TD) elongation of the cell pouch film may be 6% or less. More specifically, the difference between the longitudinal direction (MD) elongation and the width direction (TD) elongation of the film may be 0% or more, 1% or more, 2% or more, 3% or more; 6% or less, 5% or less, 4% or less, or 3% or less, but is not limited thereto.

In an embodiment, a product of the difference (N/15 mm) between the longitudinal direction (MD) breaking strength and the width direction (TD) breaking strength of the film, and the difference (%) between the longitudinal direction (MD) elongation and the width direction (TD) elongation may be 240 or less. More specifically, the product of the difference (N/15 mm) between the breaking strengths and the difference (%) between the elongations may be 5 or more, 10 or more, 15 or more, 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, 95 or more, 99 or more; 200 or less, 190 or less, 180 or less, 170 or less, 160 or less, 150 or less, 140 or less, 130 or less, 120 or less, 110 or less, 100 or less, or 99 or less, but is not limited thereto. When the product of the difference (N/15 mm) between the breaking strengths and the difference (%) between the elongations is within the above range, the film for a cell pouch may have uniform physical properties in the longitudinal direction (MD) and the width direction (TD), thereby uniformly dispersing stress applied to the film during forming and processing processes of the film for a cell pouch. Accordingly, it is possible to delay a phenomenon in which stress is concentrated in one direction and crack occurrence is accelerated, thereby improving formability and durability.

In an embodiment, both the longitudinal direction (MD) formability and the width direction (TD) formability of the cell pouch film may be 16.5 mm or more. When a specimen cut from the film for a cell pouch is formed and the depth is then measured, if all 10 out of 10 do not break at the depth, a deeper depth is applied, and when even one breaks, the immediately preceding depth is designated as a maximum depth, which is referred to as formability.

More specifically, the longitudinal direction (MD) formability and the width direction (TD) formability of the cell pouch film may both be 16.5 mm or more, but are not limited thereto. When forming the film for a cell pouch, the formed shape is generally not a square but a rectangular shape (for example, a width of 190 mm and a length of 90 mm). For example, the longitudinal direction (MD) formability of the film means that in the formed rectangular shape, the width is 190 mm (TD direction), and the length is 90 mm (MD direction). The width direction (TD) formability means that in the formed rectangular shape, the width is 190 mm (MD direction), and the length is 90 mm (TD direction).

### Peel strength characteristics and the like

In exemplary embodiments of the present invention, a cell pouch film may have a heat seal strength of 100 N/15 mm to 110 N/15 mm at 50°C to 80°C, a peel strength between an outer layer and a barrier layer of 7 N/15 mm to 9 N/15 mm at 100°C to 140°C, and a peel strength between a sealant layer and the barrier layer of 11 N/15 mm to 13 N/15 mm at 70°C to 90°C.

As described above, in exemplary embodiments of the present invention, a manufacturing process has a high process speed, a reduced number of windings, reduced stress applied to the film, low tension of a driving roll conveying the film, does not cause a change in a tensile curve of the film, and thus the film exhibits excellent adhesion performance and excellent mechanical strength. Through a double-sided surface treatment step, since a surface of a metal fabric subjected to a surface treatment procedure becomes smoother, efficiency in a subsequent coating/laminating procedure of the sealant layer and the outer layer (Ny/PET) increases, and the peel strength may increase.

In one example, the heat seal strength may be 100 N/15 mm or more, 101 N/15 mm or more, 102 N/15 mm or more, 103 N/15 mm or more, 104 N/15 mm or more, 104.27 N/15 mm or more; 110 N/15 mm or less, 109 N/15 mm or less, 108 N/15 mm or less, 107 N/15 mm or less, 106 N/15 mm or less, 105 N/15 mm or less, or 104.27 N/15 mm or less, but is not limited thereto.

The heat seal strength is measured using a UTM (Universal Testing Machine) at 50°C to 80°C of the cell pouch film under conditions of a test speed of 50 mm/min and a grip separation of 30 mm. More specifically, the measurement temperature of the heat seal strength may be 50°C or more, 51°C or more, 52°C or more, 53°C or more, 54°C or more, 55°C or more, 56°C or more, 57°C or more, 58°C or more, 59°C or more, 60°C or more; 80°C or less, 79°C or less, 78°C or less, 77°C or less, 76°C or less, 75°C or less, 74°C or less, 73°C or less, 72°C or less, 71°C or less, 70°C or less, 69°C or less, 68°C or less, 67°C or less, 66°C or less, 65°C or less, 64°C or less, 63°C or less, 62°C or less, 61°C or less, or 60°C or less, but is not limited thereto.

In one example, the peel strength between the outer layer and the barrier layer may be 7 N/15 mm or more, 7.1 N/15 mm or more, 7.2 N/15 mm or more, 7.3 N/15 mm or more, 7.4 N/15 mm or more, 7.5 N/15 mm or more, 7.6 N/15 mm or more, 7.7 N/15 mm or more, 7.8 N/15 mm or more, 7.9 N/15 mm or more, 8 N/15 mm or more, 8.01 N/15 mm or more; 9 N/15 mm or less, 8.9 N/15 mm or less, 8.8 N/15 mm or less, 8.7 N/15 mm or less, 8.6 N/15 mm or less, 8.5 N/15 mm or less, 8.4 N/15 mm or less, 8.3 N/15 mm or less, 8.2 N/15 mm or less, 8.1 N/15 mm or less, or 8.01 N/15 mm or less, but is not limited thereto.

The peel strength between the outer layer and the barrier layer is measured by attaching the barrier layer to a glass substrate and attaching the outer layer to a tape and using a UTM (Universal Testing Machine) at 100°C to 140°C. More specifically, the measurement temperature of the peel strength between the outer layer and the barrier layer may be 100°C or more, 101°C or more, 102°C or more, 103°C or more, 104°C or more, 105°C or more, 106°C or more, 107°C or more, 108°C or more, 109°C or more, 110°C or more, 111°C or more, 112°C or more, 113°C or more, 114°C or more, 115°C or more, 116°C or more, 117°C or more, 118°C or more, 119°C or more, or 120°C or more; 140°C or less, 139°C or less, 138°C or less, 137°C or less, 136°C or less, 135°C or less, 134°C or less, 133°C or less, 132°C or less, 131°C or less, 130°C or less, 129°C or less, 128°C or less, 127°C or less, 126°C or less, 125°C or less, 124°C or less, 123°C or less, 122°C or less, 121°C or less, or 130°C or less, but is not limited thereto.

In one example, the peel strength between the sealant layer and the barrier layer may be 11 N/15 mm or more, 11.1 N/15 mm or more, 11.2 N/15 mm or more, 11.3 N/15 mm or more, 11.4 N/15 mm or more, 11.5 N/15 mm or more, 11.6 N/15 mm or more, 11.7 N/15 mm or more, or 11.8 N/15 mm or more; 13 N/15 mm or less, 12.9 N/15 mm or less, 12.8 N/15 mm or less, 12.7 N/15 mm or less, 12.6 N/15 mm or less, 12.5 N/15 mm or less, 12.4 N/15 mm or less, 12.3 N/15 mm or less, 12.2 N/15 mm or less, 12.1 N/15 mm or less, 12 N/15 mm or less, 11.9 N/15 mm or less, or 11.8 N/15 mm or less, but is not limited thereto.

The peel strength between the sealant layer and the barrier layer is measured by attaching the barrier layer to a glass substrate and attaching the sealant layer to a tape and using a UTM (Universal Testing Machine) at 70°C to 90°C. More specifically, the measurement temperature of the peel strength between the sealant layer and the barrier layer may be 70°C or more, 71°C or more, 72°C or more, 73°C or more, 74°C or more, 75°C or more, 76°C or more, 77°C or more, 78°C or more, 79°C or more, or 80°C or more; 90°C or less, 89°C or less, 88°C or less, 87°C or less, 86°C or less, 85°C or less, 84°C or less, 83°C or less, 82°C or less, 81°C or less, or 80°C or less, but is not limited thereto.

In one example, the peel strength in resistance to an electrolyte solution between the sealant layer and the barrier layer is 14 N/15 mm to 15 N/15 mm at 60°C, 11 N/15 mm to 13 N/15 mm at 80°C, 8 N/15 mm to 9 N/15 mm at 100°C, and 6 N/15 mm to 7 N/15 mm at 120°C.

More specifically, at 60°C, the peel strength in resistance to an electrolyte solution between the sealant layer and the barrier layer may be 14 N/15 mm or more, 14.1 N/15 mm or more, 14.2 N/15 mm or more, 14.3 N/15 mm or more, or 14.4 N/15 mm or more; 15 N/15 mm or less, 14.9 N/15 mm or less, 14.8 N/15 mm or less, 14.7 N/15 mm or less, 14.6 N/15 mm or less, 14.5 N/15 mm or less, or 14.4 N/15 mm or less, but is not limited thereto.

More specifically, at 80°C, the peel strength in resistance to an electrolyte solution between the sealant layer and the barrier layer may be 11 N/15 mm or more, 11.1 N/15 mm or more, 11.2 N/15 mm or more, 11.3 N/15 mm or more, 11.4 N/15 mm or more, 11.5 N/15 mm or more, 11.6 N/15 mm or more, 11.7 N/15 mm or more, or 11.8 N/15 mm or more; 13 N/15 mm or less, 12.9 N/15 mm or less, 12.8 N/15 mm or less, 12.7 N/15 mm or less, 12.6 N/15 mm or less, 12.5 N/15 mm or less, 12.4 N/15 mm or less, 12.3 N/15 mm or less, 12.2 N/15 mm or less, 12.1 N/15 mm or less, 12 N/15 mm or less, 11.9 N/15 mm or less, or 11.8 N/15 mm or less, but is not limited thereto.

More specifically, at 100°C, the peel strength in resistance to an electrolyte solution between the sealant layer and the barrier layer may be 8 N/15 mm or more, 8.1 N/15 mm or more, 8.2 N/15 mm or more, 8.3 N/15 mm or more, or 8.4 N/15 mm or more; 9 N/15 mm or less, 8.9 N/15 mm or less, 8.8 N/15 mm or less, 8.7 N/15 mm or less, 8.6 N/15 mm or less, 8.5 N/15 mm or less, or 8.4 N/15 mm or less, but is not limited thereto.

More specifically, at 120°C, the peel strength in resistance to an electrolyte solution between the sealant layer and the barrier layer may be 6 N/15 mm or more, 6.1 N/15 mm or more, 6.2 N/15 mm or more, 6.3 N/15 mm or more, or 6.4 N/15 mm or more; 7 N/15 mm or less, 6.9 N/15 mm or less, 6.8 N/15 mm or less, 6.7 N/15 mm or less, 6.6 N/15 mm or less, 6.5 N/15 mm or less, or 6.4 N/15 mm or less, but is not limited thereto.

In an embodiment, the peel strength in resistance to an electrolyte solution between the sealant layer and the barrier layer is measured by impregnating the film into an electrolyte solution, attaching the barrier layer to a glass substrate, attaching the sealant layer to a tape, and using a UTM (Universal Testing Machine) at 60°C, 80°C, 100°C, and 120°C, respectively.

### Tensile strength characteristics, wave height, and the like

In exemplary embodiments of the present invention, a cell pouch film may have tensile strength of 25 kgf/cm² to 34 kgf/cm².

In a cell pouch film manufacturing process of exemplary embodiments of the present invention, when a suction roll is used as a driving roll, tension is further low, and a drying step is shortened, whereby tensile strength of the film may be low and elongation may be high.

In addition, a cell pouch film manufacturing process of exemplary embodiments of the present invention has high process speed, a reduced number of winding, reduced stress applied to the film, low tension of a driving roll conveying the film, does not cause change in a tensile curve of the film, a drying step is shortened so that a plate-like shape of the film is maintained and wrinkles are not generated, and mechanical strength and formability are excellent.

More specifically, tensile strength of the cell pouch film may be 25 kgf/cm² or more, 26 kgf/cm² or more, 27 kgf/cm² or more, 28 kgf/cm² or more, 29 kgf/cm² or more, 30 kgf/cm² or more, 31 kgf/cm² or more, 32 kgf/cm² or more; 34 kgf/cm² or less, 33 kgf/cm² or less, or 32 kgf/cm² or less, but is not limited thereto.

In an embodiment, wave height of the cell pouch film is 3 mm or less. The wave height means height from a floor to a curved portion of the film when the film is placed on a flat floor. As described above, in a manufacturing process of a film for a cell pouch according to exemplary embodiments of the present invention, when a suction roll is used as a driving roll, tension is low, and a drying step is shortened so that a plate-like shape of the film is maintained and wrinkles are not generated. A lower limit of wave height of the film has no limitation.

More specifically, wave height of the cell pouch film may be 0 mm or more, 0.1 mm or more, 0.2 mm or more, 0.3 mm or more, 0.4 mm or more, 0.5 mm or more, 0.6 mm or more, 0.7 mm or more, 0.8 mm or more, 0.9 mm or more, 1 mm or more, 1.1 mm or more, 1.2 mm or more, 1.3 mm or more, 1.4 mm or more, 1.5 mm or more, 1.6 mm or more, 1.7 mm or more, 1.8 mm or more, 1.9 mm or more, 2 mm or more; 3 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, or 2 mm or less, but is not limited thereto.

### Uniformity of coating in width direction

In exemplary embodiments of the present invention, a cell pouch film may have a standard deviation of peel strength of 0.5 or less between a center portion and both side portions in a width direction of the film, wherein the width direction is a perpendicular direction of a direction in which the film is supplied during manufacture of the film, the center portion is a portion occupying 2/6 of an entire length based on a center of the entire length in the width direction of the film, and the both side portions are left and right portions excluding the center portion in the entire length of the width direction of the film.

In an exemplary embodiment, the cell pouch film may include a metal layer and a surface treatment layer of uniform thickness on both surfaces of the metal layer.

In an embodiment, the film may have a standard deviation of 0.4 or less or 0.35 or less in peel strength between the outer layer and the barrier layer of the center portion and both side portions in the width direction. In an embodiment, the film may have a standard deviation of 0.5 or less, 0.45 or less, or 0.4 or less in peel strength between the barrier layer and the sealant layer of the center portion and both side portions in the width direction.

In an embodiment, peel strength between each layer of the film is not limited as long as a standard deviation of the center portion and both side portions is small and has a constant value. For example, peel strength between the outer layer and the barrier layer of the center portion and both side portions in the width direction may be 15 to 19 N/15 mm, more specifically 17 to 18 N/15 mm, and peel strength between the barrier layer and the sealant layer of the center portion and both side portions in the width direction may be 20 to 26 N/15 mm, more specifically 24.5 to 25 N/15 mm. In this case, the peel strength may be measured using a UTM (Universal Testing Machine). Specifically, it may be measured by a method including: cutting a film into a size of 15 mm × 150 mm and preparing a specimen by separating a base layer/barrier layer or a sealant layer/barrier layer to a certain level according to peel strength measurement target; attaching and fixing the separated specimen to a glass plate, gripping both ends of the specimen with a UTM device and pulling; and calculating an average value of peel strength over a 10 mm section in a longitudinal direction (a direction in which the film is wound) after peeling starts.

In addition, in an embodiment, the film may have a standard deviation of resistance to an electrolyte solution between the barrier layer and the sealant layer of the center portion and both side portions in the width direction of 1.0 or less, 0.95 or less, 0.9 or less, or 0.85 or less. Specifically, in the film, the resistance to an electrolyte solution between the barrier layer and the sealant layer of the center portion and both side portions in the width direction may be 19 to 24 N/15 mm, more specifically 22 to 23 N/15 mm. In the present disclosure, the resistance to an electrolyte solution may be substantially the same type of physical properties as peel strength between the sealant layer and the barrier layer, and may be measured using a UTM (Universal Testing Machine). Specifically, it may be measured by a method including: cutting a film into a size of 15 mm × 150 mm; immersing the film in a bottle filled with an electrolyte solution, sealing, and impregnating in an oven at 85°C for one day; taking out the film impregnated in the electrolyte solution, wiping, and preparing a specimen by separating a sealant layer/barrier layer to a certain level; attaching and fixing the separated specimen to a glass plate, gripping both ends of the specimen with a UTM device and pulling; and calculating an average value of peel strength over a 10 mm section in a longitudinal direction (a direction in which the film is wound) after peeling starts. In this case, the electrolyte solution may be an electrolyte solution of 0.5-3 M (molar concentration) using a carbonate-based solvent and LiPF6 as an electrolyte.

A film according to an embodiment may be manufactured by the multi-coating manner of exemplary embodiments of the present invention described above. Accordingly, since both surfaces of the metal layer in the film are simultaneously surface-treated, time in which a surface treatment agent is exposed to air is minimized, so that performance differences of the surface treatment agent between an exposed portion and a non-exposed portion are prevented, thereby having excellent uniformity of physical properties.

### Uniformity of coating in longitudinal direction

In exemplary embodiments of the present invention, a cell pouch film may have a standard deviation of peel strength of 0.5 or less of both end portions excluding 50% of a center portion based on the center portion of an entire length in a longitudinal direction. Here, the longitudinal direction is a direction in which the film is wound and supplied during manufacture of the film. Here, the both end portions mean a core portion of winding located toward a core portion of a wound film, and an outer portion of winding located outward centered on the core portion.

In an exemplary embodiment, the cell pouch film may include a metal layer and a surface treatment layer of uniform thickness on both surfaces of the metal layer.

In an embodiment, the film may have a standard deviation of 0.4 or less, 0.35 or less, or 0.3 or less in peel strength between the outer layer and the barrier layer of the both end portions in the longitudinal direction. In an embodiment, the film may have a standard deviation of 0.5 or less or 0.45 or less in peel strength between the outer layer and the barrier layer of the both end portions in the longitudinal direction.

In an embodiment, peel strength between each layer of the film is not limited as long as the standard deviation of the both end portions, that is, the core portion of winding and the outer portion of winding, is small in the longitudinal direction and has a constant value. For example, peel strength between the outer layer and the barrier layer of the both end portions in the longitudinal direction may be 15 to 19 N/15 mm, more specifically 17 to 18 N/15 mm, and peel strength between the barrier layer and the sealant layer of the both end portions in the longitudinal direction may be 20 to 26 N/15 mm, more specifically 24 to 25 N/15 mm. In this case, the peel strength may be measured using a UTM (Universal Testing Machine). Specifically, it may be measured by a method including: cutting a film into a size of 15 mm × 150 mm and preparing a specimen by separating a base layer/barrier layer or a sealant layer/barrier layer to a certain level according to peel strength measurement target; attaching and fixing the separated specimen to a glass plate; gripping both ends of the specimen with a UTM device and pulling; and calculating an average value of peel strength over a 10 mm section in a longitudinal direction (a direction in which the film is wound) after peeling starts.

In addition, in an embodiment, the film may have a standard deviation of resistance to an electrolyte solution between the barrier layer and the sealant layer of the both end portions in the longitudinal direction of 1.0 or less, 0.95 or less, or 0.9 or less. Specifically, in the film, the resistance to an electrolyte solution between the barrier layer and the sealant layer of the both end portions in the longitudinal direction may be 19 to 24 N/15 mm, more specifically 22 to 23 N/15 mm.

The resistance to an electrolyte solution may be substantially the same type of physical properties as peel strength between the sealant layer and the barrier layer, and may be measured using a UTM (Universal Testing Machine). Specifically, it may be measured by a method including: cutting a film into a size of 15 mm × 150 mm; immersing the film in a bottle filled with an electrolyte solution, sealing, and impregnating in an oven at 85°C for one day; taking out the impregnated film, wiping, and preparing a specimen by separating a sealant layer/barrier layer to a certain level; attaching and fixing the separated specimen to a glass plate; gripping both ends of the specimen with a UTM device and pulling; and calculating an average value of peel strength over a 10 mm section in a longitudinal direction (a direction in which the film is wound) after peeling starts. In this case, the electrolyte solution may be an electrolyte solution of 0.5-3 M (molar concentration) using a carbonate-based solvent and LiPF6 as an electrolyte.

A film according to an embodiment may be manufactured by the multi-coating manner of exemplary embodiments of the present invention described above. Accordingly, since both surfaces of the metal layer in the film are simultaneously surface-treated, a surface treatment agent coated on one surface of the metal layer is not transferred to the other surface of the metal layer, so that a difference in coating uniformity between the core portion of winding and the outer portion of winding of the film is prevented, thereby having excellent uniformity of physical properties.

### Minimization of deformation of laminate

When a sealant layer includes at least three winding steps until lamination during manufacture of a cell pouch film, a metal (aluminum, etc.) used in a barrier layer is very likely to be deformed due to winding tension. Moreover, since the metal has a high elastic modulus, if winding is performed with low winding tension, winding itself is difficult (for example, aluminum has a Young's modulus of 69 to 86). In addition, since the metal has low restoring force, once deformation occurs, there is a limitation in recovery. Therefore, when a process capable of applying deformation to the metal is repeated several times, deformation due to tension occurs, and as a result, deterioration of physical properties of a final cell pouch film may occur.

In exemplary embodiments of the present invention, unlike a method in which a cell pouch film is manufactured by repeating a sequence of coating, drying, winding, and the like for each lamination process of each layer, a method is applied in which three or more coating procedures can be performed in a single in-line process by a single run of fabric. Accordingly, the cell pouch film may be subjected to two or less winding procedures. In addition, a barrier layer of the cell pouch film is not wound alone, and winding procedure may be performed together with at least an outer layer or together with the outer layer and the sealant layer. According to the method, the above-described problems are solved, and mechanical deformation of a metal layer is minimized, thereby minimizing deformation of a laminate of a final cell pouch film. In addition, since winding is performed by laminating a resin film having a lower elastic modulus than the metal layer without individually winding the metal layer, tension adjustment is facilitated to be adjusted to low tension.

Accordingly, curl characteristics before forming and curl characteristics after forming of the cell pouch film may be improved. In this regard, high formability of a cell pouch film is an essential characteristic for medium and large batteries, but a so-called curl phenomenon in which an end of the cell pouch film curls up after forming accompanied by high formability may appear very seriously. Such a curl phenomenon may lower efficiency of a secondary battery manufacturing process. In particular, a cell manufacturing procedure undergoes an automated continuous process, and in this process, an air suction device is frequently used, and in this case, the curled portion curls up more toward the air suction device side, thereby further lowering process efficiency. Therefore, it is not easy to improve the curl characteristics, but in exemplary embodiments of the present invention, by improving the manufacturing process, deformation of a laminate is minimized and curl characteristics before and after forming may be improved.

In exemplary embodiments, a cell pouch film may have a curl deviation [curl before forming] of 3 mm or less measured by the following method.

### [ Curl evaluation before forming of cell pouch film ]

A cell pouch film specimen is prepared in a square shape of 15 cm × 15 cm, and the specimen is placed on a flat fixing table and flatly fixed with tape.

An X-cut of 15 cm is made passing through a central point of the fixed specimen, and (curled) heights raised at two points on a MD (longitudinal direction) side and two points on a TD (transverse direction) side with the central point interposed therebetween are measured (see FIG. 3). A deviation is obtained by differences of each MD measured value and TD measured value.

In a non-limiting example, the curl deviation before forming may be 3 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, 2.0 mm or less, 1.9 mm or less, 1.8 mm or less, 1.7 mm or less, 1.6 mm or less, 1.5 mm or less, 1.4 mm or less, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0 mm.

In exemplary embodiments, the cell pouch film may have a curl deviation after forming of 5 mm or less measured by the following method.

### [ Curl evaluation after forming ]

### ① MD directional forming (MD forming curl evaluation)

A forming specimen is prepared as 26.6 (MD) × 24.0 (TD) cm. Forming evaluation is performed at 0.3 MPa in a chrome-coated one-cup forming machine (forming depth is 8 mm for a product using AL40 µm and 12 mm for a product using AL60 µm). An R value (corner curvature radius value) of the forming machine is 4R (4 mm), and a forming size is 90 mm × 160 mm when forming, and forming is performed as a single forming.

### ② TD directional forming (TD forming curl evaluation)

A forming specimen is prepared as 26.6 (TD) × 24.0 (MD) cm. Forming evaluation is performed at 0.3 MPa in a chrome-coated one-cup forming machine (forming depth is 8 mm for a product using AL40 µm and 12 mm for a product using AL60 µm). An R value (corner curvature radius value) of the forming machine is 4R (4 mm), and a forming size is 90 mm × 160 mm when forming, and forming is performed as a single forming.

In order to evaluate curl generated after forming, double-sided tape is installed on a flat place, and a formed pouch is then fixed thereon, and a height of curl generated is measured. Two points of measurement positions are measured, and a higher value is recorded. After measuring each corner of the forming specimen, a height of a corner where curl is generated larger is defined as a curl value.

In a non-limiting example, the curl deviation after forming may be 5 mm or less, 4.9 mm or less, 4.8 mm or less, 4.7 mm or less, 4.6 mm or less, 4.5 mm or less, 4.4 mm or less, 4.3 mm or less, 4.2 mm or less, 4.1 mm or less, 4.0 mm or less, 3.9 mm or less, 3.8 mm or less, 3.7 mm or less, 3.6 mm or less, 3.5 mm or less, 3.4 mm or less, 3.3 mm or less, 3.2 mm or less, 3.1 mm or less, 3.0 mm or less, 2.9 mm or less, 2.8 mm or less, 2.7 mm or less, 2.6 mm or less, 2.5 mm or less, 2.4 mm or less, 2.3 mm or less, 2.2 mm or less, 2.1 mm or less, 2.0 mm or less, 1.9 mm or less, 1.8 mm or less, 1.7 mm or less, 1.6 mm or less, 1.5 mm or less, 1.4 mm or less, 1.3 mm or less, 1.2 mm or less, 1.1 mm or less, 1.0 mm or less, 0.9 mm or less, 0.8 mm or less, 0.7 mm or less, 0.6 mm or less, 0.5 mm or less, 0.4 mm or less, 0.3 mm or less, 0.2 mm or less, 0.1 mm or less, or 0 mm.

Hereinafter, exemplary embodiments of the present invention are described in more detail through comparison of each experimental embodiment and comparative example. The embodiments disclosed in the present specification are merely provided by way of example for descriptive purposes, and the embodiments of the present invention may be implemented in various forms, and should not be construed as being limited to the embodiments described in the present specification.

### [Experiment 1]

### Example

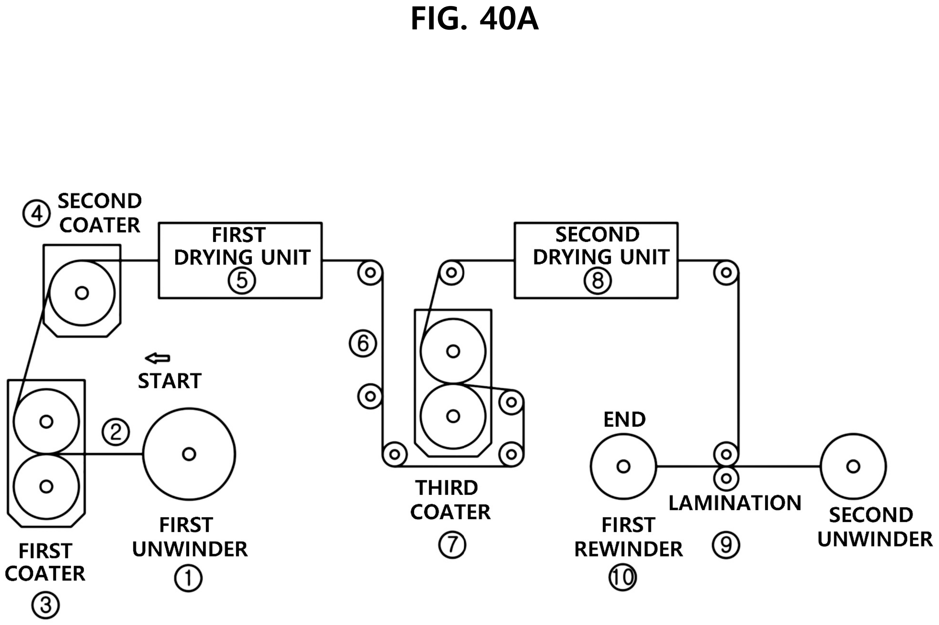

FIG. 40A is a schematic diagram illustrating a cell pouch manufacturing process according to Example of [Experiment 1] of the present invention.

With reference to FIG. 40A, a cell pouch manufacturing apparatus is a multi-coating manner and includes a double-sided dual coating means, a third coater ①, and a lamination section ⑨.

The double-sided dual coating means includes a first coater ③ and a second coater ④ for coating both surfaces of a metal fabric forming a metal layer, and performs double coating on both surfaces of the metal fabric through surface treatment.

The first coater ③ and the second coater ④ are designed as a combination of Reverse Kiss coating (RKC) and Direct Gravure coating, thereby considering physical properties and variations of coating solution, and are configured to adjust positions of a coating roll and a doctor relative to a substrate contact surface, thereby enabling improvement of coating uniformity and task speed. In particular, in order to precisely control the coating agent, a chamber manner (sealed piping) is configured, thereby adjusting viscosity of the coating agent and fundamentally blocking inflow of foreign substance. In addition, in case of a problem on one side causing trouble in facility operation, a Re-winder part and an Un-winder part (fabric supply part ①) may be separately configured to enable separate operation.

The third coater ⑦ applies an adhesive on both surfaces of the metal fabric subjected to surface treatment through two coatings, and undergoes procedures such as drying and the like to prepare for lamination.

The lamination section ⑨ laminates functional fabrics on both surfaces of the metal fabric to which the adhesive is applied, wherein an inner side fabric may be laminated to stabilize heat resistance and cold resistance of a battery, and an outer side fabric may be laminated for heat resistance, pinhole resistance, abrasion resistance, and the like.

Meanwhile, in a procedure of conveying each fabric, in order to minimize occurrence of foreign substance and scratch, both a tendency structure in which a substrate contact roll and a shaft are separated and driven, and an integral-type 'Shaft' structure may be applied in case of a guide roll.

In a general driving manner of a guide roll, rotation delivered from a motor is delivered to a shaft-integrated guide roll and driven at a 1:1 speed matched to the motor, whereas in a tendency driving manner, a shaft of the guide roll is separated so that a structure of mutually compensating fine rotational speed of rolls is provided, and the tendency driving manner may be applied to a necessary section.

In addition, to minimize occurrence of foreign substances and scratches during conveyance of fabric, a suction roll may be applied in a tension adjustment section, and in order to prevent foreign substances generated during run from adhering to a roll and causing external appearance defects (denting, scratching, etc.), a contact-type clean roll for removing foreign substances may be applied.

In addition, the double-sided dual coating means may include the fabric supply part ①, a foreign substance removal means ②, a tension adjusting unit, and the first coater ③ and the second coater ④.

The fabric supply part ① supplies by unwinding a wound metal fabric, and the foreign substance removal means ② removes foreign substances existing on the surface of the supplied metal fabric. The tension adjusting unit adjusts tension of the metal fabric from which foreign substances have been removed. Thereby, coating may be performed on both surfaces of the metal fabric in which constant tension is maintained by the first coater ③ and the second coater ④.

For example, by the first coater ③, a first coating is performed on one surface of the metal fabric by applying aqueous-based and solvent-based coating solutions in a combined manner of direct coating and RKC (Reverse Kiss Coating). By the second coater ④, coating solution may be applied on the other surface of the metal fabric by RKC and film up/down coating manner.

In an embodiment, the metal fabric is prepared from aluminum material, and the foreign substance removal means ② includes a first foreign substance removal part performing discharge treatment on both surfaces of the metal fabric to remove oil. Further, a pinhole inspecting unit may identify whether pinholes are generated on both surfaces of the oil-removed metal fabric. As a result of identification, when there is no abnormality, a second foreign substance removal part may remove foreign substances generated on both surfaces of the metal fabric in a roll manner.

In addition, between the double-sided dual coating means and the third coater ⑦, a physical property stabilization drying unit ⑤ is formed to dry the metal fabric coated on both surfaces in a floating manner, thereby stabilizing physical properties.

In this case, a drying manner may apply an 'Air Floating' manner such that the coated substrate may be dried in a non-contact type in a state of being floated. Through this, the metal fabric coated on both surfaces may be dried while minimizing contact with components such as a convey roll or the like.

Thereafter, the dried metal fabric is cooled by a cooling unit ⑥, and a surface inspecting unit inspects the surface of the cooled metal fabric.

In addition, between the third coater ⑦ and the lamination section ⑨, an adhesive drying unit ⑧ is formed to dry the metal fabric on which adhesive is applied, thereby forming an adhesion layer, and an adhesion layer thickness measuring unit for measuring thickness of the dried adhesion layer, and an adhesion layer surface treating unit for corona treatment of the adhesion layer to reinforce adhesive force, may be further included.

Meanwhile, functional fabric may include a sealant fabric and a synthetic resin fabric. For example, the sealant fabric may be laminated on an inner surface of the metal fabric, and the synthetic resin fabric may be laminated on an outer surface of the metal fabric. In other words, in the lamination section ⑨, the sealant fabric may be laminated on the inner side of the metal fabric to form a sealant layer, and the synthetic resin fabric may be laminated on the outer side of the metal fabric to form an outer layer. Continuously in the lamination section ⑨, a surface inspecting unit for inspecting surfaces of the sealant layer and the outer layer may be further included.

### Comparative Example

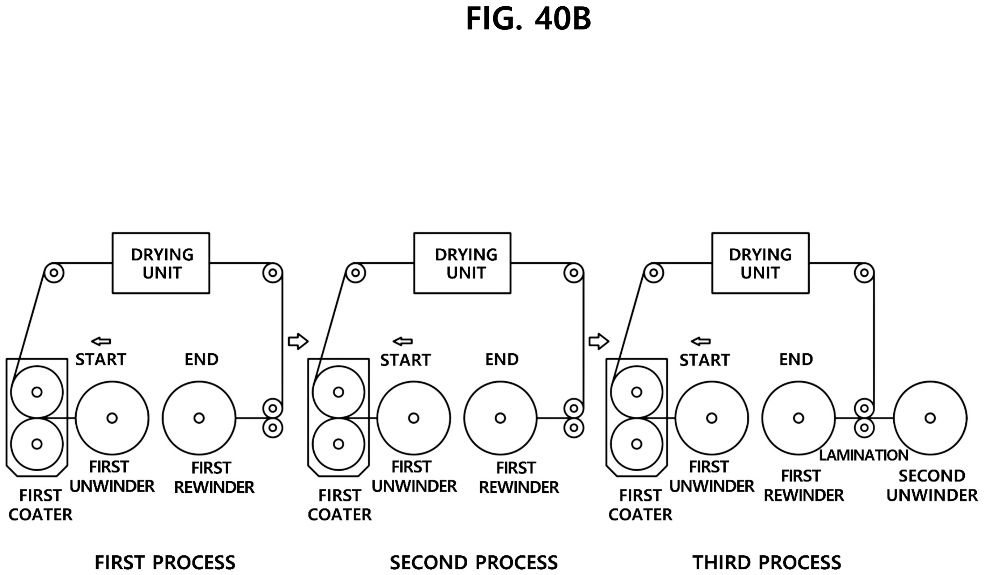

FIG. 40B is a schematic diagram illustrating a process of a Comparative Example contrasted with FIG. 40A.

The Comparative Example process proceeds in the order of a metal layer surface treatment process (1st process), a second metal layer surface treatment process (2nd process), a final outer layer lamination process (3rd process, final outer layer/metal layer), and a sealant layer lamination process (4th process), but, as illustrated in FIG. 40B, proceeds by repeating, for each process, a sequence such as coating, drying, winding, and the like for surface treatment, and in this case, a probability that run Loss and process defect occur during convey of fabric may increase.

### Comparison between Example and Comparative Example

To examine this in more detail, when a cell pouch manufacturing method of the Example and a manufacturing method of the Comparative Example are compared, the result is as illustrated in FIG. 28.

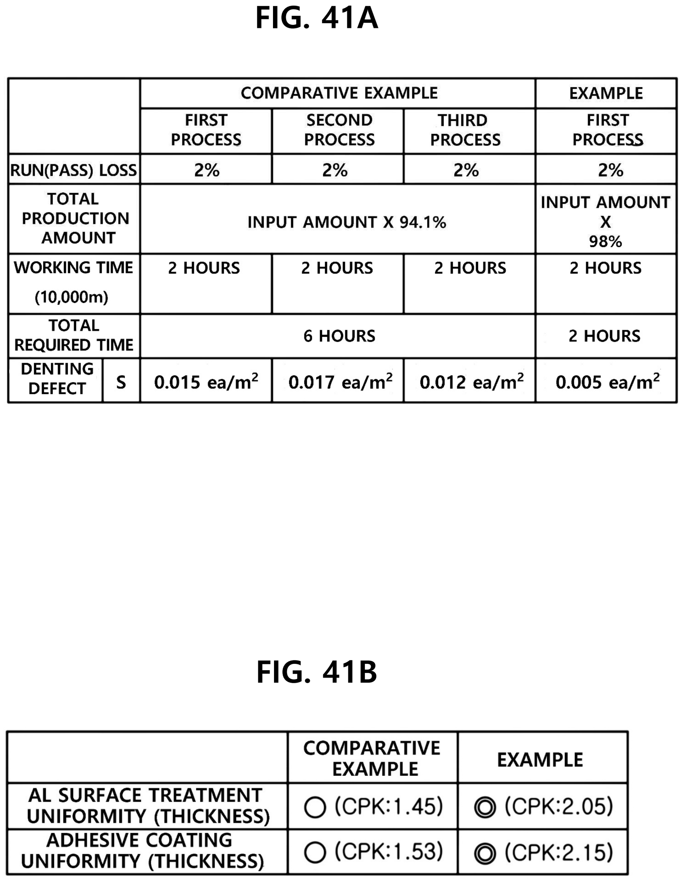

FIG. 41A and FIG. 41B are tables comparing Example and Comparative Example in [Experiment 1] of the present invention.

First, as illustrated in FIG. 41A, in case of run Loss occurring during convey of fabric, the Comparative Example results in a total of 6% over a total of three processes, whereas in the Example, since only one process is undergone, an effect of reducing to 2% may be obtained, and through this, an effect of increasing a total production amount may be obtained. Additionally, due to a reduction of processes, not only working time decreases, but also an effect of reducing fabric defects such as denting defects or the like may be obtained. In addition, as illustrated in FIG. 41B, uniformity of surface treatment and coating is also found to increase.

### [Experiment 2]

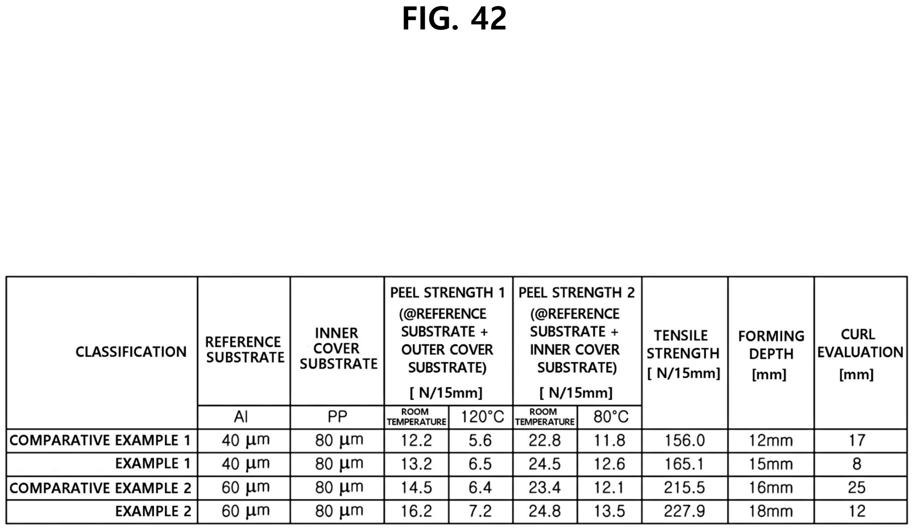

FIG. 42 is a table illustrating evaluation results of physical properties of an outer cover substrate, a reference substrate, and an inner cover substrate in a cell pouch manufacturing method of Example (FIG. 27 or FIG. 29) of [Experiment 2] of the present invention. The Example was manufactured by a 1P4C process (aging one-time process) [for example, manufacturing methods of embodiments illustrated in FIG. 1, 2, 4, 6, 7, 9, 11, 13, 14, 16, and 17 may be used]. The Comparative Example was manufactured through a manufacturing method of FIG. 40B (metal layer double-sided surface treatment and outer layer first lamination), outer layer second lamination (not illustrated), and sealant layer lamination (not illustrated) (aging three-time process).

With reference to FIG. 42, Comparative Example 1 and 2 were made using one single-material equipment and two aging equipment together with a plurality of roll-to-roll equipment. In addition, Example 1 and 2 were made using one single-material equipment and one aging equipment together with one roll-to-roll device.

Here, Comparative Example 1 and 2 have the same structure as Example 1 and 2, for example, have an outer cover substrate and a reference substrate (Al) and an inner cover substrate (PP).

Comparative Example 1 and 2 were excluded from the table because Comparative Example 1 and 2 have a layer of nylon of the same thickness as Example 1 and 2. First, for evaluation of peel strength 1 and 2 in Comparative Example 1 and Example 1, Comparative Example 1 and Example 1 were individually prepared as samples having widths of 15 mm and lengths of 150 mm while respectively having thickness 40 µm and thickness 80 µm in a reference substrate (Al) and an inner cover substrate (PP).

For evaluation of peel strength 1 and 2 in Comparative Example 2 and Example 2, Comparative Example 2 and Example 2 were individually prepared as samples having widths of 15 mm and lengths of 150 mm while respectively having thickness 60 µm and thickness 80 µm in a reference substrate (Al) and an inner cover substrate (PP). Peel strength 1 was measured at a specific temperature (room temperature or 120°C) at a speed of 50 mm/min under a 180° Peel condition. Peel strength 2 was measured at a specific temperature (room temperature or 80°C) at a speed of 50 mm/min under a 180° Peel condition.

In Comparative Example 1 and 2 and Example 1 and 2, when a reference thickness (Al) and an inner cover substrate (PP) have the same thickness, peel strength 1 of the reference substrate (Al) and the outer cover substrate appears greater in Example 1 and 2 than in Comparative Example 1 and 2 regardless of temperature at room temperature and 120°C.

In Comparative Example 1 and 2 and Example 1 and 2, when a reference substrate (Al) and an inner cover substrate (PP) have the same thickness, peel strength 2 of the reference substrate and the inner cover substrate appears greater in Example 1 and 2 than in Comparative Example 1 and 2 regardless of temperature at room temperature and 80°C.

Next, for evaluation of tensile strength in Comparative Example 1 and Example 1, Comparative Example 1 and Example 1 were individually prepared as samples having widths of 15 mm and lengths of 150 mm while respectively having thickness 40 µm and thickness 80 µm in a reference substrate (Al) and an inner cover substrate (PP). For evaluation of tensile strength in Comparative Example 2 and Example 2, Comparative Example 2 and Example 2 were individually prepared as samples having widths of 15 mm and lengths of 150 mm while respectively having thickness 60 µm and thickness 80 µm in a reference substrate (Al) and an inner cover substrate (PP).

In addition, for evaluation of forming depth in Comparative Example 1 and Example 1, Comparative Example 1 and Example 1 were individually prepared as samples having widths of 240 mm and lengths of 266 mm while respectively having thickness 40 µm and thickness 80 µm in a reference substrate (Al) and an inner cover substrate (PP). For evaluation of forming depth in Comparative Example 2 and Example 2, Comparative Example 2 and Example 2 were individually prepared as samples having widths of 240 mm and lengths of 266 mm while respectively having thickness 60 µm and thickness 80 µm in a reference substrate (Al) and an inner cover substrate (PP).

In addition, for curl evaluation in Comparative Example 1 and Example 1, Comparative Example 1 and Example 1 were individually prepared as samples having widths of 150 mm and lengths of 150 mm while respectively having thickness 40 µm and thickness 80 µm in a reference substrate (Al) and an inner cover substrate (PP). For curl evaluation in Comparative Example 2 and Example 2, Comparative Example 2 and Example 2 were individually prepared as samples having widths of 150 mm and lengths of 150 mm while respectively having thickness 60 µm and thickness 80 µm in a reference substrate (Al) and an inner cover substrate (PP).

Here, tensile strength was measured at room temperature at a speed of 50 mm/min. In Comparative Example 1 and 2 and Example 1 and 2, when a reference thickness (Al) and an inner cover substrate (PP) have the same thickness, tensile strength appears greater in Example 1 and 2 than in Comparative Example 1 and 2. In addition, forming depth focused on checking a maximum depth in a test mold (90 mm × 160 mm) without tearing of a specimen. In Comparative Example 1 and 2 and Example 1 and 2, when a reference substrate (Al) and an inner cover substrate (PP) have the same thickness, forming depth appears greater in Example 1 and 2 than in Comparative Example 1 and 2.

In addition, curl evaluation (curl evaluation before forming) focused on checking a height of an end of a specimen after cutting a specimen in a diagonal X-shape. The lower a height of the end of the specimen is, the more favorable a curl state is evaluated.

In Comparative Example 1 and 2 and Example 1 and 2, when a reference thickness (Al) and an inner cover substrate (PP) have the same thickness, the corresponding curl evaluation appears more favorable in Example 1 and 2 than in Comparative Example 1 and 2.

As described above, in peel strength 1 & 2, tensile strength, forming depth, and curl evaluation before forming, Example 1 and 2 have better physical properties results than Comparative Example 1 and 2. This is because Example 1 and 2, receiving fewer numbers of aging than Comparative Example 1 and 2, retain initial material properties of a specimen more intact compared with Comparative Example 1 and 2.

### [Experiment 3]

### Example

An Example of Experiment 3 was manufactured according to the following method.

That is, as illustrated in FIG. 3, after coating and surface-treating one side surface of an aluminum foil metal fabric forming a barrier layer, then coating and surface-treating the other side surface of the metal fabric. The metal fabric having both surfaces coated was dried in a floating manner to stabilize physical properties.

The dried metal fabric was cooled, and a urethane-based adhesive was applied to one side surface of the surface-treated metal fabric by an adhesive coater to form an outer surface adhesion layer. Then, a pre-prepared PET/nylon film was laminated on the outer surface adhesion layer to form an outer layer, thereby forming a second intermediate structure, and one aging was performed (first aging).

Next, a urethane-based adhesive was applied to the other side surface of the surface-treated metal layer of the second intermediate structure, and an un-stretched polypropylene film was laminated thereon to form a sealant layer, thereby manufacturing a film for a cell pouch, winding, and performing one aging (second aging).

### Comparative Example

First, after coating and drying one side surface of an aluminum foil metal fabric forming a barrier layer and passing through a first winding step, another surface treatment layer was coated and dried on the other side surface of the metal fabric and wound again for a second time. After coating and drying a urethane-based adhesive layer on one side surface of the surface-treated metal layer, a nylon film was laminated and one aging (first aging) was performed, then a PET film was laminated and one aging (second aging) was performed, and then wound for a third time. After forming and drying an inner surface adhesion layer on the other side surface of the surface-treated metal layer, an un-stretched polypropylene film was laminated, wound, and one aging (third aging) was performed.

### Evaluation 1

Through external appearance image analysis of the manufactured Example and Comparative Example, degree of occurrence of external appearance defects was evaluated.

Specifically, an in-line detector (manufacturer: Wintriss Inspection Solutions, product name: Casa Optical Inspector) was used to inspect denting and pressing defects and uncoated defects. The pressing defects and uncoated defects were classified by shapes of defects detected by a detection camera, and various defect data were collected, and types of defects were classified using deep learning of AI. Specifically, after collecting defect images, classification AI (AI-based defect classification) was performed, and shapes of collected defect images were compared with stored defect data. When a matching rate was 90% or more, defect classification was completed. When a matching rate was 50% or less, the data were separately collected, then manually classified according to defect type, accumulated in defect data, and then added to defect classification rules by learning AI, that is, generating rules by accumulated defect data and applying to classification AI, thereby classifying types of defects.

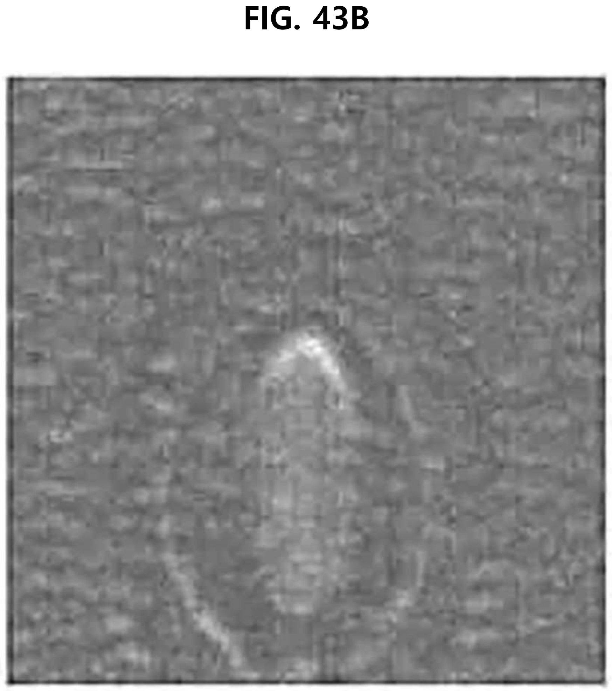

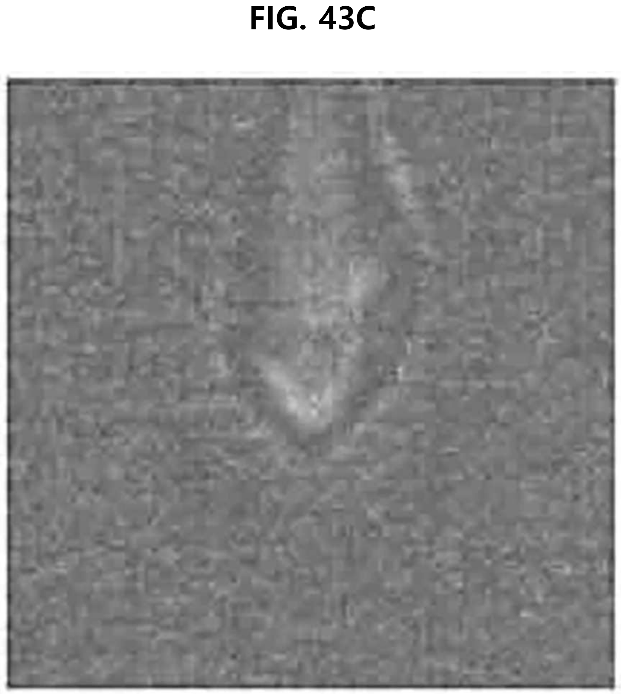

FIG. 43 illustrates an example of uncoated defect (uncoated portions), and the uncoated defect has a form in which at least one bright shape is visible inside the defect and the periphery is surrounded by a dark and irregular shape, showing a swollen form. This is because the film and the metal layer were not adhered due to the uncoated portions, air filled in the space, and thereby the film formed an upward convex shape. Accordingly, the inside of the defect has a bright shape, and the periphery has a dark shape. In this case, each of the uncoated portions had an area of 1.42 mm² or more.

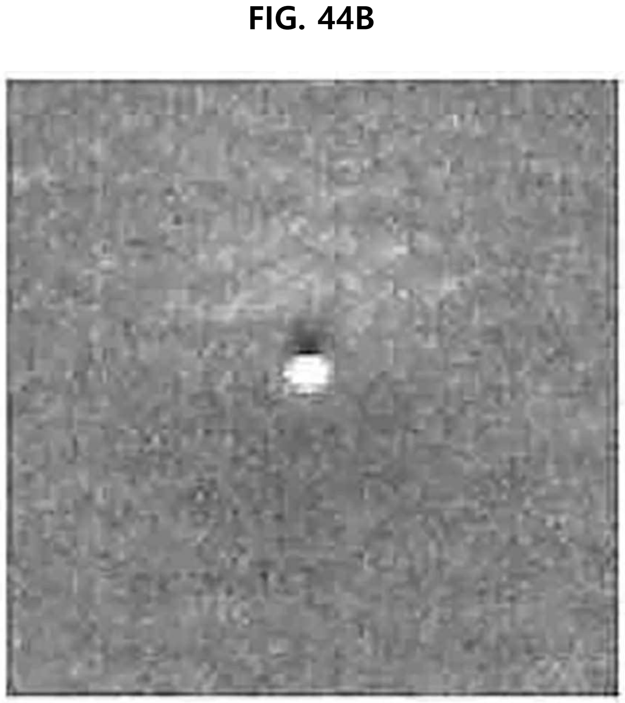

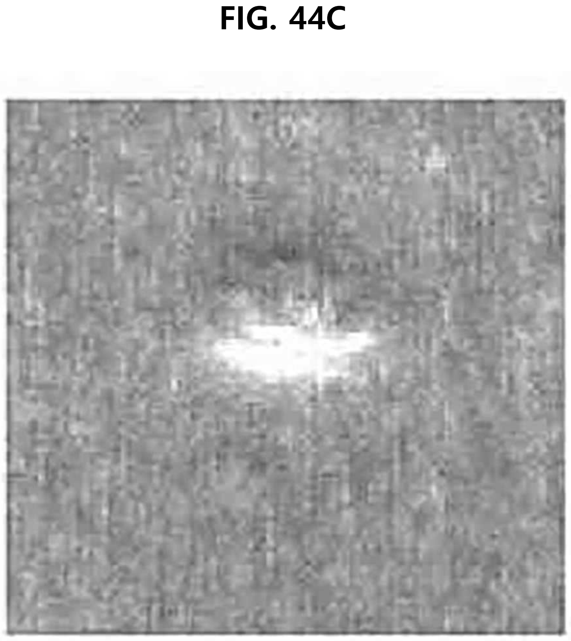

FIG. 44 illustrates examples of denting and pressing defects, and denting and pressing defects, unlike uncoated defects, have a dark upper part and a bright lower part. This is because, due to a detection camera and lighting direction, brightness difference occurs according to curvature of a portion of fabric where denting and pressing occurred.

Based on the detection results, types of external appearance defects were classified and shown in the table below.

**[Table 1]**

| Item | | Unit | | | | Comparative Example | | | Example | |
|---|---|---|---|---|---|---|---|---|---|---|
| | | | | | Contact surface with outer surface adhesion layer | | Contact surface with inner surface adhesive layer | Contact surface with outer surface adhesive layer | | Contact surface with inner surface adhesive layer |
| External appearance defects | Denting and/or pressing | S | 0.08 mm² or more and less than 0.63 mm² | each/m² | 1.15 | | 0.35 | 0.54 | | 0.22 |
| | | M | 0.63 mm² or more and less than 1.42 mm² | | 0.22 | | 0.03 | 0.16 | | 0.02 |
| | | L | 1.42 mm² or more | | 0.10 | | 0.02 | 0.05 | | 0.02 |
| | | Total | | | 1.47 | | 0.4 | 0.75 | | 0.26 |
| | | | | | | 1.87 | | | 1.01 | |
| | Uncoated | each/m² | | | | 0.05 | | | 0.01 | |

As a result, the Example of the present disclosure was confirmed to have significantly reduced external appearance defects compared with the Comparative Example manufactured according to the related art.

### Evaluation 2

Long-term reliability of the manufactured Example and Comparative Example was evaluated. In order to replace battery evaluation that should be conducted for at least 6 months to 10 years, long-term reliability evaluation was conducted for two weeks under harsh conditions (85°C/85 RH%).

First, each specimen of the Example and Comparative Example was formed to the same size using a test mold (size: 16 cm × 9 cm) of Youlchon Chemical Co., Ltd. Each formed specimen was stored under conditions of 85°C/85 RH% and presence or absence of delamination phenomenon between the metal layer (aluminum foil) and the outer layer film was visually confirmed [NG (Not Good): delamination occurrence].

**[Table 2]**

| Item | Unit | | Comparative Example | Example |
|---|---|---|---|---|
| | | | Contact surface with outer surface adhesion layer | Contact surface with outer surface adhesion layer |
| Long-term reliability 85°C/85RH% | Week 1 | NG /Number of specimens | 4/10 | 1/10 |
| | Week 2 | | 10/10 | 2/10 |

As a result, the Example of the present disclosure was confirmed to have significantly improved long-term reliability compared with the Comparative Example manufactured according to the related art.

### [Experiment 4]

### Manufacture of Examples

As illustrated in FIG. 3, both surfaces of an aluminum foil metal fabric forming a barrier layer were coated in first and second coatings to perform surface treatment. Thereafter, the metal fabric having both surfaces coated was dried at 150°C to 200°C in a floating manner to stabilize physical properties. Then, the dried metal fabric was cooled, and a urethane-based adhesive was applied to one side surface of the surface-treated metal fabric by an adhesive coater to form an outer surface adhesion layer. Next, a pre-prepared PET/nylon film was laminated on the outer surface adhesion layer to form an outer layer, thereby forming a second intermediate structure, and one aging was performed (first aging).

Next, a urethane-based adhesive was applied to the other side surface of the surface-treated metal layer of the second intermediate structure, and an un-stretched polypropylene film was laminated thereon to form a sealant layer, thereby manufacturing a film for a cell pouch, winding, and performing one aging (second aging) [Example 1: sample taken at 700 m point from core portion in a roll wound total 2,000 m; Example 2: sample taken at 1,300 m point from core portion in a roll wound total 2,000 m; Example 3: sample taken at 1,900 m point from core portion in a roll wound total 2,000 m].

### Manufacture of Comparative Examples

Unlike FIG. 3, a winding process was performed for each process.

That is, one side surface of an aluminum foil metal fabric forming a barrier layer was coated in a first coating to perform surface treatment, dried, and then subjected to first winding. The other side surface of the aluminum foil metal fabric forming the barrier layer was coated in a second coating to perform surface treatment, dried, and then subjected to second winding.

On one side surface of the aluminum foil metal fabric surface-treated on both surfaces, a urethane-based adhesive was coated and dried, a nylon film was laminated, and one aging (first aging) was performed. Then a PET film was laminated and one aging (second aging) was performed, and then subjected to third winding. Thereafter, an inner adhesive was coated and dried, an inner layer (un-stretched polypropylene sealant film) was laminated, wound, and one aging was performed (third aging) [Comparative Example 1: sample taken at 700 m point from core portion in a roll wound total 2,000 m; Comparative Example 2: sample taken at 1,300 m point from core portion in a roll wound total 2,000 m; Comparative Example 3: sample taken at 1,900 m point from core portion in a roll wound total 2,000 m].

### Evaluation of difference of longitudinal direction (MD) physical properties and width direction (TD) physical properties of film

For the manufactured film for a cell pouch, difference of longitudinal direction (MD) physical properties and width direction (TD) physical properties was evaluated.

More specifically, specimens of 130 mm × 15 mm were sampled in longitudinal direction (MD) and width direction (TD) from the wound roll. For the sampled specimens, tensile strength was measured according to ASTM D638 using a UTM (manufacturer: INSTRON) universal testing machine under conditions of elongation speed of 50 mm/min and grip separation of 50 mm. Breaking strength at the point when specimen was cut and fractured was measured, and after marking 30 mm length in the middle of sampled specimen, actual increased length after fracture was measured to evaluate elongation.

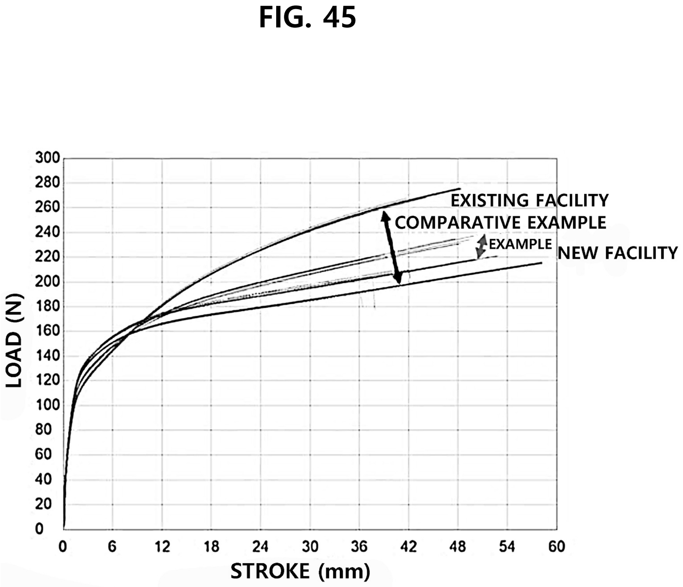

The results are shown in FIG. 45 and in the following Table 3 and Table 4. FIG. 45 is a stress-strain curve of a film for a cell pouch according to Example in Experiment 4.

**[Table 3]**

| Breaking strength (N/15 mm) | Example 1 | Example 2 | Example 3 | Comparative Example 1 | Comparative Example 2 | Comparative Example 3 |
|---|---|---|---|---|---|---|
| MD | 221 | 205 | 209 | 200 | 209 | 216 |
| TD | 231 | 238 | 232 | 275 | 255 | 268 |
| Difference | 10 | 33 | 23 | 75 | 46 | 52 |

**[Table 4]**

| Elongation (%) | Example 1 | Example 2 | Example 3 | Comparative Example 1 | Comparative Example 2 | Comparative Example 3 |
|---|---|---|---|---|---|---|
| MD | 73 | 70 | 67 | 90 | 73 | 83 |
| TD | 70 | 73 | 70 | 63 | 66 | 64 |
| Difference | 3 | 3 | 3 | 27 | 7 | 19 |

From FIG. 45 and the above Table 3 and Table 4, in case of a film for a cell pouch according to the present invention, it can be confirmed that mechanical strength is excellent and also deviation of mechanical strength is low.

### Evaluation of difference of longitudinal direction (MD) formability and width direction (TD) formability of film

For the manufactured film for a cell pouch, difference of longitudinal direction (MD) physical properties and width direction (TD) physical properties was evaluated.

More specifically, specimens of 266 mm × 240 mm were sampled in longitudinal direction (MD) and width direction (TD) from the wound roll. The sampled specimens were formed into a rectangular shape (width 190 mm, length 90 mm). (Formability evaluation was performed in a high-formability pouch formability evaluation equipment coated with chrome by forming into one cup, and although R values vary, a reference corner R value is 4.)

When measuring depth after forming, if all 10 out of 10 are not broken at that depth, a deeper depth is applied, and when even one breakage occurs, the immediately previous depth is defined as formability as maximum depth.

Longitudinal direction (MD) formability means that in the formed rectangular shape, the width length is 190 mm (TD direction) and the length is 90 mm (MD direction). Width direction (TD) formability means that in the formed rectangular shape, the width length is 190 mm (MD direction) and the length is 90 mm (TD direction). The results are shown in Table 5 below.

**[Table 5]**

| Formability (mm) | Example 1 | Example 2 | Example 3 | Comparative Example 1 | Comparative Example 2 | Comparative Example 3 |
|---|---|---|---|---|---|---|
| Longitudinal direction (MD) Formability | 17.0 | 17.0 | 16.5 | 12.0 | 13.0 | 12.5 |
| Width direction (TD) | 17.0 | 16.5 | 17.0 | 11.5 | 12.0 | 10.5 |
| Formability | | | | | | |

From the above Table 5, in case of films for a cell pouch of the Examples, it can be confirmed that formability is the most excellent.

### [Experiment 5]

### Manufacture of Example 1

Both surfaces of an aluminum foil metal fabric forming a barrier layer were coated in first and second coatings to perform surface treatment. Thereafter, the metal fabric having both surfaces coated was dried at 150°C to 200°C in a floating manner to stabilize physical properties. Then, the dried metal fabric was cooled, and a urethane-based adhesive was applied to one side surface of the surface-treated metal fabric by an adhesive coater to form an outer surface adhesion layer. Then, a pre-prepared PET/nylon film was laminated on the outer surface adhesion layer to form an outer layer, thereby forming a second intermediate structure, and one aging was performed (first aging).

Next, a urethane-based adhesive was applied to the other side surface of the surface-treated metal layer of the second intermediate structure, and an un-stretched polypropylene film was laminated thereon to form a sealant layer, thereby manufacturing a film for a cell pouch, winding, and performing one aging (second aging).

### Manufacture of Comparative Example 1

One side surface of an aluminum foil metal fabric forming a barrier layer was coated in a first coating to perform surface treatment, dried (100°C to 150°C), and subjected to first winding. The other side surface of the aluminum foil metal fabric forming the barrier layer was coated in a second coating to perform surface treatment, dried, and subjected to second winding. On one side surface of the aluminum foil metal fabric surface-treated on both surfaces, a urethane-based adhesive was coated and dried, a nylon film was laminated, and one aging (first aging) was performed. Then a PET film was laminated, and one aging (second aging) was performed, and then subjected to third winding. Thereafter, an inner adhesive was coated and dried, an inner layer (un-stretched polypropylene sealant film) was laminated, wound, and one aging was performed (third aging).

### Evaluation of heat seal strength of cell pouch film

For the films for a cell pouch manufactured in the manufacturing Examples, heat seal strength was evaluated. More specifically, specimens were prepared by cutting the film into 200 mm × 100 mm in width direction (Transverse direction, TD) × longitudinal direction (Machine direction, MD). The cut specimens were folded in width direction (TD). Sealing conditions were seal width 200 mm × seal thickness 10 mm with a seal bar, 1.6 seconds, 0.2 MPa, and temperature 200°C.

Prepared heat seal specimens were cut into 100 mm × 15 mm in longitudinal direction (MD) × width direction (TD) by using a 15 mm cutter. The specimens cut in uniform specifications were measured for heat seal strength using a UTM (Universal Testing Machine). Heat seal strength was measured under conditions of test speed 5 mm/min and grip separation 30 mm. Measurement was performed after leaving for 3 minutes under condition of 60°C, and in measurement of sealing strength, maximum strength point was selected as maximum sealing strength.

The results are shown in Table 6 below.

**[Table 6]**

| Heat seal strength (N/15mm) | Example 1 | Comparative Example 1 |
|---|---|---|
| Experiment 5-1 | 105.11 | 98.23 |
| Experiment 5-2 | 102.50 | 99.26 |
| Experiment 5-3 | 101.78 | 98.10 |
| Experiment 5-4 | 106.57 | 96.89 |
| Experiment 5-5 | 106.23 | 97.42 |
| Experiment 5-6 | 103.41 | 96.95 |
| Average | 104.27 | 97.81 |

From the above Table 6, in case of a film for a cell pouch according to the present invention, it can be confirmed that heat seal strength is excellent.

### Evaluation of peel strength between outer layer and barrier layer of film

For the manufactured film for a cell pouch, peel strength between outer layer and barrier layer was evaluated. More specifically, specimens were prepared by cutting the film into 150 mm × 15 mm in longitudinal direction (MD) × width direction (TD) using a 15 mm cutter. For the cut specimens of uniform specifications, the outer layer (Al/Ny) was peeled off, the peeled Al layer was attached to a glass substrate, and Ny layer was attached with tape (3M Scotch Magic Tape, width 18 mm × length 150 mm). By using a temperature chamber, an atmosphere of 120°C was created, and peel strength between outer layer and barrier layer was measured using a UTM (Universal Testing Machine). At the time of measurement, an average value of the flat section was recorded.

The results are shown in Table 7.

**[Table 7]**

| Peel strength (N/15 mm) | Example 1 | Comparative Example 1 |
|---|---|---|
| Experiment 5-1 | 8.28 | 6.52 |
| Experiment 5-2 | 8.26 | 6.83 |
| Experiment 5-3 | 8.37 | 6.23 |
| Experiment 5-4 | 8.40 | 6.36 |
| Experiment 5-5 | 8.20 | 6.42 |
| Experiment 5-6 | 7.93 | 6.68 |
| Experiment 5-7 | 8.01 | 6.06 |
| Experiment 5-8 | 7.98 | 6.42 |
| Experiment 5-9 | 7.82 | 6.68 |
| Average | 8.14 | 6.46 |

From Table 7, in case of the film for a cell pouch of the Example, it can be confirmed that peel strength between outer layer and barrier layer is excellent.

### Evaluation of peel strength between sealant layer and barrier layer of film

For the manufactured film for a cell pouch, peel strength between sealant layer and barrier layer was evaluated. More specifically, specimens were prepared by cutting the film into 150 mm × 15 mm in longitudinal direction (MD) × width direction (TD) using a 15 mm cutter. For the cut specimens of uniform specifications, the inner layer (Al/PP) was peeled off, the peeled Al layer was attached to a glass substrate, and the PP layer was attached with tape (3M Scotch Magic Tape, width 18 mm × length 150 mm). By using a temperature chamber, an atmosphere of 80°C was created, and peel strength between sealant layer and barrier layer was measured using a UTM (Universal Testing Machine). At the time of measurement, an average value of the flat section was recorded.

The results are shown in Table 8.

**[Table 8]**

| Peel strength (N/15 mm) | Example 1 | Comparative Example 1 |
|---|---|---|
| Experiment 5-1 | 11.6 | 10.9 |
| Experiment 5-2 | 11.6 | 10.8 |
| Experiment 5-3 | 11.3 | 10.7 |
| Experiment 5-4 | 12.2 | 10.5 |
| Experiment 5-5 | 12.5 | 10.6 |
| Experiment 5-6 | 12.4 | 10.1 |
| Experiment 5-7 | 11.4 | 10.7 |
| Experiment 5-8 | 11.9 | 10.5 |
| Experiment 5-9 | 11.2 | 10.5 |
| Average | 11.8 | 10.6 |

From Table 8, in case of the film for a cell pouch of the Example, it can be confirmed that peel strength between sealant layer and barrier layer is excellent.

### Evaluation of peel strength in resistance to electrolyte solution between sealant layer and barrier layer of cell pouch film

For the manufactured film for a cell pouch, peel strength in resistance to an electrolyte solution between sealant layer and barrier layer was evaluated. More specifically, specimens were prepared by cutting the film into 150 mm × 25 mm in longitudinal direction (MD) × width direction (TD) using a cutter. The cut specimens were placed in a plastic bottle, and electrolyte solution was added inside a glove box. The PE bottle was sealed with insulation tape and then stored in an oven at 85°C for 24 hours. The specimens impregnated in electrolyte solution for 24 hours were wiped and then prepared again by cutting into 150 mm × 15 mm in longitudinal direction (MD) × width direction (TD) using a 15 mm cutter. For the cut specimens of uniform specifications, the inner layer (Al/PP) was peeled off, the peeled Al layer was attached to a glass substrate, and the PP layer was attached with tape (3M Scotch Magic Tape, width 18 mm × length 150 mm). By using a temperature chamber, atmospheres of 60°C, 80°C, 100°C, and 120°C were created, and peel strength in resistance to an electrolyte solution between sealant layer and barrier layer was measured using a UTM (Universal Testing Machine). At the time of measurement, an average value of the flat section was recorded.

The results are shown in Table 9 and Table 10.

**[Table 9]**

| Peel strength (N/15 mm) | Example 1 | | | |
|---|---|---|---|---|
| | 60°C | 80°C | 100°C | 120 °C |
| Experiment 5-1 | 14.5 | 11.5 | 8.4 | 6.5 |
| Experiment 5-2 | 14.6 | 12.1 | 8.1 | 6.3 |
| Experiment 5-3 | 14.2 | 11.7 | 8.5 | 6.4 |
| Average | 14.4 | 11.8 | 8.4 | 6.4 |

**[Table 10]**

| Peel strength (N/15 mm) | Comparative Example 1 | | | |
|---|---|---|---|---|
| | 60°C | 80 °C | 100 °C | 120 °C |
| Experiment 5-1 | 13.3 | 9.1 | 7.9 | 5.5 |
| Experiment 5-2 | 13.2 | 9.9 | 7.9 | 5.3 |
| Experiment 5-3 | 13.4 | 9.7 | 7.8 | 5.1 |
| Average | 13.3 | 9.6 | 7.8 | 5.3 |

From Table 9 and Table 10, in case of the film for a cell pouch according to the present invention, it can be confirmed that peel strength in resistance to an electrolyte solution between sealant layer and barrier layer is excellent.

### [Experiment 6]

### Examples

### Example 1

Both surfaces of a stainless foil metal fabric forming a barrier layer were coated in first and second coatings to perform surface treatment. Thereafter, the metal fabric having both surfaces coated was dried at 150°C to 200°C in a floating manner to stabilize physical properties. Then, the dried metal fabric was cooled, and a urethane-based adhesive was applied to one side surface of the surface-treated metal fabric by an adhesive coater to form an outer surface adhesion layer. Then, a pre-prepared PET/nylon film was laminated on the outer surface adhesion layer to form an outer layer, thereby forming a second intermediate structure, and one aging was performed (first aging).

Next, a urethane-based adhesive was applied to the other side surface of the surface-treated metal layer of the second intermediate structure, and an un-stretched polypropylene film was laminated thereon to form a sealant layer, thereby manufacturing a film for a cell pouch, winding, and performing one aging (second aging). As a driving roll, a suction roll was applied.

### Example 2

Except that a nip roll was applied as a driving roll, the film according to Example 2 was prepared in the same manner as Example 1.

### Comparative Examples

One side surface of a stainless foil metal fabric forming a barrier layer was coated in a first coating to perform surface treatment, dried, and subjected to first winding. The other side surface of the stainless foil metal fabric forming the barrier layer was coated in a second coating to perform surface treatment, dried, and subjected to second winding.

On one side surface of the aluminum foil metal fabric surface-treated on both sides, a urethane-based adhesive was coated and dried, a nylon film was laminated, and one aging (first aging) was performed. Then a PET film was laminated, and one aging (second aging) was performed, and then subjected to third winding. Thereafter, an inner adhesive was coated and dried, an inner layer (un-stretched polypropylene sealant film) was laminated, wound, and one aging was performed (third aging).

In Comparative Example 1, a suction roll was applied as a driving roll, and in Comparative Example 2, a nip roll was applied as a driving roll.

### Evaluation of tensile strength of film

For the manufactured film for a cell pouch, tensile strength was evaluated. More specifically, specimens of 130 mm × 15 mm in longitudinal direction (MD) and width direction (TD) were prepared using a specimen cutter. For the prepared specimens, tensile strength was measured according to ASTM D638 using a UTM (manufacturer: INSTRON) universal testing machine under conditions of elongation speed of 50 mm/min and grip separation of 50 mm.

The results are shown in Table 11.

**[Table 11]**

| Classification | Example 1 | Example 2 | Comparativ e Example 1 | Comparativ e Example 2 |
|---|---|---|---|---|
| Tensile strength (kgf) | 27 | 32 | 35 | 37 |

From Table 11, in case of the films for a cell pouch of the Examples, it can be confirmed that mechanical strength is excellent.

### Evaluation of wave height and wrinkles of cell pouch film

For the manufactured film for a cell pouch, shape and wave height were evaluated. Wave height was measured as the height from the floor to the curved portion of the film when the film was placed on a flat floor. (⊚ very good, o good, Δ severe).

The results are shown in Table 12 below.

**[Table 12]**

| Classification | Example 1 | Example 2 | Comparativ e Example 1 | Comparativ e Example 2 |
|---|---|---|---|---|
| Wave height (mm) | 1 | 2 | 4 | 5 |
| Wrinkles | ⊚ | ○ | △ | △ |

From Table 12, in case of the films for a cell pouch of the Examples, it can be confirmed that the plate shape is well maintained.

### Evaluation of ratio of shape, flatness, and waviness of film

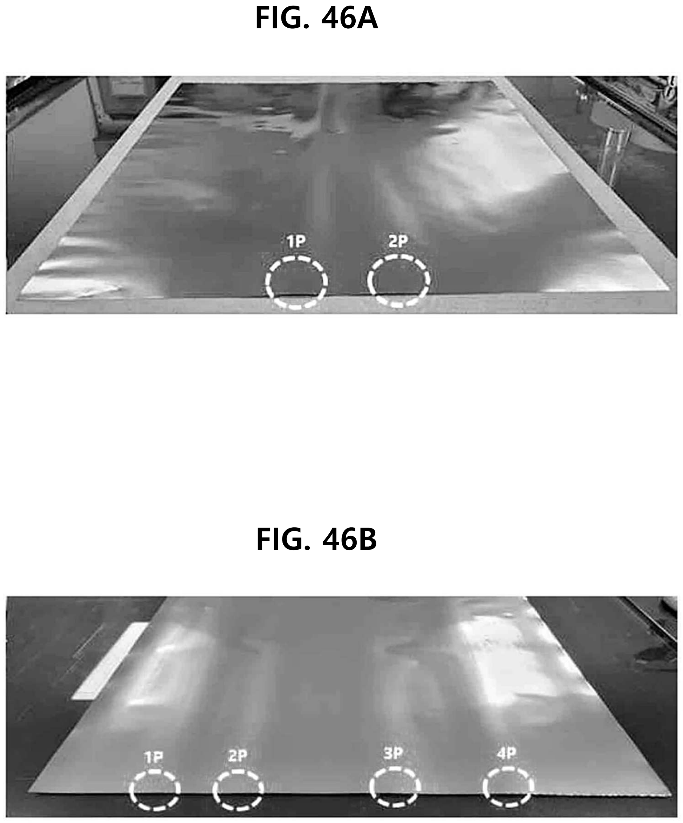

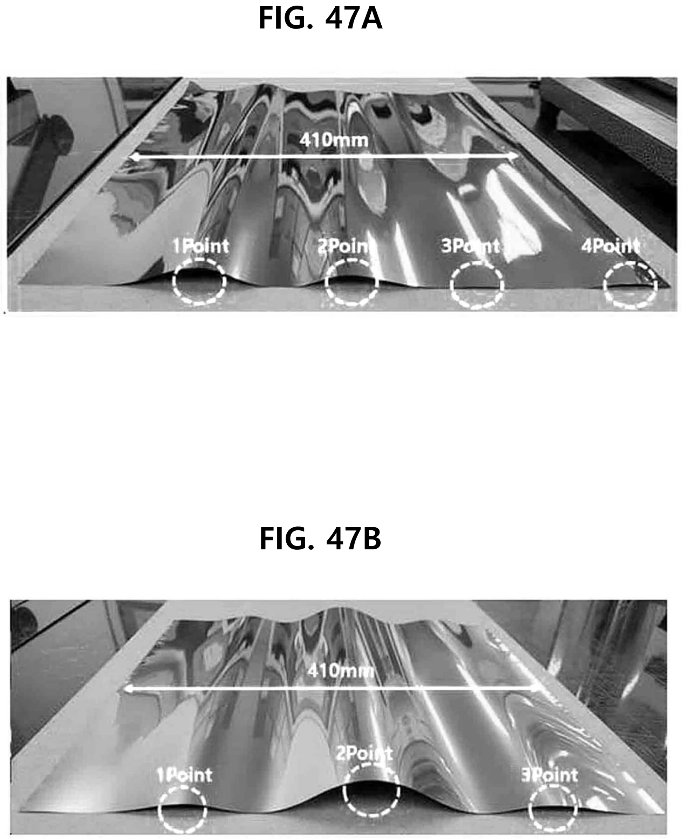

For the manufactured film for a cell pouch, shape, flatness, and ratio of waviness were evaluated (SPEC < 10 mm). The results are shown in the following Table 13, FIG. 46A, FIG. 46B, FIG. 47A, and FIG. 47B. FIG. 46A and FIG. 46B are photographs illustrating shapes of a film for a cell pouch according to Example of [Experiment 6] (Example 1 and Example 2, respectively). FIG. 47A and FIG. 47B are photographs illustrating shapes of a film for a cell pouch according to Comparative Example of [Experiment 6] (Comparative Example 1 and Comparative Example 2, respectively).

**[Table 13]**

| Flatness/waviness | Example 1 | Example 2 | Comparativ e Example 1 | Comparativ e Example 2 |
|---|---|---|---|---|
| 1P | 2.0 | 1 | 13.5 | 8 |
| 2P | 1.5 | 1.5 | 7 | 28 |
| 3P | - | 2.5 | 1.5 | 7 |
| 4P | - | 2 | 3.5 | - |

From Table 13, FIG. 46A, FIG. 46B, FIG. 47A, and FIG. 47B, in case of the films for a cell pouch of the Examples, it can be confirmed that the plate shape is maintained and wrinkles do not occur.

### Evaluation of formability and wrinkles of film

For the manufactured film for a cell pouch, formability was evaluated. More specifically, formability was evaluated by measuring a limit depth at which the metal layer is not broken after forming to various depths using a forming machine and a test mold under conditions of 23 ± 2°C and 50 ± 10%. The specification of the test mold was 30 mm × 75 mm, and the film was cut into 150 mm × 200 mm. After forming by the above method, the degree of wrinkles was visually observed (⊚ very good, o good, △ severe).

The results are shown in Table 14 below.

**[Table 14]**

| Classification | Example 1 | Example 2 | Comparativ e Example 1 | Comparativ e Example 2 |
|---|---|---|---|---|
| Formability (mm) | 3.0 | 2.7 | 2.5 | 2.3 |
| Wrinkles | ⊚ | ○ | △ | △ |

From Table 14, in case of the films for a cell pouch of the Examples, it can be confirmed that formability and wrinkles are the most excellent.

### [Experiment 7]

### Example 1

The example of this Experiment 7 was manufactured according to the following method.

That is, as illustrated in FIG. 3, one side surface of an aluminum foil metal fabric forming a barrier layer was coated to perform surface treatment, and then the other side surface of the metal fabric was coated to perform surface treatment. The metal fabric having both surfaces coated was dried in a floating manner to stabilize physical properties. The dried metal fabric was cooled, and by means of a third coater, a urethane-based adhesive was applied to one side surface of the surface-treated metal fabric to form an outer surface adhesive layer. Then, a pre-prepared PET/nylon film was laminated on the outer surface adhesive layer to form an outer layer, thereby forming a second intermediate structure, and one aging was performed (first aging).

Next, a urethane-based adhesive was applied to the other side surface of the surface-treated metal layer of the second intermediate structure, and an un-stretched polypropylene film was laminated thereon to form a sealant layer, thereby manufacturing a film for a cell pouch, winding, and performing one aging (second aging).

### Comparative Example 1

First, one side surface of an aluminum foil metal fabric forming a barrier layer was coated and dried, subjected to first winding, and then the other side surface of the metal fabric was coated with another surface treatment layer, dried, and subjected to second winding. On one side surface of the surface-treated metal layer, a urethane-based adhesive layer was coated and dried, a nylon film was laminated, and one aging (first aging) was performed. Then a PET film was laminated, and one aging (second aging) was performed, and then subjected to third winding. On the other side surface of the surface-treated metal layer, an inner surface adhesion layer was formed and dried, and an un-stretched polypropylene film was laminated, wound, and one aging (third aging) was performed.

### Comparative Example 2

One side surface of an aluminum foil metal fabric forming a barrier layer was coated and dried, subjected to first winding, and then the other side surface of the metal fabric was coated with another surface treatment layer, dried, and subjected to second winding. Thereafter, it was left at room temperature for 30 days. Then, on one side surface of the surface-treated metal layer, a urethane-based adhesion layer was coated and dried, a nylon film was laminated, and one aging (first aging) was performed. Then a PET film was laminated, and one aging (second aging) was performed, and then subjected to third winding. On the other side surface of the surface-treated metal layer, an inner surface adhesion layer was formed and dried, and an un-stretched polypropylene film was laminated, wound, and one aging (third aging) was performed.

### Evaluation 1

Peel strength and electrolyte resistance between layers of Example 1 and Comparative Examples 1 and 2 manufactured as described above were comparatively evaluated.

First, in the film of Example 1, layers were separated to prepare specimens consisting of outer layer and barrier layer or sealant layer and barrier layer. This was divided into six parts in width direction, into two center portions and four both side portions (two each on left and right sides). The size of each of the six divided specimens was 15 mm (width direction) × 150 mm (length direction). Each specimen was attached and fixed to a glass plate, and then both ends of the specimen were gripped by a UTM (manufacturer: SHIMADZU, product name: AUTOGRAPH AG-X), pulled at 50 mm/min at 180°, and during pulling, the force applied when the specimen was peeled was set as peel strength and measured. The measured portion was a 10 mm section in length direction (direction in which the film is wound and supplied during manufacturing of the film) from the start of the test after peeling of the specimen began. In this case, measurement temperature was room temperature (25°C), six specimens for each portion were prepared, the same experiment was repeated, and the average value was calculated. Based on this, standard deviation of each portion was calculated.

Electrolyte resistance was evaluated by cutting the film into 15 mm × 150 mm, immersing it in a bottle containing an electrolyte solution in which LiPF6 was used as electrolyte in a carbonate-based solvent at a molar concentration of 0.5-3M, sealing, storing in an oven at 85°C for one day, then taking out and wiping the impregnated film, separating the sealant layer/barrier layer to prepare a specimen, and measuring peel strength by the same method as described above.

The same experiments were performed for Comparative Example 1 and Comparative Example 2, and the results are shown in the table below. In the table, each peel strength value is recorded in the order of two portions of one side-two center portions-two portions of the other side in the width direction of the film.

**[Table 15]**

| Item | Example 1 | Comparative Example 1 | Comparative Example 2 |
|---|---|---|---|
| | Width direction | | |
| Outer layer and Barrier layer | 18 | 15.8 | 14.8 |
| | 17.4 | 16.3 | 15.3 |
| | 17.7 | 17.1 | 16.2 |
| | 16.9 | 15.9 | 15.7 |
| | 17.5 | 16.1 | 15.5 |
| | 17.3 | 15.5 | 14.1 |
| Average | 17.47 | 16.12 | 15.27 |
| Standard Deviation | 0.340 | 0.505 | 0.670 |

**[Table 16]**

| Item | Example 1 | Comparative Example 1 | Comparative Example 2 |
|---|---|---|---|
| | Width direction | | |
| Sealant layer and Barrier layer | 24.8 | 24.4 | 22.2 |
| | 25.2 | 24.6 | 23.1 |
| | 24.8 | 25.4 | 24.9 |
| | 25.3 | 24.9 | 25.4 |
| | 24.6 | 22.6 | 23.8 |
| | 24.1 | 23.8 | 22.1 |
| Average | 24.80 | 24.28 | 23.58 |
| Standard Deviation | 0.396 | 0.895 | 1.254 |

**[Table 17]**

| Item | Example 1 | Comparative Example 1 | Comparative Example 2 |
|---|---|---|---|
| | Width direction | | |
| Sealant layer and Barrier layer | 22.3 | 17.4 | 17.5 |
| | 22.5 | 20.8 | 19.6 |
| | 23.1 | 21.1 | 21.2 |
| | 23.3 | 21.3 | 21.5 |
| | 23 | 20.4 | 20.6 |
| | 20.9 | 20.6 | 18.1 |
| Average | 22.52 | 20.27 | 19.75 |
| Standard Deviation | 0.801 | 1.316 | 1.511 |

As can be seen from the above, the Example has a significantly reduced standard deviation compared with Comparative Examples 1 and 2, thereby confirming that the film has uniform peel strength and electrolyte resistance for each portion in the width direction of the film.

### [Experiment 8]

### Example 1

The example of this Experiment 8 was manufactured according to the following method.

That is, as illustrated in FIG. 3, one side surface of an aluminum foil metal fabric forming a barrier layer was coated to perform surface treatment, and then the other side surface of the metal fabric was coated to perform surface treatment. The metal fabric having both surfaces coated was dried in a floating manner to stabilize physical properties. The dried metal fabric was cooled, and by means of a third coater, a urethane-based adhesive was applied to one side surface of the surface-treated metal fabric to form an outer surface adhesive layer. Then, a pre-prepared PET/nylon film was laminated on the outer surface adhesive layer to form an outer layer, thereby forming a second intermediate structure, and one aging was performed (first aging).

Next, a urethane-based adhesive was applied to the other surface of the surface-treated metal layer of the second intermediate structure, and an un-stretched polypropylene film was laminated thereon to form a sealant layer, thereby manufacturing a film for a cell pouch, winding, and performing one aging (second aging).

### Comparative Example 1

First, one side surface of an aluminum foil metal fabric forming a barrier layer was coated and dried, subjected to first winding, and then the other side surface of the metal fabric was coated with another surface treatment layer, dried, and subjected to second winding. On one side surface of the surface-treated metal layer, a urethane-based adhesive layer was coated and dried, a nylon film was laminated, and one aging (first aging) was performed. Then a PET film was laminated, and one aging (second aging) was performed, and then subjected to third winding. On the other side surface of the surface-treated metal layer, an inner surface adhesion layer was formed and dried, and an un-stretched polypropylene film was laminated, wound, and one aging (third aging) was performed.

### Comparative Example 2

First, one side surface of an aluminum foil metal fabric forming a barrier layer was coated and dried, subjected to first winding, and then left at room temperature for 10 days. The other side surface of the metal fabric was coated with another surface treatment layer, dried, and subjected to second winding, and then left at room temperature for 10 days. Then, on one side surface of the surface-treated metal layer, a urethane-based adhesion layer was coated and dried, a nylon film was laminated, and one aging (first aging) was performed. Then a PET film was laminated, and one aging (second aging) was performed, and then subjected to third winding. On the other side surface of the surface-treated metal layer, an inner surface adhesion layer was formed and dried, and an un-stretched polypropylene film was laminated, wound, and one aging (third aging) was performed.

### Evaluation 1

Peel strength and electrolyte resistance between layers of Example 1 and Comparative Examples 1 and 2 manufactured as described above were comparatively evaluated.

First, in the film of Example 1, layers were separated to prepare a film consisting of outer layer and barrier layer or sealant layer and barrier layer. This was divided into six parts in the longitudinal direction, i.e., the direction in which the film is unwound from the winding roll, into two center portions, two core portions of winding, and two outer portions of winding, and specimens of core portion of winding and outer portion of winding were prepared. The size of each specimen was 15 mm (width direction) × 150 mm (length direction). Each specimen was attached and fixed to a glass plate, and then both ends of the specimen were gripped by a UTM (manufacturer: SHIMADZU, product name: AUTOGRAPH AG-X), pulled at 50 mm/min at 180°, and during pulling, the force applied when the specimen was peeled was set as peel strength and measured. The measured portion was a 10 mm section in the length direction (direction in which the film is wound and supplied during manufacturing of the film) from the start of the test after peeling of the specimen began. In this case, measurement temperature was room temperature (25°C), six specimens for each portion were prepared, the same experiment was repeated, and the average value was calculated. Based on this, standard deviation between the core portion of winding and the outer portion of winding was calculated.

Electrolyte resistance was evaluated by cutting the film into 15 mm × 150 mm, immersing it in a bottle containing an electrolyte solution in which LiPF6 was used as electrolyte in a carbonate-based solvent at a molar concentration of 0.5-3M, sealing, storing in an oven at 85°C for one day, then taking out and wiping the impregnated film, separating the sealant layer/barrier layer to prepare a specimen, and measuring peel strength by the same method as described above.

The same experiments were performed for Comparative Example 1 and Comparative Example 2, and the results are shown in the table below. In the table, each peel strength value is recorded in the order of two core portions of winding, two center portions, and two outer portions of winding in the longitudinal direction of the film.

**[Table 18]**

| Item | Example 1 | Comparative Example 1 | Comparative Example 2 |
|---|---|---|---|
| | Longitudinal direction | | |
| Outer layer and Barrier layer | 18.1 | 14.9 | 15.5 |
| | 18 | 14.5 | 15.3 |
| | 17.6 | 16.3 | 15.8 |
| | 17.5 | 16.1 | 14.8 |
| | 17.5 | 16.3 | 16.8 |
| | 17.3 | 16.3 | 15.2 |
| Average | 17.67 | 15.73 | 15.57 |
| Standard Deviation | 0.287 | 0.743 | 0.629 |

**[Table 19]**

| Item | Example 1 | Comparative Example 1 | Comparative Example 2 |
|---|---|---|---|
| | Longitudinal direction | | |
| Sealant layer and Barrier layer | 24.5 | 24.8 | 23.1 |
| | 24.6 | 23.3 | 21.9 |
| | 25.3 | 24.4 | 22.3 |
| | 24.8 | 22 | 23.9 |
| | 23.8 | 24.6 | 22.9 |
| | 24.7 | 24.1 | 21.6 |
| Average | 24.62 | 23.87 | 22.62 |
| Standard Deviation | 0.445 | 0.962 | 0.775 |

**[Table 20]**

| Item | Example 1 | Comparative Example 1 | Comparative Example 2 |
|---|---|---|---|
| | Longitudinal direction | | |
| Sealant layer and Barrier layer | 22.5 | 20.8 | 18.9 |
| | 21.6 | 19.4 | 20.4 |
| | 22.7 | 18.4 | 22.1 |
| | 23.6 | 22.3 | 19.3 |
| | 20.8 | 21.4 | 18.3 |
| | 22.5 | 17.5 | 20.7 |
| Average | 22.28 | 19.97 | 19.95 |
| Standard Deviation | 0.882 | 1.686 | 1.267 |

As can be seen from the above, the Example has a significantly reduced standard deviation compared with Comparative Examples 1 and 2, thereby confirming that the film has uniform peel strength and resistance to an electrolyte solution from the core portion of winding to the outer portion of winding in the longitudinal direction of the film.

### [Experiment 9]

### Example

The Examples of this Experiment 9 were manufactured according to the following method.

That is, as illustrated in FIG. 3, one side surface of an aluminum foil metal fabric forming a barrier layer was coated to perform surface treatment, and then the other side surface of the metal fabric was coated to perform surface treatment. The metal fabric having both surfaces coated was dried in a floating manner to stabilize physical properties. The dried metal fabric was cooled, and by means of a third coater, a urethane-based adhesive was applied to one side surface of the surface-treated metal fabric to form an outer surface adhesive layer. Then, a pre-prepared PET/nylon film was laminated on the outer surface adhesive layer to form an outer layer, thereby forming a second intermediate structure, and one aging was performed (first aging).

Next, a urethane-based adhesive was applied to the other surface of the surface-treated metal layer of the second intermediate structure, and an un-stretched polypropylene film was laminated thereon to form a sealant layer, thereby manufacturing a film for a cell pouch, winding, and performing one aging (second aging). The specifications of each of Examples 1 and 2 are shown in Table 21 below.

### Comparative Example

The films for a cell pouch of the Comparative Examples were manufactured as follows.

First, one side surface of an aluminum foil metal fabric forming a barrier layer was coated and dried, subjected to first winding, and then the other side surface of the metal fabric was coated with another surface treatment layer, dried, and subjected to second winding. On one side surface of the surface-treated metal layer, a urethane-based adhesive layer was coated and dried, a nylon film was laminated, and one aging (first aging) was performed. Then a PET film was laminated, and one aging (second aging) was performed, and then subjected to third winding. On the other side surface of the surface-treated metal layer, an inner surface adhesion layer was formed and dried, and an un-stretched polypropylene film was laminated, wound, and one aging (third aging) was performed. The specifications of each of Comparative Examples 1 and 2 are shown in Table 21 below.

For the manufactured Examples and Comparative Examples, tensile strength, forming depth, curl evaluation before forming, and curl evaluation after forming of the cell pouch film were performed, respectively. The results are also shown in Table 21.

### Evaluation of tensile strength of film

First, for the manufactured film for a cell pouch, tensile strength was evaluated. More specifically, the film was cut using a specimen cutter to prepare specimens of 130 mm × 15 mm in the longitudinal direction (MD) and width direction (TD). The prepared specimens were tested according to ASTM D638 using a UTM (manufacturer: INSTRON), at an elongation speed of 50 mm/min, with a grip separation of 50 mm, and the tensile strength was measured.

### Evaluation of formability of film

Specimens of the cell pouch film of 266 mm (TD) × 240 mm (MD) were sampled in the longitudinal direction (MD) and width direction (TD). The sampled specimens were formed into a rectangular shape (width 90 mm, length 160 mm). (Formability evaluation was performed with a one-cup forming machine for high-formability pouches coated with chrome, and although the R value varied, the standard corner R value was 4.)

After forming, the depth was measured. When all 10 out of 10 did not break at a given depth, a greater depth was applied, and when even one broke, the immediately preceding depth was designated as the maximum height, which is defined as formability.

### Curl Evaluation before forming of film

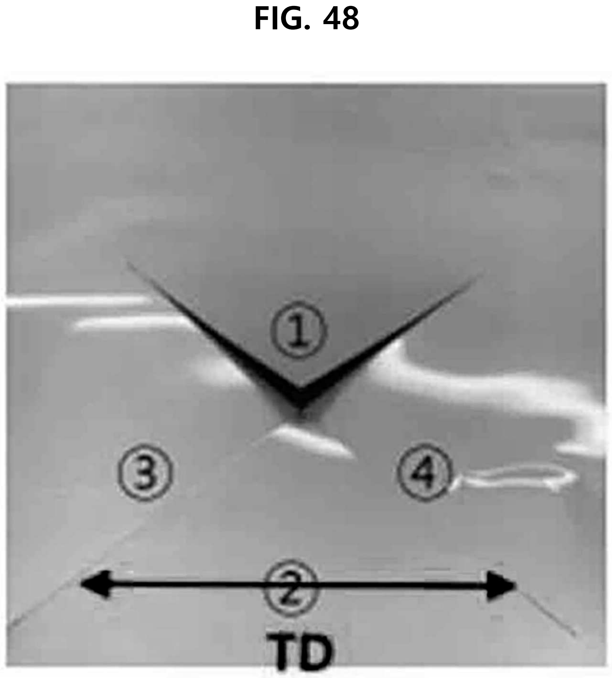

As illustrated in FIG. 48, a specimen of the cell pouch film was prepared into a square shape of 15 cm × 15 cm, and the specimen was placed on a flat fixing table and flatly fixed with tape. An X-shaped cut of 15 cm length was made across the central point of the fixed specimen, and the raised (curled) heights at two points in the MD direction and two points in the TD direction with the central point in between were measured. The deviation was calculated by the difference between each MD measurement value and TD measurement value.

### Curl Evaluation after forming pouch

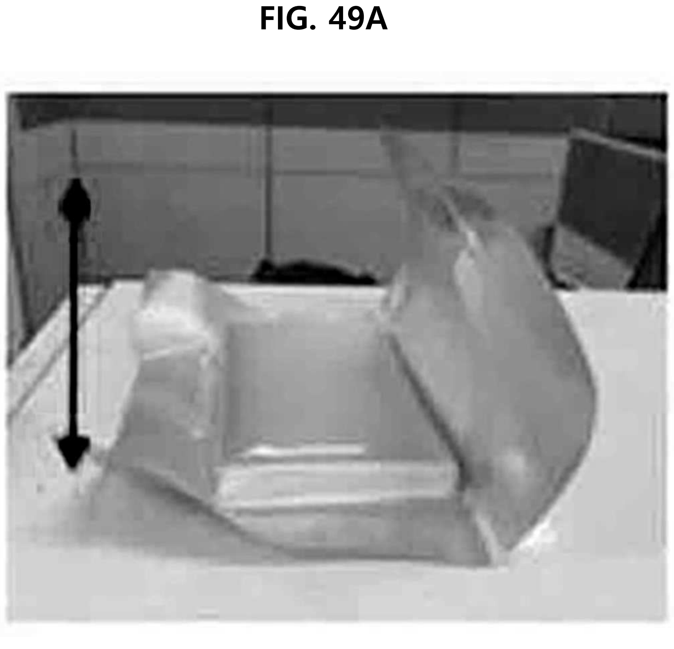

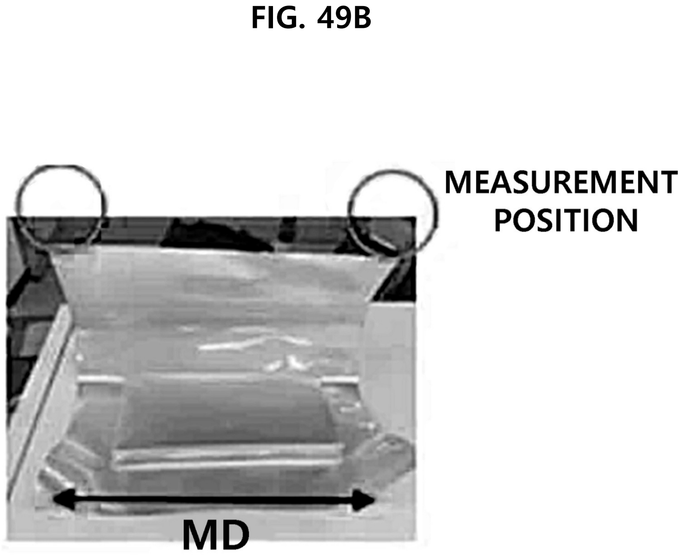

As illustrated in FIG. 49, for the cell pouch film, specimens were prepared by MD-direction forming (266 mm (MD) × 240 mm (TD)) and TD-direction forming (266 mm (TD) × 240 mm (MD)).

Forming evaluation was conducted at 0.3 MPa using a chrome-coated one-cup forming machine. Forming depth was 8 mm for AL40 *µ*m products and 12 mm for AL60 *µ*m products.

The R value (corner curvature radius value) of the forming machine was 4R (4 mm). Forming was performed in a single forming size of 90 mm × 160 mm.

To evaluate the curl generated after forming, tape was placed on both surfaces on a flat surface, the formed pouch was fixed thereon, and the height of the generated curl was measured. Two points of measurement positions were measured, and the higher value was recorded. After measuring each corner of the formed specimen, the height of the corner where curl occurred more greatly was taken as the curl value.

**[Table 21]**

| | Meta 1 layer | sealan t layer | Tensile Strength [N/15mm] | Formin g depth [mm] | Curl evaluation Before forming [mm] | | Curl evaluation after forming [mm] | |
|---|---|---|---|---|---|---|---|---|
| | Al | PP | | | MD | TD | MD direction Forming | TD direction Forming |
| Compa rative Examp le 1 | 40 *µ*m | 80 *µ*m | 152.0 | 12mm | 12.5 | 16.3 | 12.5 | 18.0 |
| Examp le 1 | 40 *µ*m | 80 *µ*m | 168.1 | 15 mm | 7.5 | 9 | 5.2 | 7.5 |
| Compa rative | 60 *µ*m | 80 *µ*m | 216.5 | 16 mm | 14.5 | 20.5 | 35.5 | 48.5 |
| Examp le 2 | | | | | | | | |
| Examp le 2 | 60 *µ*m | 80 *µ*m | 225.9 | 18 mm | 11.5 | 13.2 | 18.5 | 21.0 |

As described above, in case of the Examples, compared with the Comparative Examples, not only the tensile strength is excellent and the formability is excellent, but also the curl characteristics before forming and the curl characteristics after forming are superior.

Although the above describes non-limiting and exemplary embodiments of the present invention, the technical teachings of the present invention is not limited to the accompanying drawings or the foregoing description. It will be apparent to those of ordinary skill in the art that various modifications may be made without departing from the technical teachings of the present invention, and such modifications shall fall within the scope of the claims of the present invention.

### [Industrial Applicability]

According to a cell pouch manufacturing method, an apparatus therefor, and a cell pouch manufactured thereby of the present specification, it is possible to greatly improve process simplification, thereby productivity and space efficiency, and to improve the physical properties of a final cell pouch product.

## Claims

1. A method of manufacturing a cell pouch film, comprising:
either in a single in-line process, winding once a final structure of a cell pouch film and then allowing the final structure of the cell pouch to undergo only one aging process; or
in a first in-line process, winding once an intermediate structure of a cell pouch film - the intermediate structure comprises an outer layer, an outer surface adhesive layer, an outer surface treatment layer, a barrier layer, and an inner surface treatment layer - and then allowing the intermediate structure to undergo one aging process, and
in a second in-line process, winding once a final structure of the cell pouch film formed from the intermediate structure that has undergone the one aging process, and then performing one aging process on the final structure, so that a total of two agings are undergone.

2. The method of claim 1, wherein the manufacturing method undergoing the one aging comprises the following process steps of:
(a) preparing the barrier layer;
(b) surface coating the barrier layer to form a surface treatment layer;
(c) drying the surface treatment layer;
(d) forming an adhesion layer - when the adhesion layer is an inner surface adhesion layer, the adhesion layer is an adhesive coating layer, an extrusion coating layer, or both - on the surface treatment layer;
(e) drying the adhesion layer;
(f) laminating an outer layer on the adhesion layer;
(g) laminating a sealant layer on an innermost surface side of the barrier layer; and
(h) allowing the manufactured final structure of the cell pouch film to undergo the aging process, and wherein steps (a) to (g) are carried out in a single in-line process such that the final structure of the cell pouch film is wound once.

3. The method of claim 1, wherein the manufacturing method undergoing the total of two agings comprises the following process steps of:
(a) preparing the barrier layer;
(b) surface coating the barrier layer to form a surface treatment layer;
(c) drying the surface treatment layer;
(d-1) forming an adhesion layer on an outer surface treatment layer,
(e) drying the adhesion layer;
(f) laminating an outer layer on the adhesion layer;
(i) allowing the manufactured intermediate structure of the cell pouch film to undergo the first aging process;
(d-2) after the one aging, forming an adhesion layer - the adhesion layer is an adhesive coating layer, an extrusion coating layer, or both - on an inner surface treatment layer;
(g) laminating a sealant layer on an innermost surface side of the barrier layer on which the adhesion layer is formed; and
(h') allowing the manufactured final structure of the cell pouch film to undergo a second aging process.

4. The method of claim 1, wherein step (b) undergoes the following process steps of:
(b-1) surface coating an outer surface of the barrier layer to form an outer surface treatment layer; and/or
(b-2) surface coating an inner surface of the barrier layer to form an inner surface treatment layer.

5. The method of claim 1, wherein step (d) undergoes the following process steps of:
(d-1) forming an adhesion layer on the outer surface treatment layer; and/or
(d-2) forming an adhesion layer on the inner surface treatment layer.

6. The method of claim 2 or claim 3, wherein in step (g), a pre-prepared sealant film is bonded by extrusion coating to form a sealant layer.

7. The method of claim 2 or claim 3, wherein in step (g), an extrusion coating layer and a sealant layer are formed by co-extrusion using a T-die.

8. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer; and
step (d-2) of forming an adhesion layer on the inner surface treatment layer, and wherein step (g) comprises:
laminating a pre-prepared sealant film to the adhesion layer formed on the inner surface treatment layer.

9. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer, and wherein step (g) comprises:
bonding a pre-prepared sealant film by extrusion coating to form a sealant layer.

10. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer, and wherein step (g) comprises:
forming an extrusion coating layer and a sealant layer by co-extrusion using a T-die.

11. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer, and wherein step (g) comprises:
sequentially forming an extrusion coating layer and a sealant layer by using an extrusion manner.

12. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer; and
step (d-2) of forming an adhesion layer on the inner surface treatment layer, and wherein step (g) comprises:
bonding a pre-prepared sealant film by extrusion coating to form a sealant layer.

13. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer; and
step (d-2) of forming an adhesion layer on the inner surface treatment layer, and wherein step (g) comprises:
forming an extrusion coating layer and a sealant layer by co-extrusion using a T-die.

14. The method of claim 2 or claim 3, wherein step (b) comprises:
step (b-1) of surface coating an outer surface of the barrier layer to form an outer surface treatment layer; and
step (b-2) of surface coating an inner surface of the barrier layer to form an inner surface treatment layer, wherein step (d) comprises:
step (d-1) of forming an adhesion layer on the outer surface treatment layer; and
step (d-2) of forming an adhesion layer on the inner surface treatment layer, and wherein step (g) comprises:
sequentially forming an extrusion coating layer and a sealant layer by using an extrusion manner.

15. The method of claim 2 or claim 3, wherein in the manufacturing method, step (a) of preparing the barrier layer and step (b) of surface coating the barrier layer to form the surface treatment layer comprise:
a fabric supply procedure of unwinding and supplying a wound barrier layer fabric;
a foreign substance removal procedure of removing a foreign substance present on a surface of the supplied barrier layer fabric;
a tension adjustment procedure of adjusting tension of the barrier layer fabric from which the surface foreign substance is removed; and
a double-sided dual coating procedure of forming outer and inner surface treatment layers on the barrier layer fabric in which constant tension is maintained.

16. The method of claim 15, wherein the foreign substance removal procedure further comprises:
a first foreign substance removal procedure of performing discharge treatment on both surfaces of the barrier layer fabric to remove oil.

17. The method of claim 15, wherein the foreign substance removal procedure further comprises:
a pinhole inspection procedure of identifying whether pinholes occur on both surfaces of the barrier layer fabric from which oil has been removed.

18. The method of claim 15, wherein the foreign substance removal procedure further comprises:
a second foreign substance removal procedure of removing a foreign substance occurring on both surfaces of a metal fabric that has undergone the pinhole inspection by a roll manner.

19. The method of claim 2 or claim 3, wherein step (b) of surface coating the barrier layer to form the surface treatment layer comprises:
performing a first coating of applying aqueous-based and solvent-based coating solutions by a combined manner of direct coating and RKC (Reverse Kiss Coating) on one side surface of the barrier layer fabric; and
performing a second coating of applying a coating solution by RKC and film up/down coating manners on the other side surface of the barrier layer fabric.

20. The method of claim 2 or claim 3, wherein step (c) of drying the surface treatment layer further comprises:
a physical property stabilization drying step of drying the barrier layer having surface treatment layers formed on both surfaces by a floating manner to stabilize physical properties;
a cooling step of cooling the dried barrier layer; and
a surface inspection step of inspecting a surface of the cooled barrier layer.

21. The method of claim 2 or claim 3, wherein step (e) of drying the adhesion layer further comprises:
an adhesive drying step of drying the barrier layer to which an adhesive is applied to form the adhesion layer;
an adhesion layer thickness measuring step of measuring a thickness of the dried adhesion layer; and
an adhesion layer surface treatment step of strengthening an adhesive force by corona treatment of a surface of the adhesion layer.

22. The method of claim 2 or claim 3, further comprising:
a surface inspection step of inspecting a surface of the sealant layer and/or the outer layer after laminating the outer layer and/or laminating the sealant layer.

23. The method of claim 2 or claim 3, wherein step (b) of forming the surface treatment layer to step (g) of forming the sealant layer are performed on the barrier layer on the basis of one run (pass) of the barrier layer from an unwind roll toward a rewind roll in a roll-to-roll device, and an outer layer laminating device for laminating the outer layer and a sealant layer laminating device for laminating the sealant layer are partially overlapped or spaced apart from each other in the roll-to-roll device.

24. The method of claim 2 or claim 3, wherein a device for forming the surface treatment layer is individually formed of a roll structure including direct gravure, reverse gravure, offset gravure, five rolls, reverse-kiss gravure, mayer rod, micro gravure, comma & slot die, or lip die.

25. The method of claim 2 or claim 3, wherein in step (c) of drying, by using a drying device, first air between 100°C and 300°C is blown onto both surfaces of the barrier layer on which the surface treatment layer is formed in an air floating manner, and after blowing of the first air, the barrier layer dried after formation of the surface treatment layer is transferred to a subsequent coating device via at least one guide roll together with a cooling zone, and wherein the cooling zone has at least one cooling roll.

26. The method of claim 2 or claim 3, wherein when forming the adhesion layer by coating an adhesive in step (d), an adhesive coating device is individually formed of a roll structure including direct gravure, reverse gravure, offset gravure, five rolls, reverse-kiss gravure, mayer rod, micro gravure, comma & slot die, or lip die.

27. The method of claim 2 or claim 3, wherein step (e) comprises:
blowing second air between 50°C and 200°C onto both surfaces of a combination substrate coated with an adhesive in an air floating manner by using a drying device; and
after blowing the second air, transferring the adhesive-coated and dried combination substrate to a laminating device via a cooling zone, wherein the cooling zone has at least one cooling roll.

28. A cell pouch film manufactured by the manufacturing method of claim 1.

29. The cell pouch film of claim 28, wherein the cell pouch film comprises a surface treatment layer uniformly coated on both surfaces of the barrier layer, and the uniformly coated surface treatment layer comprises less than an average of 0.05 uncoated portions per unit area (m²) of an image photographed of an external appearance of the barrier layer.

30. The cell pouch film of claim 28, wherein a difference between longitudinal direction (machine direction, MD) breaking strength and width direction (transverse direction, TD) breaking strength is 40 N/15 mm or less.

31. The cell pouch film of claim 28, wherein in the cell pouch film, a heat seal strength at 50°C to 80°C is 100 N/15 mm to 110 N/15 mm, a peel strength between the outer layer and the barrier layer at 100°C to 140°C is 7 N/15 mm to 9 N/15 mm, and a peel strength between a sealant layer and the barrier layer at 70°C to 90°C is 11 N/15 mm to 13 N/15 mm.

32. The cell pouch film of claim 28, wherein a metal of the barrier layer of the cell pouch film is stainless steel, and a tensile strength of the cell pouch film is 25 kgf/cm² to 34 kgf/cm².

33. The cell pouch film of claim 28, wherein a metal of the barrier layer of the cell pouch film is stainless steel, and a wave height of the cell pouch film is 3 mm or less.

34. The cell pouch film of claim 28, wherein a standard deviation of peel strength of a center portion and both side portions in a width direction of the cell pouch film is 0.5 or less, wherein the width direction is a vertical direction of a film supplying direction during manufacturing of the film, the center portion is a portion occupying 2/6 of an entire length based on a center of the entire length in the width direction of the film, and the both side portions are left and right portions excluding the center portion in the entire length of the width direction of the film.

35. The cell pouch film of claim 28, wherein a standard deviation of peel strength of both end portions excluding a center portion of 2/6 based on the center portion of an entire length in a longitudinal direction of the cell pouch film is 0.5 or less, wherein the longitudinal direction is a direction in which the film is wound and supplied during manufacturing of the film.

36. The cell pouch film of claim 28, wherein the cell pouch film has a curl deviation of the cell pouch film, measured by the following method, of 3 mm or less,
[ Curl evaluation before forming of cell pouch film ]
a cell pouch film specimen is prepared in a square shape of 15 cm × 15 cm, and the specimen is placed on a flat fixing table and flatly fixed with tape,
an X-cut of 15 cm is made passing through a central point of the fixed specimen, and (curled) heights raised at two points on a MD (longitudinal direction) side and two points on a TD (transverse direction) side with the central point interposed therebetween are measured, and a deviation is obtained by differences of each MD measured value and TD measured value.

37. The cell pouch film of claim 28, wherein the cell pouch film has a curl deviation after forming, measured by the following method, of 5 mm or less,
[ Curl evaluation after forming ]
① MD directional forming (MD forming curl evaluation)
a forming specimen is prepared as 26.6 (MD) × 24.0 (TD) cm, forming evaluation is performed at 0.3 MPa in a chrome-coated one-cup forming machine (forming depth is 8 mm for a product using AL40 µm and 12 mm for a product using AL60 µm), an R value (corner curvature radius value) of the forming machine is 4R (4 mm), and a forming size is 90 mm × 160 mm when forming, and forming is performed as a single forming,
② TD directional forming (TD forming curl evaluation)
a forming specimen is prepared as 26.6 (TD) × 24.0 (MD), forming evaluation is performed at 0.3 MPa in a chrome-coated one-cup forming machine (forming depth is 8 mm for a product using AL40 µm and 12 mm for a product using AL60 µm), an R value (corner curvature radius value) of the forming machine is 4R (4 mm), and a forming size is 90 mm × 160 mm when forming, and forming is performed as a single forming,
in order to evaluate curl generated after forming, double-sided tape is installed on a flat place, and a formed pouch is then fixed thereon, and a height of curl generated is measured, two points of measurement positions are measured, and a higher value is recorded, and after measuring each corner of the forming specimen, a height of a corner where curl is generated larger is defined as a curl value.

38. A cell pouch manufacturing apparatus, comprising:
a double-sided dual coating means including a first coater and a second coater performing double-sided dual coating through surface treatment by coating both surfaces of a barrier layer fabric forming a barrier layer;
an adhesive coater configured to apply an adhesive to both surfaces of the surface-treated barrier layer fabric; and
a lamination section configured to laminate a functional fabric on both surfaces of the barrier layer fabric to which the adhesive is applied.

39. The cell pouch manufacturing apparatus of claim 38, wherein the double-sided dual coating means comprises:
a fabric supplying unit configured to unwind and supply a wound barrier layer fabric;
a foreign substance removal means configured to remove a foreign substance present on a surface of the supplied barrier layer fabric;
a tension adjusting unit configured to adjust tension of the barrier layer fabric from which the surface foreign substance is removed; and
a first coater and a second coater configured to perform coating on both surfaces of the barrier layer fabric in which constant tension is maintained.

40. The cell pouch manufacturing apparatus of claim 38, wherein the barrier layer fabric comprises an aluminum material, and wherein the foreign substance removal means comprises:
a first foreign substance removing unit configured to perform discharge treatment on both surfaces of the barrier layer fabric to remove oil.

41. The cell pouch manufacturing apparatus of claim 40, wherein the foreign substance removal means further comprises:
a pinhole inspecting unit configured to identify whether pinholes occur on both surfaces of the barrier layer fabric from which the oil is removed.

42. The cell pouch manufacturing apparatus of claim 40, wherein the foreign substance removal means further comprises:
a second foreign substance removing unit configured to remove a foreign substance occurring on both surfaces of the barrier layer fabric that has undergone the pinhole inspection by a roll manner.

43. The cell pouch manufacturing apparatus of claim 38, wherein the first coater applies aqueous-based and solvent-based coating solutions on one side surface of the barrier layer fabric by a combined manner of direct coating and RKC (Reverse Kiss Coating), and the second coater applies a coating solution on the other side surface of the barrier layer fabric by RKC and film up/down coating manners.

44. The cell pouch manufacturing apparatus of claim 38, further comprising:
between the double-sided dual coating means and the adhesive coater, a physical property stabilization drying unit configured to dry the barrier layer fabric coated on both surfaces by a floating manner to stabilize physical properties;
a cooling unit configured to cool the dried barrier layer fabric; and
a surface inspecting unit configured to inspect a surface of the cooled barrier layer fabric.

45. The cell pouch manufacturing apparatus of claim 44, further comprising:
between the adhesive coater and the lamination section, an adhesive drying unit configured to dry the barrier layer fabric to which an adhesive is applied to form an adhesion layer;
an adhesion layer thickness measuring unit configured to measure a thickness of the dried adhesion layer; and
an adhesion layer surface treating unit configured to corona-treat a surface of the adhesion layer to strengthen an adhesive force.

46. The cell pouch manufacturing apparatus of claim 38, further comprising:
continuously to the lamination section, a surface inspecting unit configured to inspect surfaces of the sealant layer and the outer layer.

47. The cell pouch manufacturing apparatus of claim 38, wherein all or some of driving rolls conveying a cell pouch of the apparatus are suction rolls, and a tension applied to a film for a cell pouch by the suction rolls is 0.02 kgf/cm² to 2.5 kgf/cm².
